# EUROPÄISCHE PATENTSCHRIFT

(11) **EP 2 612 114 B1**
(45) Veröffentlichungstag und Bekanntmachung des Hinweises auf die Patenterteilung: **30.10.2019**
(21) Anmeldenummer: 11741222.1
(22) Anmeldetag: 09.08.2011
(51) Int. Cl.: G01F 1/84

(54) **MESSSYSTEM MIT EINEM MESSAUFNEHMER VOM VIBRATIONSTYP**
MEASUREMENT SYSTEM HAVING A VIBRATION-TYPE MEASUREMENT SENSOR
SYSTÈME DE MESURE COMPRENANT UN CAPTEUR DE MESURE DE TYPE VIBRATOIRE

(30) Priorität: 02.09.2010 DE 102010040168
(43) Veröffentlichungstag der Anmeldung: 10.07.2013
(73) Patentinhaber: Endress+Hauser Flowtec AG, 4153 Reinach (CH)
(72) Erfinder: RIEDER, Alfred, 84032 Landshut (DE)
(74) Vertreter: Andres, Angelika Maria
(86) Internationale Anmeldenummer: PCT/EP2011/063649
(87) Internationale Veröffentlichungsnummer: WO 2012/028425

(56) Entgegenhaltungen:
- EP-A1- 2 159 552
- WO-A1-02/052230
- WO-A2-96/08697
- DE-A1- 19 634 663
- DE-C1- 4 224 379
- US-A- 5 473 949

## Beschreibung

Die Erfindung betrifft einen Meßaufnehmer vom Vibrationstyp zum Messen eines in einer Rohrleitung geführten strömungsfähigen Mediums, insb. eines Gases, einer Flüssigkeit, eines Pulvers oder eines anderen strömungsfähigen Stoffes, insb. zum Messen einer Dichte und/oder einer Massendurchflußrate, insb. auch eines über ein Zeitintervall totalisierten Gesamt-Massendurchflusses, eines in einer Rohrleitung zumindest zeitweise mit einer Massendurchflußrate von mehr als 2200 t/h, insb. mehr als 2500 t/h, strömenden Mediums. Ferner betrifft die Erfindung ein Meßsystem mit einem solchen Meßaufnehmer.

In der Prozeßmeß- und Automatisierungstechnik werden für die Messung physikalischer Parameter, wie z.B. dem Massedurchfluß, der Dichte und/oder der Viskosität, von in Rohrleitungen strömenden Medien oftmals solche - zumeist als In-Line-Meßgeräte in Kompaktbauweise ausgebildeten - Meßsysteme verwendet, die mittels eines vom Medium durchströmten Meßaufnehmers vom Vibrationstyp und einer daran angeschlossenen Meß- und Treiberschaltung, im Medium Reaktionskräfte, wie z.B. mit dem Massedurchfluß korrespondierende Corioliskräfte, mit der Dichte des Mediums korrespondierende Trägheitskräfte und/oder mit der Viskosität des Mediums korrespondierende Reibungskräfte etc., bewirken und von diesen abgeleitet ein den jeweiligen Massedurchfluß, die jeweilige Viskosität und/oder ein die jeweilige Dichte des Mediums repräsentierendes Meßsignal erzeugen. Derartige, insb. als Coriolis-Massedurchflußmesser oder Coriolis-Massedurchfluß-/Dichtemesser ausgebildete, Meßaufnehmer sind z.B. in der EP-A 1 001 254, der EP-A 553 939, der US-A 47 93 191, der US-A 2002/0157479, der US-A 2006/0150750, der US-A 2007/0151368, der US-A 53 70 002, der US-A 57 96 011, der US-B 63 08 580, der US-B 64 15 668, der US-B 67 11 958, der US-B 69 20 798, der US-B 71 34 347, der US-B 73 92 709, oder der WO-A 03/027616 ausführlich und detailliert beschrieben.

Jeder der Meßaufnehmer weist ein Aufnehmer-Gehäuse auf, von dem ein einlaßseitiges erstes Gehäuseende zumindest anteilig mittels eines genau zwei jeweils voneinander beabstandeten kreiszylindrische oder kegelförmige Strömungsöffnungen aufweisenden ersten Strömungsteiler und ein auslaßseitiges zweites Gehäuseende zumindest anteilig mittels eines genau zwei jeweils voneinander beabstandeten Strömungsöffnungen aufweisenden zweiten Strömungsteilers gebildet sind. Bei einigen der in der US-A 57 96 011, der US-B 73 50 421, oder der US-A 2007/0151368 gezeigten Meßaufnehmern umfaßt das Aufnehmer-Gehäuse ein eher dickwandiges kreiszylindrisches Rohrsegment, das zumindest ein Mittelsegment des Aufnehmer-Gehäuses bildet.

Zum Führen des zumindest zeitweise strömenden Mediums umfassen die Meßaufnehmer desweiteren jeweils genau zwei strömungstechnisch parallel geschaltete Meßrohre aus Metall, insb. Stahl oder Titan, die innerhalb des Aufnehmer-Gehäuses plaziert und darin mittels vorgenannter Strömungsteiler schwingfähig gehaltert sind. Ein erstes der, zumeist baugleichen und zueinander parallel verlaufenden, Meßrohre mündet mit einem einlaßseitigen ersten Meßrohrende in eine erste Strömungsöffnung des einlaßseitigen ersten Strömungsteilers und mit einem auslaßseitigen zweiten Meßrohrende in eine erste Strömungsöffnung des auslaßseitigen zweiten Strömungsteilers und ein zweites der Meßrohre mündet mit einem einlaßseitigen ersten Meßrohrende in eine zweite Strömungsöffnung des ersten Strömungsteilers und mit einem auslaßseitigen zweiten Meßrohrende in eine zweite Strömungsöffnung des zweiten Strömungsteilers. Jeder der Strömungsteiler weist ferner jeweils einen Flansch mit einer Dichtfläche zum fluiddichten Anschließen des Meßaufnehmers an ein dem Zuführen von Medium zum bzw. dem Abführen von Medium vom Meßaufnehmer dienendes Rohrsegment der Rohrleitung auf.

Die Meßrohre werden zum Erzeugen oben genannter Reaktionskräfte, angetrieben von einer dem Erzeugen bzw. Aufrechterhalten von mechanischen Schwingungen, insb. von Biegeschwingungen, der Meßrohre im sogenannten Antriebs- oder Nutzmode dienenden Erregeranordnung, im Betrieb vibrieren gelassen. Die Schwingungen im Nutzmode sind zumeist, insb. bei Verwendung des Meßaufnehmers als Coriolis-Massedurchfluß- und/oder Dichtemesser, zumindest anteilig als laterale Biege-Schwingungen ausgebildet und im Falle von durch die Meßrohre hindurchströmendem Medium infolge von darin induzierten Corioliskräften durch zusätzliche, frequenzgleiche Schwingungen im sogenannten Coriolismode überlagert. Dementsprechend ist die - hier zumeist elektro-dynamische - Erregeranordnung im Falle gerader Meßrohre derart ausgebildet, daß damit die beiden Meßrohre im Nutzmode zumindest anteilig, insb. auch überwiegend, zu gegengleichen, mithin gegengleichen, Biegeschwingungen in einer gemeinsamen Schwingungsebene differentiell - also durch Eintrag gleichzeitig entlang einer gemeinsamen Wirkungslinie, jedoch in entgegengesetzter Richtung wirkender Erregerkräfte - anregbar sind.

Zum Erfassen von Vibrationen, insb. von mittels der Erregeranordnung angeregten Biegeschwingungen, der Meßrohre und zum Erzeugen von Vibrationen repräsentierenden Schwingungsmeßsignalen weisen die Meßaufnehmer ferner jeweils eine auf relative Bewegungen der Meßrohre reagierende, zumeist ebenfalls elektrodynamische Vibrationssensoranordnung auf. Typischerweise ist die Vibrationssensoranordnung mittels eines einlaßseitigen, Schwingungen der Meßrohre differentiell - also lediglich relative Bewegungen der Meßrohre - erfassenden Schwingungssensors sowie eines auslaßseitigen, Schwingungen der Meßrohre differentiell erfassenden Schwingungssensors gebildet ist. Jeder der üblicherweise einander baugleichen Schwingungssensoren ist mittels eines am ersten Meßrohr gehalterten Permanentmagneten und einer von dessen Magnetfeld durchfluteten, am zweiten Meßrohr gehalterten Zylinderspule gebildet ist.

Im Betrieb wird das vorbeschriebene, mittels der zwei Meßrohre sowie der daran gehalterten Erreger- sowie Vibrationssensoranordnung gebildete Innenteil des Meßaufnehmers mittels der elektro-mechanischen Erregeranordnung zumindest zeitweise im Nutzmode zu mechanischen Schwingungen auf wenigstens einer dominierenden Nutz-Schwingungsfrequenz angeregt. Als Schwingungsfrequenz für die Schwingungen im Nutzmode wird dabei üblicherweise eine natürliche momentane Resonanzfrequenz des Innenteils gewählt, die wiederum im wesentlichen sowohl von Größe, Form und Material der Meßrohre als auch von einer momentanen Dichte des Mediums abhängig ist; ggf. kann diese Nutz-Schwingungsfrequenz auch von einer momentanen Viskosität des Mediums signifikant beeinflußt sein. Infolge schwankender Dichte des zu messenden Mediums und/oder infolge von im Betrieb vorgenommen Mediumswechseln ist die Nutz-Schwingungsfrequenz im Betrieb des Meßaufnehmers naturgemäß zumindest innerhalb eines kalibrierten und insoweit vorgegebenen Nutz-Frequenzbandes veränderlich, das entsprechend eine vorgegebene untere und eine vorgegebene obere Grenzfrequenz aufweist.

Zum Definieren einer freie Schwinglänge der Meßrohre und damit einhergehend zum Justieren des Nutzfrequenzbandes umfassen Meßaufnehmer der vorbeschriebenen Art ferner zumeist wenigstens ein einlaßseitiges Kopplerelement zum Bilden von einlaßseitigen Schwingungsknoten für gegengleiche Vibrationen, insb. Biegeschwingungen, beider Meßrohre, das von beiden Strömungsteilern beabstandet an beiden Meßrohren fixiert ist, sowie wenigstens ein auslaßseitiges Kopplerelement zum Bilden von auslaßseitigen Schwingungsknoten für gegengleiche Vibrationen, insb. Biegeschwingungen, der Meßrohre, das sowohl von beiden Strömungsteilern als auch vom einlaßseitigen Kopplerelement beabstandet an beiden Meßrohren fixiert ist. Im Falle gerader Meßrohre entspricht dabei ein minimaler Abstand zwischen einlaßseitigem und auslaßseitigem - insoweit mit zum Innenteil gehörigen - Kopplerelementen der freien Schwinglänge der Meßrohre. Mittels der Kopplerelementen kann zudem auch eine Schwingungsgüte des Innenteils wie auch die Empfindlichkeit des Meßaufnehmers insgesamt beeinflußt werden, in der Weise, daß für eine minimal geforderte Empfindlichkeit des Meßaufnehmers zumindest eine minimale freie Schwinglänge bereitzustellen ist.

Die Entwicklung auf dem Gebiet der Meßaufnehmer vom Vibrationstyp hat inzwischen einen Stand erreicht, daß moderne Meßaufnehmer der beschriebenen Art praktisch für ein breites Anwendungsspektrum der Durchflußmeßtechnik höchsten Anforderungen hinsichtlich Präzision und Reproduzierbarkeit der Meßergebnisse genügen können. So werden solche Meßaufnehmer in der Praxis für Massendurchflußraten von nur einigen wenigen g/h (Gramm pro Stunde) bis zu einigen t/min (Tonnen pro Minute), bei Drücken von bis zu 100 bar für Flüssigkeiten oder sogar über 300 bar für Gase eingesetzt. Die dabei erreichte Meßgenauigkeit liegt üblicherweise bei etwa 99,9% vom tatsächlichen Wert oder darüber bzw. einem Meßfehler von etwa 0,1%, wobei eine untere Grenze des garantierten Meßbereichs durchaus bei etwa 1% des Meßbereichsendwerts liegen kann. Aufgrund der hohen Bandbreite ihrer Einsatzmöglichkeiten werden industrietaugliche Meßaufnehmer vom Vibrationstyp mit nominellen Nennweiten (entspricht dem Kaliber der an den Meßaufnehmer anzuschließenden Rohrleitung bzw. dem Kaliber des Meßaufnehmers gemessen am Anschlußflansch) angeboten, die in einem Nennweitenbereich zwischen 1 mm und 250 mm liegen und bei maximaler nomineller Massendurchflußrate 2200 t/h jeweils für Druckverluste von weniger als 1 bar spezifiziert sind. Ein Kaliber der Meßrohre liegt hierbei etwa in einem Bereich zwischen 80 mm und 100 mm.

Trotzdem inzwischen Meßaufnehmer für den Einsatz in Rohrleitungen mit sehr hohen Massendurchflußraten und damit einhergehend sehr großem Kaliber von weit über 100 mm angeboten werden, besteht nach wie vor ein erhebliches Interesse daran, Meßaufnehmer von hoher Präzision und niedrigem Druckverlust auch für noch größer Rohrleitungskaliber, etwa 300 mm oder mehr, bzw. Massendurchflußraten, von 2500 t/h oder mehr, einzusetzen, etwa für Anwendungen der petrochemischen Industrie oder im Bereich des Transports und Umschlags von Erdöl, Erdgas, Treibstoffen etc.. Dies führt bei entsprechend maßstäblicher Vergrößerung der aus dem Stand der Technik, insb. der EP-A 1 001 254, der EP-A 553 939, der US-A 47 93 191, der US-A 2002/0157479, der US-A 2007/0151368, der US-A 53 70 002, der US-A 57 96 011, der US-B 63 08 580, der US-B 67 11 958, der US-B 71 34 347, der US-B 73 50 421, oder der WO-A 03/027616, bekannten und bereits etablierter Meßaufnehmerkonzepte dazu, daß die, insb. den gewünschten Schwingungseigenschaften, der - nicht zuletzt auch zur Vermeidung allfälliger, für das Schwingungsverhalten der Meßrohre erheblicher Deformationen des Meßaufnehmers - erforderlichen mechanischen Belastungsfähigkeit sowie dem maximal erlaubten Druckverlust geschuldeten, geometrischen Abmessungen, insb. die einem Abstand zwischen den Dichtflächen beider Flansche entsprechende Einbaulänge und, im Falle gebogener Meßrohre, eine maximale seitliche Ausdehnung des Meßaufnehmers, exorbitant hohe Ausmaße annehmen würde. Damit einhergehend nimmt zwangsläufig auch die Leermasse des Meßaufnehmers zu, wobei konventionelle Meßaufnehmer großer Nennweite bereits mit einer Leermasse von etwa 400 kg realisiert werden. Untersuchungen, die für Meßaufnehmer mit zwei gebogenen Meßrohren, etwa gemäß der US-B 73 50 421 oder der US-A 57 96 011, hinsichtlich ihrer maßstäblichen Anpassung zu noch größeren Nennweiten durchgeführt worden sind, haben beispielsweise ergeben, daß für nominelle Nennweiten von mehr als 300 mm die Leermasse eines maßstäblich vergrößerten konventionellen Meßaufnehmers weit über 500 kg liegen würde einhergehend mit einer Einbaulänge von mehr als 3000 mm und einer maximalen seitlichen Ausdehnung von mehr als 1000 mm. Insoweit ist festzustellen, daß industrietaugliche, gleichwohl in Serie herstellbare Meßaufnehmer herkömmlicher Konzeption und Materialien mit nominellen Nennweiten von weit über 300 mm sowohl aus Gründen technischer Realisierbarkeit, als auch aufgrund ökonomischer Erwägungen in absehbarer Zeit nicht verfügbar sein dürften.

WO 96/08697 offenbart einen Coriolis-Massedurchflussmesser mit einem Aufnehmergehäuse, zwei Strömungsteilern und vier an die Strömungsteiler angeschlossenen Messrohren. Die Strömungsteiler sind beweglich mit den Gehäuseenden verbunden, so dass Spannungen aufgrund von Temperaturunterschieden vermieden werden können.

Ausgehend vom oben genannten Stand der Technik besteht daher eine Aufgabe der Erfindung darin, Meßsystem mit einem Vibrationstyp-Meßaufnehmer von hoher Empfindlichkeit und Schwingungsgüte anzugeben, der auch bei großen Massendurchflußraten von mehr als 2200 t/h einen geringen Druckverlust von weniger als 1 bar verursacht, und der auch mit großer nomineller Nennweite von über 250 mm eine möglichst kompakte Bauweise bei möglichst geringem Einbaugewicht aufweist. Darüberhinaus soll das mittels des Meßaufnehmers gebildete Meßsystem möglichst keine Querempfindlichkeit auf allfällige Änderungen von Spannungszuständen im Meßaufnehmer, etwa infolge von Temperaturänderungen bzw. -gradienten innerhalb des Meßaufnehmers und/oder infolge von außen auf den Meßaufnehmer wirkenden Kräften, wie z.B. via angeschlossener Rohrleitung eingetragener Einspannkräfte, aufweisen.

Zur Lösung der Aufgabe besteht die Erfindung in einem Meßsystem zum Messen einer Dichte und/oder einer Massendurchflußrate, beispielsweise auch eines über ein Zeitintervall totalisierten Gesamt-Massendurchflusses und/oder einer Viskosität, eines in einer Rohrleitung zumindest zeitweise, beispielsweise auch mit einer Massendurchflußrate von mehr als 2200 t/h, strömenden Mediums, etwa eines Gases, einer Flüssigkeit, eines Pulvers oder eines anderen strömungsfähigen Stoffes.

Das, beispielsweise als In-Line-Meßgerät und/oder Meßgerät in Kompaktbauweise ausgebildete, Meßsystem umfaßt einen Meßaufnehmer vom Vibrationstyp zum Erzeugen von, etwa dem Erfassen der Dichte und/oder der Massendurchflußrate und/oder der Viskosität dienenden, Schwingungsmeßsignalen.

Der Meßaufnehmer weist ein, beispielsweise im wesentlichen rohrförmiges und/oder außen kreiszylindrisches, Aufnehmer-Gehäuse, von dem ein einlaßseitiges erstes Gehäuseende mittels eines genau vier jeweils voneinander beabstandeten, beispielsweise kreiszylindrische, kegelförmige oder konusförmige, Strömungsöffnungen aufweisenden einlaßseitigen, als integraler Bestandteil des Gehäuses gebildeten ersten Strömungsteilers und ein auslaßseitiges zweites Gehäuseende mittels eines genau vier jeweils voneinander beabstandeten, beispielsweise kreiszylindrische, kegelförmige oder konusförmige, Strömungsöffnungen aufweisenden auslaßseitigen, als integraler Bestandteil des Gehäuses gebildeten zweiten Strömungsteilers gebildet sind,
genau vier unter Bildung strömungstechnisch parallel geschalteter Strömungspfade an die, beispielsweise baugleichen, Strömungsteiler angeschlossene, beispielsweise lediglich mittels nämlicher Strömungsteiler im Aufnehmer-Gehäuse schwingfähig gehalterte und/oder baugleiche und/oder zueinander zumindest paarweise parallele und/oder gerade, Meßrohre zum Führen von strömendem Medium, von denen ein, beispielsweise kreiszylindrisches, erstes Meßrohr mit einem einlaßseitigen ersten Meßrohrende in eine erste Strömungsöffnung des ersten Strömungsteilers und mit einem auslaßseitigen zweiten Meßrohrende in eine erste Strömungsöffnung des zweiten Strömungsteilers mündet, ein, beispielsweise kreiszylindrisches, zweites Meßrohr mit einem einlaßseitigen ersten Meßrohrende in eine zweite Strömungsöffnung des ersten Strömungsteilers und mit einem auslaßseitigen zweiten Meßrohrende in eine zweite Strömungsöffnung des zweiten Strömungsteilers mündet, ein, beispielsweise kreiszylindrisches, drittes Meßrohr mit einem einlaßseitigen ersten Meßrohrende in eine dritte Strömungsöffnung des ersten Strömungsteilers und mit einem auslaßseitigen zweiten Meßrohrende in eine dritte Strömungsöffnung des zweiten Strömungsteilers mündet und ein, beispielsweise kreiszylindrisches, viertes Meßrohr mit einem einlaßseitigen ersten Meßrohrende in eine vierte Strömungsöffnung des ersten Strömungsteilers und mit einem auslaßseitigen zweiten Meßrohrende in eine vierte Strömungsöffnung des zweiten Strömungsteilers mündet,
eine mittels eines, beispielsweise elektrodynamischen und/oder Schwingungen des ersten Meßrohrs relativ zum zweiten Meßrohr differentiell anregenden, ersten Schwingungserregers gebildete, elektromechanische, Erregeranordnung zum Erzeugen und/oder Aufrechterhalten von mechanischen Schwingungen, beispielsweise von Biegeschwingungen, der vier Meßrohre, wobei die Erregeranordnung derart ausgebildet ist, daß damit das erste Meßrohr und das zweite Meßrohr im Betrieb zu gegengleichen Biegeschwingungen in einer gemeinsamen gedachten ersten Schwingungsebene und das dritte Meßrohr und das vierte Meßrohr im Betrieb zu gegengleichen Biegeschwingungen in einer gemeinsamen gedachten, beispielsweise zur ersten Schwingungsebene im wesentlichen parallelen, zweiten Schwingungsebene anregbar sind, sowie
eine auf Vibrationen, nicht zuletzt auch mittels der Erregeranordnung angeregte Biegeschwingungen, der Meßrohre reagierende, beispielsweise elektro-dynamische und/oder mittels einander baugleicher Schwingungssensoren gebildete, Vibrationssensoranordnung zum Erzeugen von Vibrationen, beispielsweise Biegeschwingungen, der Meßrohre repräsentierenden Schwingungsmeßsignalen
und eine, insb. mit wenigstens einem der Meßrohre gekoppelte, Deformationsmeßanordnung zum Erfassen einer, insb. thermisch bedingten und/oder durch auf den Meßaufnehmer von außen einwirkende Kräfte bewirkten und/ oder ein Schwingungsverhalten der Meßrohre beeinflussenden und/oder eine Veränderung wenigstens einer Resonanzfrequenz zumindest eines der Meßrohre bewirkenden und/oder translatorischen, Deformation des Meßaufnehmers, insb. einer Dehnung eines oder mehrerer Meßrohre auf.

Darüberhinaus umfaßt das Meßsystem eine mit dem Meßaufnehmer elektrisch gekoppelte, beispielsweise in einem mechanisch mit dem Aufnehmer-Gehäuse verbundenen Elektronik-Gehäuse angeordneten, Umformer-Elektronik zum Ansteuern des Meßaufnehmers, nicht zuletzt auch von dessen Erregeranordnung, und zum Auswerten von vom Meßwandler gelieferten Schwingungsmeßsignalen.

Die Umformer-Elektronik weist eine Treiberschaltung für die Erregeranordnung, und
eine, beispielsweise mittels eines Mikrocomputers und/oder eines digitalen Signalprozessors gebildete, Meßschaltung, die unter Verwendung wenigstens eines von der Vibrationssensoranordnung gelieferten Schwingungsmeßsignals einen die Dichte des Medium repräsentierenden Dichte-Meßwert und/oder einen die Massendurchflußrate repräsentierenden Massendurchfluß-Meßwert generiert, auf. Bei erfindungsgemäßen Meßsystem ist die Meßschaltung ferner dafür eingerichtet, zum Erzeugen des Dichte-Meßwerts und/oder des Massendurchfluß-Meßwerts eine Änderung von wenigstens einer charakteristischen Größe, beispielsweise einer Signalfrequenz, der vom Meßwandler gelieferten Schwingungsmeßsignale, etwa eine Änderung von deren Signalfrequenz und/oder eine Änderung einer Phasendifferenz zwischen zwei mittels der Vibrationssensoranordnung generierten Schwingungsmeßsignalen, zu korrigieren, wobei nämliche Änderungen durch eine, etwa mit einer thermisch bedingten und/oder durch äußere Kräfte bewirkten Deformation des Meßaufnehmers einhergehenden, Änderung eines Spannungszustands im Meßaufnehmer und/oder eine, etwa mit einer thermisch bedingten und/oder durch äußere Kräfte bewirkten Deformation des Meßaufnehmers einhergehenden, Abweichung eines momentanen Spannungszustands im Meßaufnehmer von einem dafür vorgegebenen, beispielsweise vorab im Zuge einer herstellerseitig und/oder in Einbaulage durchgeführten Kalibrierung des Meßsystems ermittelten, Referenz-Spannungszustand verursacht sind. Nach einer ersten Ausgestaltung der Erfindung ist ferner vorgesehen, daß nämliche - nicht zuletzt auch ein Schwingungsverhalten der Meßrohre beeinflussenden und/oder eine Veränderung wenigstens einer Resonanzfrequenz des Meßaufnehmers bewirkenden - mittels der Meßschaltung zu korrigierende Änderung des Spannungszustands im Meßaufnehmer und/oder nämliche - nicht zuletzt auch ein Schwingungsverhalten der Meßrohre beeinflussenden und/oder eine Veränderung wenigstens einer Resonanzfrequenz des Meßaufnehmers bewirkenden - Abweichung des momentanen Spannungszustands im Meßaufnehmer von dem dafür vorgegebenen Referenz-Spannungszustand aus einer, etwa thermisch bedingten und/oder durch äußere Kräfte bewirkten, Deformation des Meßaufnehmers, beispielsweise einer Dehnung eines oder mehrerer der Meßrohre, resultiert.

Nach einer zweiten Ausgestaltung der Erfindung ist ferner vorgesehen, daß die Meßschaltung die Änderung des Spannungszustands im Meßaufnehmer und/oder die Abweichung des momentanen Spannungszustands im Meßaufnehmer von dem dafür vorgegebenen Referenz-Spannungszustand mittels wenigstens eines von der Vibrationssensoranordnung erzeugten, beispielsweise zwei- oder mehrmodale, Vibrationen, nicht zuletzt auch Biegeschwingungen, der Meßrohre repräsentierenden, beispielsweise zwei oder mehr Signalkomponenten von unterschiedlicher Signalfrequenz aufweisenden, Schwingungsmeßsignals ermittelt. Alternativ oder in Ergänzung ist ferner vorgesehen, daß die Meßschaltung die aus der Änderung des Spannungszustands im Meßaufnehmer bzw. der Abweichung des momentanen Spannungszustands im Meßaufnehmer von dem dafür vorgegebenen Referenz-Spannungszustand resultierende Änderung der wenigstens einen charakteristischen Größe der vom Meßwandler gelieferten Schwingungsmeßsignale mittels wenigstens eines von der Vibrationssensoranordnung erzeugten, beispielsweise zwei- oder mehrmodale, Vibrationen, nicht zuletzt auch Biegeschwingungen, der Meßrohre repräsentierenden, beispielsweise zwei oder mehr Signalkomponenten von unterschiedlicher Signalfrequenz aufweisenden, Schwingungsmeßsignals korrigiert.

Nach einer dritten Ausgestaltung der Erfindung ist ferner vorgesehen, daß jedes der vier, insb. gleichkalibrigen und/oder gleichlangen, Meßrohre ein Kaliber aufweist, das mehr als 60 mm, insb. mehr als 80 mm, beträgt.

Nach einer vierten Ausgestaltung der Erfindung ist ferner vorgesehen, daß der erste Strömungsteiler einen, insb. eine Masse von mehr als 50 kg aufweisenden, Flansch zum Anschließen des Meßaufnehmers an ein dem Zuführen von Medium zum Meßaufnehmer dienendes Rohrsegment der Rohrleitung und der zweite Strömungsteiler einen, insb. eine Masse von mehr als 50 kg aufweisenden, Flansch zum Anschließen des Meßaufnehmers an ein dem Abführen von Medium vom Meßaufnehmer dienendes Rohrsegment der Rohrleitung aufweisen. Diese Ausgestaltung der Erfindung weiterbildend weist jeder der Flansche jeweils eine Dichtfläche zum fluiddichten Verbinden des Meßaufnehmers mit dem jeweils korrespondierenden Rohrsegment der Rohrleitung auf, wobei ein Abstand zwischen den Dichtflächen beider Flansche eine, insb. mehr als 1200 mm betragende und/oder weniger als 3000 mm betragende, Einbaulänge des Meßaufnehmers definiert. Im besonderen ist der Meßaufnehmer ferner so ausgebildet, daß dabei eine einem minimalen Abstand zwischen der ersten Strömungsöffnung des ersten Strömungsteilers und der ersten Strömungsöffnung des zweiten Strömungsteilers entsprechende Meßrohrlänge des ersten Meßrohrs so gewählt ist, daß ein Meßrohrlänge-zu-Einbaulänge-Verhältnis des Meßaufnehmers, definiert durch ein Verhältnis der Meßrohrlänge des ersten Meßrohrs zur Einbaulänge des Meßaufnehmers, mehr als 0.7, insb. mehr als 0.8 und/oder weniger als 0.95, beträgt, und/oder daß ein Kaliber-zu-Einbaulänge-Verhältnis, des Meßaufnehmers, definiert durch ein Verhältnis des Kalibers des ersten Meßrohrs zur Einbaulänge des Meßaufnehmers, mehr als 0.02, insb. mehr als 0.05 und/oder weniger als 0.09, beträgt. Alternativ oder in Ergänzung dazu ist der Meßaufnehmer so ausgebildete, daß ein Nennweite-zu Einbaulänge-Verhältnis des Meßaufnehmers, definiert durch ein Verhältnis der nominellen Nennweite des Meßaufnehmers zur Einbaulänge des Meßaufnehmers kleiner als 0.3, insb. kleiner als 0.2 und/oder größer als 0.1, ist, wobei die nominelle Nennweite einem Kaliber der Rohrleitung, in deren Verlauf der Meßaufnehmer einzusetzen ist, entspricht.

Nach einer fünften Ausgestaltung der Erfindung ist ferner vorgesehen, daß eine einem minimalen Abstand zwischen der ersten Strömungsöffnung des ersten Strömungsteilers und der ersten Strömungsöffnung des zweiten Strömungsteilers entsprechende Meßrohrlänge des ersten Meßrohrs mehr als 1000 mm, insb. mehr als 1200 mm und/oder weniger als 2000 mm, beträgt.

Nach einer sechsten Ausgestaltung der Erfindung ist ferner vorgesehen, daß jedes der vier, insb. gleichkalibrigen, Meßrohre so angeordnet ist, daß ein kleinster seitlicher Abstand jedes der vier, insb. gleichlangen, Meßrohre von einer Gehäuseseitenwand des Aufnehmer-Gehäuses jeweils größer als Null, insb. größer als 3 mm und/oder größer als ein Doppeltes einer jeweiligen Rohrwandstärke, beträgt; und/oder daß ein kleinster seitlicher Abstand zwischen zwei benachbarten Meßrohren jeweils größer als 3 mm und/oder größer als die Summe von deren jeweiligen Rohrwandstärken beträgt.

Nach einer siebenten Ausgestaltung der Erfindung ist ferner vorgesehen, daß jede der Strömungsöffnungen so angeordnet ist, daß ein kleinster seitlicher Abstand jeder der Strömungsöffnungen von einer Gehäuseseitenwand des Aufnehmer-Gehäuses jeweils größer als Null, insb. größer als 3 mm und/oder größer als ein Doppeltes einer kleinsten Rohrwandstärke der Meßrohre, beträgt; und/oder daß ein kleinster seitlicher Abstand zwischen den Strömungsöffnungen größer als 3 mm und/oder größer als ein Doppeltes einer kleinsten Rohrwandstärke der Meßrohre beträgt.

Nach einer achten Ausgestaltung der Erfindung ist ferner vorgesehen, daß ein Massenverhältnis einer Leermasse des gesamten Meßaufnehmers zu einer Leermasse des ersten Meßrohrs größer als 10, insb. größer als 15 und kleiner als 25, ist.

Nach einer neunten Ausgestaltung der Erfindung ist ferner vorgesehen, daß eine Leermasse, M₁₈, des ersten Meßrohrs, insb. jedes der Meßrohre größer als 20 kg, insb. größer als 30 kg und/oder kleiner als 50 kg, ist.

Nach einer zehnten Ausgestaltung der Erfindung ist ferner vorgesehen, daß eine Leermasse des Meßaufnehmers größer als 200 kg, insb. größer als 300 kg, ist.

Nach einer elften Ausgestaltung der Erfindung ist ferner vorgesehen, daß eine nominellen Nennweite des Meßaufnehmers, die einem Kaliber der Rohrleitung, in deren Verlauf der Meßaufnehmer einzusetzen ist, entspricht, mehr als 100 mm beträgt, insb. größer als 300 mm ist. In vorteilhafter Weise ist der Meßaufnehmer ferner so ausgebildet, daß ein Masse-zu-Nennweite-Verhältnis des Meßaufnehmers, definiert durch ein Verhältnis der Leermasse des Meßaufnehmers zur nominellen Nennweite des Meßaufnehmers kleiner als 2 kg/mm, insb. kleiner als 1 kg/mm und/oder größer als 0.5 kg/mm, ist.

Nach einer zwölften Ausgestaltung der Erfindung ist ferner vorgesehen, daß das erste und das zweite Meßrohr zumindest hinsichtlich eines Materials, aus dem deren Rohrwände jeweils bestehen, und/oder hinsichtlich ihrer geometrischer Rohr-Abmessungen, insb. einer Rohrlänge, einer Rohrwandstärke, eines Rohr-Außendurchmessers und/oder eines Kalibers, baugleich sind.

Nach einer dreizehnten Ausgestaltung der Erfindung ist ferner vorgesehen, daß das dritte und das vierte Meßrohr zumindest hinsichtlich eines Materials, aus dem deren Rohrwände jeweils bestehen, und/oder hinsichtlich ihrer geometrischen Rohr-Abmessungen, insb. einer Rohrlänge, einer Rohrwandstärke, eines Rohr-Außendurchmessers und/oder eines Kalibers, baugleich sind.

Nach einer vierzehnten Ausgestaltung der Erfindung ist ferner vorgesehen, daß die vier Meßrohre hinsichtlich eines Materials, aus dem deren Rohrwände bestehen, und/oder hinsichtlich ihrer geometrischen Rohr-Abmessungen, insb. einer Rohrlänge, einer Rohrwandstärke, eines Rohr-Außendurchmessers und/oder eines Kalibers, baugleich sind. Es kann aber auch von Vorteil sein, wenn alternativ dazu sowohl das dritte Meßrohr als auch das vierte Meßrohr hinsichtlich ihrer jeweiligen geometrischen Rohr-Abmessungen, insb. einer Rohrlänge, einer Rohrwandstärke, eines Rohr-Außendurchmessers und/oder eines Kalibers, verschieden ist vom ersten Meßrohr und vom zweiten Meßrohr Meßrohre.

Nach einer fünfzehnten Ausgestaltung der Erfindung ist ferner vorgesehen, daß ein Material, aus dem die Rohrwände der vier Meßrohre zumindest anteilig bestehen, Titan und/oder Zirconium und/oder Duplexstahl und/oder Superduplexstahl ist.

Nach einer sechzehnten Ausgestaltung der Erfindung ist ferner vorgesehen, daß das Aufnehmer-Gehäuse, die Strömungsteiler und Rohrwände der Meßrohre jeweils aus, beispielsweise rostfreiem, Stahl bestehen.

Nach einer siebzehnten Ausgestaltung der Erfindung ist ferner vorgesehen, daß eine minimalen Biegeschwingungs-Resonanzfrequenzen zumindest des ersten und zweiten Meßrohrs im wesentlichen gleich sind und eine minimalen Biegeschwingungs-Resonanzfrequenzen zumindest des dritten und vierten Meßrohrs im wesentlichen gleich sind. Hierbei können die minimalen Biegeschwingungs-Resonanzfrequenzen aller vier Meßrohre im wesentlichen gleich oder aber auch lediglich paarweise gleich gehalten sein.

Nach einer achtzehnten Ausgestaltung der Erfindung ist ferner vorgesehen, daß die vier Strömungsöffnungen des ersten Strömungsteilers so angeordnet sind, daß zu, insb. kreisförmigen, Querschnittsflächen der Strömungsöffnungen des ersten Strömungsteilers zugehörige gedachte Flächenschwerpunkte die Eckpunkte eines gedachten Quadrats bilden, wobei nämliche Querschnittsflächen in einer gemeinsamen gedachten, senkrecht zu einer, insb. zu einer Hauptströmungsachse des Meßaufnehmers parallelen, Längsachse des Meßaufnehmers verlaufenden Schnittebene des ersten Strömungsteilers liegen.

Nach einer neunzehnten Ausgestaltung der Erfindung ist ferner vorgesehen, daß die vier Strömungsöffnungen des zweiten Strömungsteilers so angeordnet sind, daß zu, insb. kreisförmigen, Querschnittsflächen der Strömungsöffnungen des zweiten Strömungsteilers zugehörige gedachte Flächenschwerpunkte die Eckpunkte eines gedachten Quadrats bilden, wobei nämliche Querschnittsflächen in einer gemeinsamen gedachten, senkrecht zu einer, insb. zu einer Hauptströmungsachse des Meßaufnehmers parallelen, Längsachse des Meßaufnehmers verlaufenden Schnittebene des zweiten Strömungsteilers liegen.

Nach einer zwanzigsten Ausgestaltung der Erfindung ist ferner vorgesehen, daß ein Mittelsegment des Aufnehmer-Gehäuses mittels eines geraden, beispielsweise kreiszylindrischen, Rohres gebildet ist.

Nach einer einundzwanzigsten Ausgestaltung der Erfindung ist ferner vorgesehen, daß das Aufnehmer-Gehäuse im wesentlichen rohrförmig, beispielsweise kreiszylindrisch, ausgebildet ist. Hierbei ist ferner vorgesehen, daß das Aufnehmer-Gehäuse einen größten Gehäuse-Innendurchmesser aufweist, der größer als 150 mm, insb. größer als 250 mm, ist, insb. derart, daß ein Gehäuse-zu-Meßrohr-Innendurchmesser-Verhältnis des Meßaufnehmers, definiert durch ein Verhältnis des größten Gehäuse-Innendurchmessers zu einem Kaliber des ersten Meßrohrs größer als 3, insb. größer als 4 und/oder kleiner als 5, gehalten ist und/oder daß ein Gehäuse-Innendurchmesser-zu-Nennweite-Verhältnis des Meßaufnehmers, definiert durch ein Verhältnis des größten Gehäuse-Innendurchmessers zur nominellen Nennweite des Meßaufnehmers kleiner als 1.5, insb. kleiner als 1.2 und/oder größer als 0.9, ist, wobei die nominelle Nennweite einem Kaliber der Rohrleitung, in deren Verlauf der Meßaufnehmer einzusetzen ist, entspricht. Das Gehäuse-Innendurchmesser-zu-Nennweite-Verhältnis des Meßaufnehmers kann dabei in vorteilhafter Weise beispielsweise auch gleich eins sein.

Nach einer zweiundzwanzigsten Ausgestaltung der Erfindung ist ferner vorgesehen, daß die Vibrationssensoranordnung mittels eines, insb. elektrodynamischen und/oder Schwingungen des ersten Meßrohrs relativ zum zweiten Meßrohr differentiell erfassenden, einlaßseitigen ersten Schwingungssensors sowie eines, insb. elektrodynamischen und/oder Schwingungen des ersten Meßrohrs relativ zum zweiten Meßrohr differentiell erfassenden, auslaßseitigen zweiten Schwingungssensors gebildet ist, insb. derart, daß eine einem minimalen Abstand zwischen dem ersten Schwingungssensors und dem zweite Schwingungssensor entsprechende Meßlänge des Meßaufnehmers mehr als 500 mm, insb. mehr als 600 mm und/oder weniger als 1200 mm, beträgt, und/oder daß ein Kaliber-zu-Meßlänge-Verhältnis des Meßaufnehmers, definiert durch ein Verhältnis eines Kalibers des ersten Meßrohrs zur Meßlänge des Meßaufnehmers, mehr als 0.05, insb. mehr als 0.09, beträgt. Ferner können der erste Schwingungssensor mittels eines am ersten Meßrohr gehalterten Permanentmagneten und einer von dessen Magnetfeld durchfluteten, am zweiten Meßrohr gehalterten Zylinderspule gebildet sein, und der zweite Schwingungssensor mittels eines am ersten Meßrohr gehalterten Permanentmagneten und einer von dessen Magnetfeld durchfluteten, am zweiten Meßrohr gehalterten Zylinderspule gebildet sein.

Nach einer dreiundzwanzigsten Ausgestaltung der Erfindung ist ferner vorgesehen, daß die Vibrationssensoranordnung mittels eines, insb. elektrodynamischen und/oder Schwingungen des ersten Meßrohrs relativ zum zweiten Meßrohr differentiell erfassenden, einlaßseitigen ersten Schwingungssensors, eines, insb. elektrodynamischen und/oder Schwingungen des ersten Meßrohrs relativ zum zweiten Meßrohr differentiell erfassenden, auslaßseitigen zweiten Schwingungssensors, eines, insb. elektrodynamischen und/oder Schwingungen des dritten Meßrohrs relativ zum vierten Meßrohr differentiell erfassenden, einlaßseitigen dritten Schwingungssensors sowie eines, insb. elektrodynamischen und/oder Schwingungen des dritten Meßrohrs relativ zum vierten Meßrohr differentiell erfassenden, auslaßseitigen vierten Schwingungssensors gebildet ist, dies beispielsweise derart, daß eine einem minimalen Abstand zwischen dem ersten Schwingungssensors und dem zweite Schwingungssensor entsprechende Meßlänge des Meßaufnehmers mehr als 500 mm, insb. mehr als 600 mm und/oder weniger als 1200 mm, beträgt, und/oder daß ein Kaliber-zu-Meßlänge-Verhältnis des Meßaufnehmers, definiert durch ein Verhältnis eines Kalibers des ersten Meßrohrs zur Meßlänge des Meßaufnehmers, mehr als 0.05, insb. mehr als 0.09, beträgt. Hierbei können in vorteilhafter Weise der erste und dritte Schwingungssensor elektrisch seriell derart verschaltet sein, daß ein gemeinsames Schwingungsmeßsignal gemeinsame einlaßseitige Schwingungen des ersten und dritten Meßrohrs relativ zum zweiten und vierten Meßrohr repräsentiert, und/oder der zweite und vierte Schwingungssensor elektrisch seriell derart verschaltet sein, daß ein gemeinsames Schwingungsmeßsignal gemeinsame auslaßseitige Schwingungen des ersten und dritten Meßrohrs relativ zum zweiten und vierten Meßrohr repräsentiert. Alternativ oder in Ergänzung können ferner der erste Schwingungssensor mittels eines am ersten Meßrohr gehalterten Permanentmagneten und einer von dessen Magnetfeld durchfluteten, am zweiten Meßrohr gehalterten Zylinderspule, und der zweite Schwingungssensor mittels eines am ersten Meßrohr gehalterten Permanentmagneten und einer von dessen Magnetfeld durchfluteten, am zweiten Meßrohr gehalterten Zylinderspule gebildet sein, und/oder können der dritte Schwingungssensor mittels eines am dritten Meßrohr gehalterten Permanentmagneten und einer von dessen Magnetfeld durchfluteten, am vierten Meßrohr gehalterten Zylinderspule und der vierte Schwingungssensor mittels eines am dritten Meßrohr gehalterten Permanentmagneten und einer von dessen Magnetfeld durchfluteten, am vierten Meßrohr gehalterten Zylinderspule gebildet sein.

Nach einer vierundzwanzigsten Ausgestaltung der Erfindung ist die Erregeranordnung mittels eines, beispielsweise elektrodynamischen und/oder Schwingungen des dritten Meßrohrs relativ zum vierten Meßrohr differentiell anregenden, zweiten Schwingungserregers gebildet. Hierbei ist ferner vorgesehen, daß der erste und zweite Schwingungserreger elektrisch seriell verschaltet sind, derart, daß ein gemeinsames Treibersignal gemeinsame Schwingungen des ersten und dritten Meßrohrs relativ zum zweiten und vierten Meßrohr anregt. Die Schwingungserreger der Erregeranordnung können beispielsweise mittels eines am ersten Meßrohr gehalterten Permanentmagneten und einer von dessen Magnetfeld durchfluteten, am zweiten Meßrohr gehalterten Zylinderspule gebildet ist, und wobei der zweite Schwingungserreger mittels eines am dritten Meßrohr gehalterten Permanentmagneten und einer von dessen Magnetfeld durchfluteten, am vierten Meßrohr gehalterten Zylinderspule gebildet ist.

Nach einer fünfundzwanzigsten Ausgestaltung der Erfindung ist ferner vorgesehen, daß die Deformationsmeßanordnung mittels eines, beispielsweise als Halbleiter-Dehnungsmeßstreifen oder als Metallgitter-Dehnungsmeßstreifen ausgebildeten, Sensorelements gebildet ist, das einen von einer Verformung des Meßaufnehmers, beispielsweise einer Dehnung eines oder mehrerer der Meßrohre, abhängigen ohmschen Widerstand aufweist.

Nach einer sechsundzwanzigsten Ausgestaltung der Erfindung ist ferner vorgesehen, daß die Deformationsmeßanordnung mittels eines, beispielsweise als Halbleiter-Dehnungsmeßstreifen oder als Metallgitter-Dehnungsmeßstreifen ausgebildeten, Sensorelements gebildet ist, das einen von einer Verformung des Meßaufnehmers, beispielsweise einer Dehnung eines oder mehrerer der Meßrohre, abhängigen ohmschen Widerstand aufweist, und daß das, etwa als Dehnungsmeßstreifen ausgebildete, Sensorelement an einem der Meßrohre, beispielsweise adhäsiv, fixiert ist, etwa derart, daß es auf Änderungen einer einem jeweiligen minimalen Abstand zwischen der mit dem jeweiligen ersten Meßrohrende korrespondierenden Strömungsöffnung des ersten Strömungsteilers und der mit dem jeweiligen zweiten Meßrohrende korrespondierenden Strömungsöffnung des zweiten Strömungsteilers entsprechenden Meßrohrlänge des nämlichen Meßrohrs mit einer Änderung seines ohmschen Widerstands reagiert und/oder daß es mit nämlichem Meßrohr flächig verbunden ist.

Nach einer siebenundzwanzigsten Ausgestaltung der Erfindung ist ferner vorgesehen, daß das wenigstens eine, beispielsweise als Dehnungsmeßstreifen ausgebildete, Sensorelement auf einer äußeren Rohrwand-Oberfläche des nämlichen Meßrohrs, beispielsweise adhäsiv, fixiert ist.

Nach einer achtundzwanzigsten Ausgestaltung der Erfindung ist ferner vorgesehen, daß das wenigstens eine, beispielsweise als Dehnungsmeßstreifen ausgebildete, Sensorelement auf einer äußeren Rohrwand-Oberfläche des nämlichen Meßrohrs, beispielsweise adhäsiv, fixiert ist. Dies im besonderen derart, daß es einen davon überdeckten Detektionsbereich auf nämlicher Rohrwand-Oberfläche zumindest teilweise flächig kontaktiert; und/oder daß es mit einem davon überdeckten Detektionsbereich auf nämlicher Rohrwand-Oberfläche flächig verbunden ist; und/oder daß ein vom Sensorelement überdeckter, beispielsweise von diesem flächig kontaktierter und/oder damit flächig verbundener, Detektionsbereich auf nämlicher Rohrwand-Oberfläche wenigstens eine Zonen aufweist, in der die mittels der Erregeranordnung angeregten gegengleichen Biegeschwingungen keine Biegespannung verursachen.

Nach einer neunundzwanzigsten Ausgestaltung der Erfindung ist ferner vorgesehen, daß - nachdem jedes der Meßrohre jeweils eine Meßrohrlänge aufweist, die einem jeweiligen minimalen Abstand zwischen der mit dem jeweiligen ersten Meßrohrende korrespondierenden Strömungsöffnung des ersten Strömungsteilers und der mit dem jeweiligen zweiten Meßrohrende korrespondierenden Strömungsöffnung des zweiten Strömungsteilers entspricht - mittels der Deformationsmeßanordnung Änderungen einer Meßrohrlänge eines oder mehrerer der Meßrohre erfaßbar sind. Zum Erfassen von Änderungen der Meßrohrlänge eines oder mehrerer der Meßrohre kann die Deformationsmeßanordnung wenigstens einen, etwa außen, an einem der Meßrohre, beispielsweise adhäsiv und/oder flächig, fixierten Dehnungsmeßstreifen, beispielsweise einen Halbleiter-Dehnungsmeßstreifen oder einen Metallgitter-Dehnungsmeßstreifen, aufweisen.

Nach einer dreißigsten Ausgestaltung der Erfindung ist ferner vorgesehen, daß die Deformationsmeßanordnung mittels wenigstens eines mit wenigstens einem der Meßrohre mechanisch gekoppelten, beispielsweise adhäsiv an einem der Meßrohre fixierten, Dehnungsmeßstreifen, beispielsweise einem Halbleiter-Dehnungsmeßstreifen oder einem Metallgitter-Dehnungsmeßstreifen, gebildet ist.

Nach einer einunddreißigsten Ausgestaltung der Erfindung ist ferner vorgesehen, daß die Meßschaltung die Änderung des Spannungszustands im Meßaufnehmer und/oder die Abweichung des momentanen Spannungszustands im Meßaufnehmer von dem dafür vorgegebenen Referenz-Spannungszustand anhand einer von der Deformationsmeßanordnung erfaßten, etwa thermisch bedingten und/oder durch auf den Meßaufnehmer von außen einwirkende Kräfte bewirkten und/oder ein Schwingungsverhalten der Meßrohre beeinflussenden und/oder eine Veränderung wenigstens einer Resonanzfrequenz zumindest eines der Meßrohre bewirkenden und/oder translatorischen, Deformation des Meßaufnehmers, nicht zuletzt auch einer Dehnung eines oder mehrerer der Meßrohre, ermittelt.

Nach einer zweiunddreißigsten Ausgestaltung der Erfindung ist ferner vorgesehen, daß die Meßschaltung die aus der Änderung des Spannungszustands im Meßaufnehmer bzw. der Abweichung des momentanen Spannungszustands im Meßaufnehmer von dem dafür vorgegebenen Referenz-Spannungszustand resultierende Änderung der wenigstens einen charakteristischen Größe der vom Meßwandler gelieferten Schwingungsmeßsignale basierend auf einer von der Deformationsmeßanordnung erfaßten, beispielsweise thermisch bedingten und/oder durch auf den Meßaufnehmer von außen einwirkende Kräfte bewirkten und/oder ein Schwingungsverhalten der Meßrohre beeinflussenden und/oder eine Veränderung wenigstens einer Resonanzfrequenz zumindest eines der Meßrohre bewirkenden und/oder translatorischen, Deformation des Meßaufnehmers, nicht zuletzt auch einer Dehnung eines oder mehrerer der Meßrohre, korrigiert.

Nach einer dreiunddreißigsten Ausgestaltung der Erfindung ist ferner vorgesehen, daß die Deformationsmeßanordnung mittels eines einen von einer Verformung des Meßaufnehmers abhängigen ohmschen Widerstand aufweisenden, beispielsweise als Halbleiter-Dehnungsmeßstreifen oder als Metallgitter-Dehnungsmeßstreifen ausgebildeten, ersten Sensorelements und mittels wenigstens eines einen von einer Verformung des Meßaufnehmers abhängigen ohmschen Widerstand aufweisenden, beispielsweise als Halbleiter-Dehnungsmeßstreifen oder als Metallgitter-Dehnungsmeßstreifen ausgebildeten, zweiten Sensorelements gebildet ist, beispielsweise derart, daß das erste Sensorelement und das zweite Sensorelement mittels wenigstens eines innerhalb des Aufnehmergehäuses verlaufenden Drahtes miteinander elektrisch verbunden sind, und/oder daß das erste Sensorelement und das zweite Sensorelement elektrisch seriell verschaltet sind, und/oder daß das erste Sensorelement und das zweite Sensorelement baugleich sind, und/oder daß das erste Sensorelement und das zweite Sensorelement in einer gedachten Schnittebene des Meßaufnehmers liegen, in der eine zu einer Hauptströmungsachse des Meßaufnehmers parallele Längsachse des Meßaufnehmers verläuft. Diese Ausgestaltung der Erfindung weiterbildend ist ferner vorgesehen, daß das erste Sensorelement der Deformationsmeßanordnung am ersten Meßrohr fixiert ist, beispielsweise derart, daß mittels des ersten Sensorelements eine die Meßrohrlänge des ersten Meßrohres verändernde Dehnung des ersten Meßrohrs erfaßbar ist. In Ergänzung dazu kann das zweite Sensorelement der Deformationsmeßanordnung an einem anderen als dem ersten Meßrohr, nicht zuletzt auch dem davon am weitesten seitlichen beabstandeten Meßohr, fixiert sein, beispielsweise derart, daß mittels des Sensorelements eine die Meßrohrlänge des vierten Meßrohres verändernde Dehnung des vierten Meßrohrs erfaßbar ist.

Nach einer vierunddreißigsten Ausgestaltung der Erfindung ist ferner vorgesehen, daß der Meßaufnehmer weiters ein erstes plattenförmiges Versteifungselement, das zum Einstellen von Resonanzfrequenzen von Biegeschwingungen des ersten Meßrohrs und des dritten Meßrohrs in einer zur ersten und/oder zweiten Schwingungsebene im wesentlichen senkrechten dritten Schwingungsebene am ersten Meßrohr und am dritten Meßrohr fixiert ist, und zwar jeweils an einem zwischen dem ersten Schwingungserreger und dem ersten Strömungsteiler liegenden Segment des ersten bzw. dritten Meßrohrs, ein zweites plattenförmiges Versteifungselement, das zum Einstellen von Resonanzfrequenzen von Biegeschwingungen des zweiten Meßrohrs und des vierten Meßrohrs in einer zur ersten und/oder zweiten Schwingungsebene im wesentlichen senkrechten vierten Schwingungsebene am zweiten Meßrohr und am vierten Meßrohr fixiert ist, und zwar jeweils an einem zwischen dem ersten Schwingungserreger und dem ersten Strömungsteiler liegenden Segment des zweiten bzw. vierten Meßrohrs, ein drittes plattenförmiges Versteifungselement, das zum Einstellen von Resonanzfrequenzen von Biegeschwingungen des ersten Meßrohrs und des dritten Meßrohrs in der dritten Schwingungsebene am ersten Meßrohr und am dritten Meßrohr fixiert ist, und zwar jeweils an einem zwischen dem ersten Schwingungserreger und dem zweiten Strömungsteiler liegenden Segment des ersten bzw. dritten Meßrohrs, sowie ein viertes plattenförmiges Versteifungselement, das zum Einstellen von Resonanzfrequenzen von Biegeschwingungen des zweiten Meßrohrs und des vierten Meßrohrs in der vierten Schwingungsebene am zweiten Meßrohr und am vierten Meßrohr fixiert ist, und zwar jeweils an einem zwischen dem ersten Schwingungserreger und dem zweiten Strömungsteiler liegenden Segment des zweiten bzw. vierten Meßrohrs, aufweist, und daß das wenigstens eine Sensorelement der Deformationsmeßanordnung auf einem der Versteifungselemente fixiert ist, beispielsweise derart, daß das Sensorelement auf eine Dehnung der mit nämlichem Versteifungselement verbundenen Meßrohre mit einer Änderung seines ohmschen Widerstands reagiert.

Nach einer fünfundreißigsten Ausgestaltung der Erfindung ist ferner vorgesehen, daß der Meßaufnehmer weiters ein erstes plattenförmiges Versteifungselement, das zum Einstellen von Resonanzfrequenzen von Biegeschwingungen des ersten Meßrohrs und des dritten Meßrohrs in einer zur ersten und/oder zweiten Schwingungsebene im wesentlichen senkrechten dritten Schwingungsebene am ersten Meßrohr und am dritten Meßrohr fixiert ist, und zwar jeweils an einem zwischen dem ersten Schwingungserreger und dem ersten Strömungsteiler liegenden Segment des ersten bzw. dritten Meßrohrs, ein zweites plattenförmiges Versteifungselement, das zum Einstellen von Resonanzfrequenzen von Biegeschwingungen des zweiten Meßrohrs und des vierten Meßrohrs in einer zur ersten und/oder zweiten Schwingungsebene im wesentlichen senkrechten vierten Schwingungsebene am zweiten Meßrohr und am vierten Meßrohr fixiert ist, und zwar jeweils an einem zwischen dem ersten Schwingungserreger und dem ersten Strömungsteiler liegenden Segment des zweiten bzw. vierten Meßrohrs, ein drittes plattenförmiges Versteifungselement, das zum Einstellen von Resonanzfrequenzen von Biegeschwingungen des ersten Meßrohrs und des dritten Meßrohrs in der dritten Schwingungsebene am ersten Meßrohr und am dritten Meßrohr fixiert ist, und zwar jeweils an einem zwischen dem ersten Schwingungserreger und dem zweiten Strömungsteiler liegenden Segment des ersten bzw. dritten Meßrohrs, sowie ein viertes plattenförmiges Versteifungselement, das zum Einstellen von Resonanzfrequenzen von Biegeschwingungen des zweiten Meßrohrs und des vierten Meßrohrs in der vierten Schwingungsebene am zweiten Meßrohr und am vierten Meßrohr fixiert ist, und zwar jeweils an einem zwischen dem ersten Schwingungserreger und dem zweiten Strömungsteiler liegenden Segment des zweiten bzw. vierten Meßrohrs, aufweist, und daß die Deformationsmeßanordnung mittels eines einen von einer Verformung des Meßaufnehmers abhängigen ohmschen Widerstand aufweisenden, beispielsweise als Halbleiter-Dehnungsmeßstreifen oder als Metallgitter-Dehnungsmeßstreifen ausgebildeten, ersten Sensorelements und mittels wenigstens eines einen von einer Verformung des Meßaufnehmers abhängigen ohmschen Widerstand aufweisenden, beispielsweise als Halbleiter-Dehnungsmeßstreifen oder als Metallgitter-Dehnungsmeßstreifen ausgebildeten, zweiten Sensorelements gebildet ist, derart daß das erste Sensorelement der Deformationsmeßanordnung auf dem ersten Versteifungselement fixiert ist, etwa derart, daß das erste Sensorelement auf eine Dehnung des ersten und/oder dritten Meßrohrs mit einer Änderung seines ohmschen Widerstands reagiert, und/oder daß das zweite Sensorelement der Deformationsmeßanordnung auf dem zweiten Versteifungselement fixiert ist, insb. derart, daß das zweite Sensorelement auf eine Dehnung des zweiten und/oder vierten Meßrohrs mit einer Änderung seines ohmschen Widerstands reagiert.

Nach einer sechsunddreißigsten Ausgestaltung der Erfindung ist ferner vorgesehen, daß der Meßaufnehmer weiters ein sowohl am ersten Kopplerelement erster Art als auch am dritten Kopplerelement erster Art fixiertes, beispielsweise stab- oder plattenförmiges und/oder zu den Meßrohren parallel verlaufendes, Kopplerverbindungselement aufweist, und daß das wenigstens eine Sensorelement der Deformationsmeßanordnung auf dem Kopplerverbindungselement fixiert ist, etwa derart, daß das Sensorelement auf eine Dehnung eines oder mehrerer der Meßrohre mit einer Änderung seines ohmschen Widerstands reagiert.

Nach einer siebenunddreißigsten Ausgestaltung der Erfindung ist ferner vorgesehen, daß der Meßaufnehmer weiters ein sowohl am ersten Kopplerelement erster Art als auch am dritten Kopplerelement erster Art fixiertes, beispielsweise stab- oder plattenförmiges und/oder zu den Meßrohren parallel verlaufendes, erstes Kopplerverbindungselement sowie ein sowohl am zweiten als auch am vierten Kopplerelement fixiertes, beispielsweise stab- oder plattenförmiges und/oder zu den Meßrohren parallel verlaufendes und/oder zum ersten Kopplerverbindungselement baugleiches, zweites Kopplerverbindungselement aufweist, und daß die Deformationsmeßanordnung mittels eines einen von einer Verformung des Meßaufnehmers abhängigen ohmschen Widerstand aufweisenden, beispielsweise als Halbleiter-Dehnungsmeßstreifen oder als Metallgitter-Dehnungsmeßstreifen ausgebildeten, ersten Sensorelements und mittels wenigstens eines einen von einer Verformung des Meßaufnehmers abhängigen ohmschen Widerstand aufweisenden, beispielsweise als Halbleiter-Dehnungsmeßstreifen oder als Metallgitter-Dehnungsmeßstreifen ausgebildeten, zweiten Sensorelements gebildet ist, derart daß das erste Sensorelement der Deformationsmeßanordnung auf dem ersten Kopplerverbindungselement fixiert ist, etwa derart, daß das erste Sensorelement auf eine Dehnung eines oder mehrerer der Meßrohre mit einer Änderung seines ohmschen Widerstands reagiert, und/oder daß das zweite Sensorelement der Deformationsmeßanordnung auf dem zweiten Kopplerverbindungselement fixiert ist, insb. derart, daß das zweite Sensorelement auf eine Dehnung eines oder mehrerer der Meßrohre mit einer Änderung seines ohmschen Widerstands reagiert.

Ein Grundgedanke der Erfindung besteht darin, anstelle der bei konventionellen Meßaufnehmern großer Nennweite verwendeten zwei parallel durchströmten Meßrohre vier parallel durchströmte gerade Meßrohre zu verwenden, und so einerseits eine optimale Ausnutzung des begrenzten Platzangebotes zu ermöglichen, anderseits einen akzeptablen Druckverlust über einen weiten Meßbereich, insb. auch bei sehr hohen Massendurchflußraten von weit über 2200 t/h, bei nach wie vor sehr hoher Meßgenauigkeit gewährleisten zu können. Dies im besonderen auch in Anwendungen mit betriebgemäß weit schwankendem Temperaturbereich von mehr als 100K Schwankungsbreite und/oder in Anwendung mit starken mechanischen Beanspruchung des Meßaufnehmers, etwa infolge von axialen oder auch asymmetrisch auf den Meßaufnehmer wirkenden Rohrleitungskräften. Darüber hinaus kann der sich aus dem Gesamtquerschnitt der vier Meßrohre ergebende effektive Strömungsquerschnitt des Innenteils im Vergleich zu herkömmlichen nur zwei Meßrohre aufweisenden Meßaufnehmern gleicher nomineller Nennweite und gleicher Leermasse ohne weiteres um mehr als 20% erhöht werden. Ein weiterer Vorteil des erfindungsgemäßen Meßaufnehmers besteht ferner darin, daß überwiegend etablierte Konstruktionskonzepte, wie etwa hinsichtlich der verwendeten Materialien, der Fügetechnik, der Fertigungsabläufe etc., angewendet werden können oder nur geringfügig modifiziert werden müssen, wodurch auch die Herstellkosten insgesamt durchaus vergleichbaren zu denen herkömmlicher Meßaufnehmer sind. Somit wird durch die Erfindung nicht nur eine Möglichkeit geschaffen, vergleichsweise kompakte Meßaufnehmer vom Vibrationstyp auch mit großer nomineller Nennweite von über 150 mm, insb. mit einer Nennweite von größer 250 mm, mit handhabbaren geometrischen Abmessungen und Leermassen zu konstruieren, sondern dieses zudem auch ökonomisch sinnvoll realisieren zu können.

Das erfindungsgemäße Meßsystem ist aufgrund seiner potentiell großen nominellen Nennweite einerseits und seinem relative geringen Druckverlust anderseits besonders zum Messen von strömungsfähigen Medien geeignet, die in einer Rohrleitung mit einem Kaliber von größer 150 mm, insb. von 300 mm oder darüber, geführt sind und zumindest zeitweise mit Massendurchflußraten von mehr als 2200 t/h, insb. auch von mehr als 2500 t/h, strömen, wie es nicht zuletzt auch in Anwendungen zur Messung von Erdöl, Erdgas oder anderen petrochemischen Stoffen durchaus üblich ist.

Die Erfindung sowie weitere vorteilhafte Ausgestaltungen davon werden nachfolgend anhand von Ausführungsbeispielen näher erläutert, die in den Figuren der Zeichnung dargestellt sind. Gleiche Teile sind in allen Figuren mit denselben Bezugszeichen versehen; wenn es die Übersichtlichkeit erfordert oder es anderweitig sinnvoll erscheint, wird auf bereits erwähnte Bezugszeichen in nachfolgenden Figuren verzichtet. Weitere vorteilhafte Ausgestaltungen oder Weiterbildungen, insb. auch Kombinationen zunächst nur einzeln erläuterter Teilaspekte der Erfindung, ergeben sich ferner aus den Figuren der Zeichnung wie auch den Unteransprüchen an sich.

Im einzelnen zeigen:
- Fign. 1, 2: ein, beispielsweise als Coriolis-Durchfluss/Dichte/Viskositäts-Aufnehmer dienendes - hier als In-Line-Meßgerät in Kompaktbauweise ausgebildetes - Meßsystem in perspektivischen, teilweise auch geschnittenen, Seitenansichten;
- Fign. 3a, b: eine Projektion des Meßsystems gemäß Fig. 1 in zwei verschiedenen Seitenansichten;
- Fig. 4: in perspektivischer Seitenansicht einen Meßaufnehmer vom Vibrationstyp, als Komponente eines Meßsystems gemäß Fig. 1;
- Fign. 5a, b: eine Projektion des Meßaufnehmers gemäß Fig. 4 in zwei verschiedenen Seitenansichten;
- Fign. 6a, b: Projektionen eines Innenteils des Meßaufnehmers gemäß Fig. 4 in zwei verschiedenen Seitenansichten;
- Fig. 7: in perspektivischer Seitenansicht eine Weiterbildung des Meßaufnehmers gemäß Fig. 4, als Komponente eines Meßsystems gemäß Fig. 1;
- Fign. 8a, b: eine Projektion des Meßaufnehmers gemäß Fig. 7 in zwei verschiedenen Seitenansichten; und
- Fig. 9: eine Seitenansicht einer Weitebildung eines Innenteils für einen Meßaufnehmer gemäß Fig. 4.

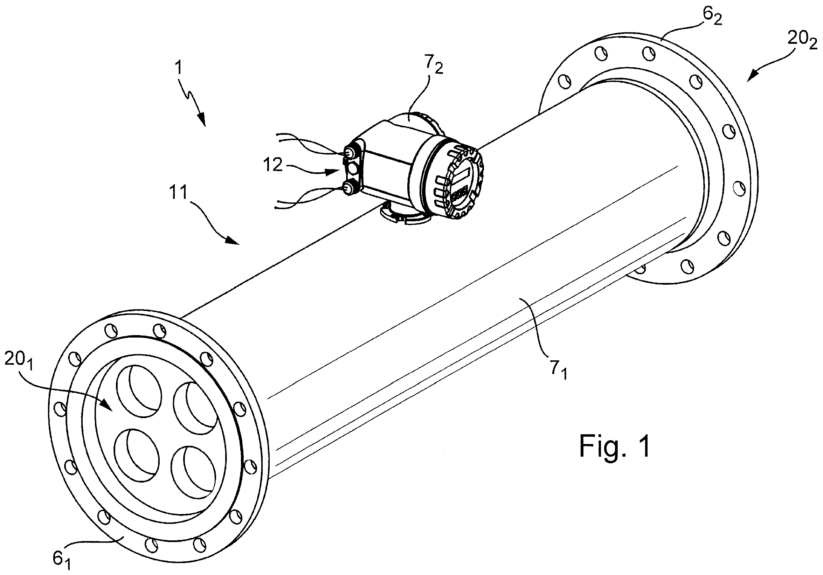

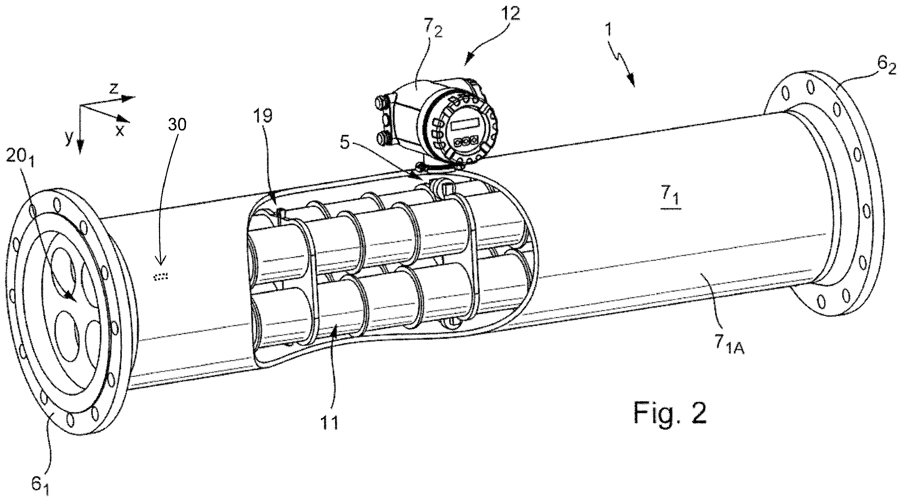

In den Fig. 1, 2 ist ein, insb. als Coriolis-Massedurchfluß- und/oder Dichte-Meßgerät ausgebildetes, Meßsystem 1 schematisch dargestellt, das dazu dient, einen Massendurchfluß m eines in einer - hier aus Übersichtlichkeitsgründen nicht dargestellten - Rohrleitung strömenden Mediums zu erfassen und in einen diesen Massendurchfluß momentan repräsentierenden Massendurchfluß-Meßwert abzubilden. Medium kann praktisch jeder strömungsfähige Stoff sein, beispielsweise ein Pulver, eine Flüssigkeit, ein Gas, ein Dampf oder dergleichen. Alternativ oder in Ergänzung kann das Meßsystem 1 ggf. auch dazu verwendet werden eine Dichte ρ und/oder eine Viskosität η des Mediums zu messen. Im besonderen ist das - hier als In-Line-Meßgerät in Kompaktbauweise ausgebildete - Meßsystem 1 dafür vorgesehen, solche Medien, wie z.B. Erdöl, Erdgas oder andere petrochemische Stoffe, zu messen, die in einer Rohrleitung mit einem Kaliber von größer als 250 mm, insb. einem Kaliber von 300 mm oder darüber, strömen. Im besonderen ist das Meßsystem ferner dafür vorgesehen strömende Medien der vorgenannten Art zu messen, die mit einer Massendurchflußrate von größer als 2200 t/h, insb. von größer 2500 t/h, strömen gelassen sind.

Das Meßsystem 1 umfaßt dafür einen im Betrieb vom zu messenden Medium durchströmten Meßaufnehmer 11 vom Vibrationstyp sowie eine mit dem Meßaufnehmer 11 elektrisch verbundene - hier nicht im einzelnen, sondern lediglich als schematisch als Schaltungsblock dargestellte - Umformer-Elektronik 12. In vorteilhafter Weise ist die Umformer-Elektronik 12 so ausgelegt, daß sie im Betrieb des Meßsystems 1 mit einer diesem übergeordneten Meßwertverarbeitungseinheit, beispielsweise einer speicherprogrammierbaren Steuerung (SPS), einem Personalcomputer und/oder einer Workstation, via Datenübertragungssystem, beispielsweise einem leitungsgebundenen Feldbussystem und/oder drahtlos per Funk, Meß- und/oder andere Betriebsdaten austauschen kann. Des weiteren ist die Umformer-Elektronik 12 so ausgelegt, daß sie von einer externen Energieversorgung, beispielsweise auch über das vorgenannte Feldbussystem, gespeist werden kann. Für den Fall, daß das Meßsystem 1 für eine Ankopplung an ein Feldbus- oder ein anderes Kommunikationssystem vorgesehen ist, weist die, insb. programmierbare, Umformer-Elektronik 12 zu dem eine entsprechende Kommunikations-Schnittstelle für eine Datenkommunikation auf, z.B. zum Senden der Meßdaten an die bereits erwähnte speicherprogrammierbare Steuerung oder ein übergeordnetes Prozeßleitsystem, auf.

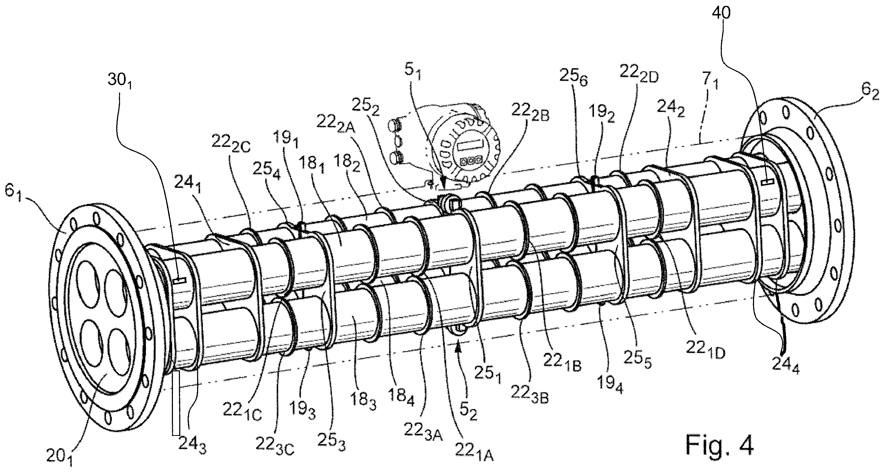

In den Fig. 4, 5a, 5b, 6a, 6b, 7, 8a, 8b sind in unterschiedlichen Darstellungen Ausführungsbeispiele für einen für das Meßsystem 1 geeigneten, insb. als Coriolis-Massedurchfluss-, als Dichte- und/oder als Viskositäts-Aufnehmer dienenden, Meßaufnehmer 11 vom Vibrationstyp gezeigt, welcher Meßaufnehmer 11 im Betrieb in den Verlauf einer von einem zu messenden, beispielsweise pulvrigen, flüssigen, gasförmigen oder dampfförmigen, Medium durchströmten - aus Gründen der Übersichtlichkeit hier nicht dargestellten - Rohrleitung eingesetzt ist. Der Meßaufnehmer 11 dient, wie bereits erwähnt, dazu, in einem hindurchströmenden Medium solche mechanische Reaktionskräfte, insb. vom Massendurchfluß abhängige Corioliskräfte, von der Mediumsdichte abhängige Trägheitskräfte und/oder von der Mediumsviskosität abhängige Reibungskräfte, zu erzeugen, die meßbar, insb. sensorisch erfaßbar, auf den Meßaufnehmer zurückwirken. Abgeleitet von diesen das Medium beschreibenden Reaktionskräften können mittels in der Umformer-Elektronik entsprechend implementierten Auswerte-Verfahren in der dem Fachmann bekannten Weise z.B. der Massendurchfluß, die Dichte und/oder die Viskosität des Mediums gemessen werden.

Der Meßaufnehmer 11 weist ein u.a. auch als Traggestell dienendes - hier im wesentlichen rohrförmiges, außen kreiszylindrisches - Aufnehmer-Gehäuse 7₁, in dem weitere, dem Erfassen der wenigstens einen Meßgröße dienende Komponenten des Meßaufnehmers 11 vor äußeren Umwelteinflüssen geschützt untergebracht sind. Im hier gezeigten Ausführungsbeispiel ist zumindest ein Mittelsegment des Aufnehmer-Gehäuses 7₁ mittels eines geraden, insb. kreiszylindrischen, Rohres gebildet, so daß zur Fertigung des Aufnehmer-Gehäuses beispielsweise auch kostengünstige, geschweißte oder gegossenen Standardrohre, beispielsweise aus Stahlguß oder geschmiedetem Stahl, verwendet werden können.

Ein einlaßseitiges erstes Gehäuseende des Aufnehmer-Gehäuses 7₁ ist mittels eines einlaßseitigen ersten Strömungsteilers 20₁ und ein auslaßseitiges zweites Gehäuseende des Aufnehmer-Gehäuses 7₁ ist mittels auslaßseitigen zweiten Strömungsteilers 20₂ gebildet. Jeder der beiden, insoweit als integraler Bestandteil des Gehäuses ausgebildeten, Strömungsteiler 20₁, 20₂ weist genau vier jeweils voneinander beabstandeten, beispielsweise kreiszylindrische oder kegelförmige bzw. jeweils als Innenkonus ausgebildete, Strömungsöffnungen 20_{1A}, 20_{1B}, 20_{1C}, 20_{1D} bzw. 20_{2A}, 20_{2B}, 20_{2C}, 20_{2D} auf.

Darüberhinaus ist jeder der, beispielsweise aus Stahl gefertigten, Strömungsteiler 20₁, 20₂ jeweils mit einem, beispielsweise aus Stahl gefertigten, Flansch 6₁ bzw. 6₂ zum Anschließen des Meßaufnehmers 11 an ein dem Zuführen von Medium zum Meßaufnehmer dienendes Rohrsegment der Rohrleitung bzw. an ein dem Abführen von Medium vom Meßaufnehmer dienendes Rohrsegment der erwähnten Rohrleitung versehen. Jeder der beiden Flansche 6₁, 6₂ weist gemäß einer Ausgestaltung der Erfindung eine Masse von mehr als 50 kg, insb. von mehr als 60 kg und/oder weniger als 100 kg, auf. Zum leckagefreien, insb. fluiddichten, Verbinden des Meßaufnehmers mit dem jeweils korrespondierenden Rohrsegment der Rohrleitung weist jeder der Flansche ferner jeweils eine entsprechende, möglichst plane Dichtfläche 6_{1A} bzw. 6_{2A} auf. Ein Abstand zwischen den beiden Dichtflächen 6_{1A}, 6_{2A} beider Flansche definiert somit praktisch eine Einbaulänge, L₁₁, des Meßaufnehmers 11. Die Flansche sind, insb. hinsichtlich ihres Innendurchmessers, ihrer jeweiligen Dichtfläche sowie den der Aufnahme entsprechender Verbindungsbolzen dienenden Flanschbohrungen, entsprechend der für den Meßaufnehmer 11 vorgesehenen nominelle Nennweite D₁₁ sowie den dafür ggf. einschlägigen Industrienormen dimensioniert, die einem Kaliber der Rohrleitung, in deren Verlauf der Meßaufnehmer einzusetzen ist, entspricht.

Infolge der für den Meßaufnehmer letztlich angestrebten großen Nennweite beträgt dessen Einbaulänge L₁₁ gemäß einer Ausgestaltung der Erfindung mehr als 1200mm. Ferner ist aber vorgesehen, die Einbaulänge des Meßaufnehmers 11 möglichst klein, insb. kleiner als 3000mm zu halten. Die Flansche 6₁, 6₂ können, wie auch aus Fig. 4 ohne weiteres ersichtlich und wie bei derartigen Meßaufnehmer durchaus üblich, dafür möglichst nah an den Strömungsöffnungen der Strömungsteiler 20₁, 20₂ angeordnet sein, um so einen möglichst kurzen Vor- bzw. Auslaufbereich in den Strömungsteilern zu schaffen und somit insgesamt eine möglichst kurze Einbaulänge L₁₁ des Meßaufnehmers, insb. von weniger als 3000 mm, zu schaffen. Für einen möglichst kompakten Meßaufnehmer mit einem auch bei angestrebt hohen Massendurchflußraten von über 2200 t/h sind nach einer anderen Ausgestaltung der Erfindung die Einbaulänge und die nominelle Nennweite des Meßaufnehmers aufeinander abgestimmt so bemessen, daß ein Nennweite-zu Einbaulänge-Verhältnis D₁₁/ L₁₁ des Meßaufnehmers, definiert durch ein Verhältnis der nominellen Nennweite D₁₁ des Meßaufnehmers zur Einbaulänge L₁₁ des Meßaufnehmers kleiner als 0.3, insb. kleiner als 0.2 und/oder größer als 0.1, ist.

In einer weiteren Ausgestaltung des Meßaufnehmers umfaßt das Aufnehmer-Gehäuse ein im wesentlichen rohrförmiges Mittelsegment. Ferner ist vorgesehen, das Aufnehmer-Gehäuse so zu dimensionieren, daß ein durch durch ein Verhältnis des größten Gehäuse-Innendurchmessers zur nominellen Nennweite des Meßaufnehmers definiertes Gehäuse-Innendurchmesser-zu-Nennweite-Verhältnis des Meßaufnehmers, zwar größer als 0.9, jedoch kleiner als 1.5, möglichst aber kleiner als 1.2 ist.

Bei dem hier gezeigten Ausführungsbeispiel schließen sich ein- bzw. auslaßseitig an das Mittelsegment ferner ebenfalls rohrförmige Endsegmente des Aufnehmergehäuses an. Für den im Ausführungsbeispiel gezeigten Fall, daß das Mittelsegment und die beiden Endsegmente wie auch die mit dem jeweiligen Flansch verbundenen Strömungsteiler im Vor- bzw. Auslaufbereich jeweils den gleichen Innendurchmesser aufweisen, kann das Aufnehmer-Gehäuse in vorteilhafter Weise auch mittels eines einstückigen, beispielsweise gegossenen oder geschmiedeten, Rohres gebildet werden, an dessen Enden die Flansche angeformt oder angeschweißt sind, und bei dem die Strömungsteiler mittels, insb. von den Flanschen etwas beabstandet, an die Innenwand orbital und/oder mittels Laser angeschweißten, die Strömungsöffnungen aufweisenden Platten gebildet sind. Insbesondere für den Fall, daß das erwähnte Gehäuse-Innenendurchmesser-zu-Nennweite-Verhältnis des Meßaufnehmers gleich eins gewählt ist, kann für Fertigung des Aufnehmer-Gehäuses beispielsweise ein der anzuschließenden Rohrleitung hinsichtlich Kaliber, Wandstärke und Material entsprechendes und insoweit auch hinsichtlich des erlaubten Betriebsdrucks entsprechend angepaßtes Rohr mit zur gewählten Meßrohrlänge entsprechend passender Länge verwendet werden. Zur Vereinfachung des Transports des Meßaufnehmers bzw. des gesamten damit gebildeten Meßsystems können ferner, wie beispielsweise auch in der eingangs erwähnten US-B 07350421 vorgeschlagen, einlaßseitig und auslaßseitig am außen am Aufnehmer-Gehäuse fixierte eine Transport-Öse vorgesehen sein.

Zum Führen des zumindest zeitweise durch Rohrleitung und Meßaufnehmer strömenden Mediums umfaßt der erfindungsgemäße Meßaufnehmer ferner genau vier im Aufnehmer-Gehäuse 10 schwingfähig gehalterte gerade, insb. zueinander parallele und/oder gleichlange, Meßrohre 18₁, 18₂, 18₃, 18₄, die im Betrieb jeweils mit der Rohrleitung kommunizieren und zumindest zeitweise in wenigstens einem für Ermittlung der physikalischen Meßgröße geeigneten Schwingungsmode, dem sogenannten Nutz-Mode, vibrieren gelassen werden. Im besonderen eignet sich als Nutz-Mode ein jedem der Meßrohre 18₁, 18₂, 18₃ bzw. 18₄ naturgemäß innewohnende Biegeschwingungsgrundmode, der bei minimaler Biegeschwingungs-Resonanzfrequenz, f₁₈₁, f₁₈₂, f₁₈₃ bzw. f₁₈₄, genau einen Schwingungsbauch aufweist.

Von den vier - hier im wesentlichen kreiszylindrischen, gleichlangen und zueinander sowie zum oben erwähnten Mittelrohrsegment des Aufnehmergehäuses parallelen - Meßrohren münden ein erstes Meßrohr 18₁ mit einem einlaßseitigen ersten Meßrohrende in eine erste Strömungsöffnung 20_{1A} des ersten Strömungsteilers 20₁ und mit einem auslaßseitigen zweiten Meßrohrende in eine erste Strömungsöffnung 20_{2A} des zweiten Strömungsteilers 20₂, ein zweites Meßrohr 18₂ mit einem einlaßseitigen ersten Meßrohrende in eine zweite Strömungsöffnung 20_{1B} des ersten Strömungsteilers 20₁ und mit einem auslaßseitigen zweiten Meßrohrende in eine zweite Strömungsöffnung 20_{2B} des zweiten Strömungsteilers 20₂, ein drittes Meßrohr 18₃ mit einem einlaßseitigen ersten Meßrohrende in eine dritte Strömungsöffnung 20_{1C} des ersten Strömungsteilers 20₁ und mit einem auslaßseitigen zweiten Meßrohrende in eine dritte Strömungsöffnung 20_{2C} des zweiten Strömungsteilers 20₂ und ein viertes Meßrohr 18₄ mit einem einlaßseitigen ersten Meßrohrende in eine vierte Strömungsöffnung 20_{1D} des ersten Strömungsteilers 20₁ und mit einem auslaßseitigen zweiten Meßrohrende in eine vierte Strömungsöffnung 20_{2D} des zweiten Strömungsteilers 20₂. Die vier Meßrohre 18₁, 18₂, 18₃, 18₄ sind somit unter Bildung strömungstechnisch parallel geschalteter Strömungspfade an die, insb. baugleichen, Strömungsteiler 20₁, 20₂ angeschlossen, und zwar in einer Vibrationen, insb. Biegeschwingungen, der Meßrohre relativ zueinander wie auch relativ zum Aufnehmergehäuse ermöglichenden Weise. Ferner ist vorgesehen, daß die vier Meßrohre 18₁, 18₂, 18₃, 18₄ lediglich mittels nämlicher Strömungsteiler 20₁, 20₂ im Aufnehmer-Gehäuse 7₁ gehaltert sind.

Die Meßrohre 18₁, 18₂, 18₃, 18₄ bzw. ein damit gebildete Innenteil des Meßaufnehmers 11 sind, wie aus der Zusammenschau der Fign. 1, 2 und 4 ohne weiteres ersichtlich und wie bei derartigen Meßaufnehmern auch üblich, vom Aufnehmer-Gehäuse 7₁ dabei praktisch vollständig umhüllt. Das Aufnehmer-Gehäuse 7₁ dient insoweit also nicht nur als Tragegestell oder Halterung der Meßrohre 18₁, 18₂, 18₃, 18₄ sondern darüber hinaus auch dazu, diese, wie auch weitere innerhalb des Aufnehmer-Gehäuse 7₁ plazierte Komponenten des Meßaufnehmers, vor äußeren Umwelteinflüssen, wie z.B. Staub oder Spritzwasser, zu schützen. Überdies kann das Aufnehmer-Gehäuse 7₁ ferner auch so ausgeführt und so bemessen sein, daß es bei allfälligen Schäden an einem oder mehreren der Meßrohre, z.B. durch Rißbildung oder Bersten, ausströmendes Medium bis zu einem geforderten maximalen Überdruck im Inneren des Aufnehmer-Gehäuses 7₁ möglichst lange vollständig zurückzuhalten kann, wobei solche kritischen Zustand, wie beispielsweise auch in der eingangs erwähnten US-B 73 92 709 erwähnt, mittels entsprechenden Drucksensoren und/oder anhand von der erwähnten Umformer-Elektronik im Betrieb intern erzeugten Betriebsparametern erfaßt und signalisiert werden können. Als Material für das Aufnehmer-Gehäuse 7₁ können demnach im besondern Stähle, wie etwa Baustahl bzw. rostfreier Stahl, oder auch andere geeignete bzw. üblicherweise hierfür geeignete hochfeste Werkstoffe verwendet werden.

Nach einer Ausgestaltung der Erfindung sind die vier Meßrohre 18₁, 18₂, 18₃, 18₄ ferner so ausgebildet und so im Meßaufnehmer 11 eingebaut, daß zumindest die minimalen Biegeschwingungs-Resonanzfrequenzen f₁₈₁, f₁₈₂ des ersten und zweiten Meßrohrs 18₁, 18₂ im wesentlichen gleich sind und zumindest die minimalen Biegeschwingungs-Resonanzfrequenzen f₁₈₃, f₁₈₄ des dritten und vierten Meßrohrs 18₃, 18₄ im wesentlichen gleich sind.

Nach einer weiteren Ausgestaltung der Erfindung sind zumindest das erste und das zweite Meßrohr 18₁, 18₂ hinsichtlich eines Materials, aus dem deren Rohrwände bestehen, und/oder hinsichtlich ihrer geometrischen Rohr-Abmessungen, insb. einer Rohrlänge, einer Rohrwandstärke, eines Rohr-Außendurchmessers und/oder eines Kalibers, baugleich ausgeführt. Ferner sind auch zumindest das dritte und das vierte Meßrohr 18₃, 18₄ hinsichtlich eines Materials, aus dem deren Rohrwände bestehen, und/oder hinsichtlich ihrer geometrischen Rohr-Abmessungen, insb. einer Rohrlänge, einer Rohrwandstärke, eines Rohr-Außendurchmessers und/oder eines Kalibers, baugleich, so daß im Ergebnis die vier Meßrohre 18₁, 18₂, 18₃, 18₄ zumindest paarweise im wesentlichen baugleich ausgebildet sind. Nach einer weiteren Ausgestaltung der Erfindung ist hierbei ferner vorgesehen, sowohl das dritte Meßrohr als auch das vierte Meßrohr so auszubilden, daß beide Meßrohre hinsichtlich ihrer jeweiligen geometrischen Rohr-Abmessungen, insb. einer Rohrlänge, einer Rohrwandstärke, eines Rohr-Außendurchmessers und/oder eines Kalibers, verschieden sind vom ersten Meßrohr und vom zweiten Meßrohr, insb. derart, daß die minimalen Biegeschwingungs-Resonanzfrequenzen der vier Meßrohre lediglich paarweise gleich sind. Durch die somit geschaffene Symmetriebrechung bei den vier Meßrohren 18₁, 18₂, 18₃, 18₄ können u.a. die Empfindlichkeit, das Schwingungsverhalten, insb. die mechanischen Eigenfrequenzen, und/oder die Querempfindlichkeit auf die primäre Messung beeinflussende Störgrößen, wie etwa eine Temperatur- oder Druckverteilung, die Beladung des Medium mit Fremdstoffen etc., der beiden insoweit voneinander verschiedenen zwei Meßrohrpaare 18₁, 18₂ bzw. 18₃, 18₄ gezielt aufeinander abgestimmt und somit eine verbesserte Diagnose des Meßaufnehmers im Betrieb ermöglicht werden. Selbstverständlich können die die vier Meßrohre 18₁, 18₂, 18₃, 18₄, falls erforderlich, hinsichtlich eines Materials, aus dem deren Rohrwände bestehen, und/oder hinsichtlich ihrer geometrischen Rohr-Abmessungen, insb. einer Rohrlänge, einer Rohrwandstärke, eines Rohr-Außendurchmessers und/oder eines Kalibers, aber auch baugleich realisiert sein, insb. derart, daß im Ergebnis die minimalen Biegeschwingungs-Resonanzfrequenzen aller vier Meßrohre 18₁, 18₂, 18₃, 18₄ im wesentlichen gleich sind.

Als Material für die Rohrwände der Meßrohre wiederum eignet sich im besonderen Titan, Zirkonium oder Tantal. Darüber hinaus kann als Material für die vier Meßrohre 18₁, 18₂, 18₃, 18₄ aber auch praktisch jeder andere dafür üblicherweise verwendete oder zumindest geeignete Werkstoff dienen, insb. solche mit einem möglichst kleinen thermischen Ausdehnungskoeffizient und einer möglichst hohen Streckgrenze. Für die meisten Anwendungen der industriellen Meßtechnik, insb. auch in der petrochemischen Industrie, würden daher auch Meßrohre aus rostfreiem Stahl, beispielsweise auch Duplexstahl oder Superduplexstahl, den Anforderungen hinsichtlich der mechanischen Festigkeit, der chemischen Beständigkeit sowie den thermischen Anforderungen genügen, so daß in zahlreichen Anwendungsfällen das Aufnehmer-Gehäuse 7₁, die Strömungsteiler 20₁, 20₂ wie auch die Rohrwände der Meßrohre 18₁, 18₂, 18₃, 18₄ jeweils aus Stahl von jeweils ausreichend hoher Güte bestehen können, was insb. im Hinblick auf die Material- und Fertigungskosten wie auch das thermisch bedingte Dilatationsverhalten des Meßaufnehmers 11 im Betrieb von Vorteil sein kann.

Gemäß einer weiteren vorteilhaften Ausgestaltung der Erfindung sind die Strömungsöffnungen des ersten Strömungsteilers 20₁ ferner so angeordnet, daß jene gedachten Flächenschwerpunkte, die zu den in einer gemeinsamen gedachten, senkrecht zu einer, insb. zu einer Hauptströmungsachse des Meßaufnehmers parallelen, Längsachse L des Meßaufnehmers verlaufenden Schnittebene des ersten Strömungsteilers liegen - hier kreisförmigen - Querschnittsflächen der Strömungsöffnungen des ersten Strömungsteilers gehören, die Eckpunkte eines gedachten Quadrats bilden. Ferner sind auch die Strömungsöffnungen des zweiten Strömungsteilers 20₂ so angeordnet, daß zu - hier ebenfalls kreisförmigen - Querschnittsflächen der Strömungsöffnungen des zweiten Strömungsteilers 20₂ zugehörige gedachte Flächenschwerpunkte die Eckpunkte eines gedachten Quadrats bilden, wobei nämliche Querschnittsflächen wiederum in einer gemeinsamen gedachten, senkrecht zur erwähnten Längsachse L des Meßaufnehmers verlaufenden Schnittebene des zweiten Strömungsteilers liegen. Im Ergebnis dessen bildet eine Einhüllende der vier Meßrohre 18₁, 18₂, 18₃, 18₄ praktisch einen geraden quaderähnlichen Körper mit einer eine vierzählige Symmetrie aufweisenden, quadratähnlichen Grundfläche, wodurch der Platzbedarf des mittels der vier Meßrohre 18₁, 18₂, 18₃, 18₄ gebildeten Innenteils in einer der Kompaktheit des Meßaufnehmers 11 insgesamt förderlichen Weise minimiert werden kann.

Nach einer weiteren Ausgestaltung der Erfindung ist jedes der Meßrohre ferner so im Meßaufnehmer angeordnet, daß ein kleinster seitlicher Abstand jedes der vier - hier gleichlangen - Meßrohre von einer Gehäuseseitenwand des Aufnehmer-Gehäuses jeweils größer als Null, insb. aber größer als 3 mm und/oder größer als ein Doppeltes einer jeweiligen Rohrwandstärke, ist bzw. daß ein kleinster seitlicher Abstand zwischen zwei benachbarten Meßrohren jeweils größer als 3 mm und/oder größer als die Summe von deren jeweiligen Rohrwandstärken ist. Dementsprechend ist ferner jede der Strömungsöffnungen so angeordnet, daß ein kleinster seitlicher Abstand jeder der Strömungsöffnungen von einer Gehäuseseitenwand des Aufnehmer-Gehäuses 7₁ jeweils größer als Null, insb. größer als 3 mm und/oder größer als ein Doppeltes einer kleinsten Rohrwandstärke der Meßrohre 18₁, 18₂, 18₃, 18₄, ist bzw. daß ein kleinster seitlicher Abstand zwischen den Strömungsöffnungen größer als 3 mm und/oder größer als ein Doppeltes einer kleinsten Rohrwandstärke der Meßrohre 18₁, 18₂, 18₃, 18₄ ist. Dafür sind gemäß einer weiteren Ausgestaltung der Erfindung die vier Meßohre 18₁, 18₂, 18₃, 18₄ und das Aufnehmergehäuse 7₁ aufeinander abgestimmt so bemessen, daß ein Gehäuse-zu-Meßrohr-Innendurchmesser-Verhältnis des Meßaufnehmers, definiert durch ein Verhältnis des größten Gehäuse-Innendurchmessers zu einem Kaliber zumindest des ersten Meßrohrs größer als 3, insb. größer als 4 und/oder kleiner als 5, ist.

Wie bereits eingangs erwähnt, werden beim Meßaufnehmer 11 die für die Messung erforderlichen Reaktionskräfte im jeweils zu messenden Medium durch das Schwingenlassen der Meßrohre 18₁, 18₂, 18₃, 18₄ im sogenannten Nutzmode bewirkt. Dafür umfaßt der Meßaufnehmer ferner eine mittels wenigstens eines auf die Meßrohre 18₁, 18₂, 18₃, 18₄ einwirkenden elektro-mechanischen, beispielsweise elektro-dynamischen, Schwingungserregers gebildete Erregeranordnung 5, die dazu dient jedes der Meßrohre betriebsgemäß zumindest zeitweise in für die konkrete Messung jeweils geeignete Schwingungen, insb. von Biegeschwingungen, im sogenannten Nutzmode mit jeweils für die Erzeugung und die Erfassung der oben genannten Reaktionskräfte im Medium ausreichend großen Schwingungsamplitude zu versetzen bzw. diese Nutzschwingungen aufrechtzuerhalten. Der wenigstens eine Schwingungserreger dient hierbei im besonderen dazu, eine, von einer entsprechenden Treiberschaltung z.B. des oben genannten Coriolis-Massedurchflußmessers eingespeiste, elektrische Erregerleistung P_{exc} in solche, z.B. pulsierenden oder harmonischen, Erregerkräfte F_{exc} umzuwandeln, die möglichst gleichzeitig, gleichmäßig jedoch gegensinnig auf die Meßrohre einwirken. Die Erregerkräfte F_{exc} können in dem Fachmann an und für sich bekannter Weise z.B. mittels eines in der bereits erwähnten Treiberschaltung vorgesehenen Strom- und/ oder Spannungs-Regelers, hinsichtlich ihrer Amplitude und, z.B. mittels einer ebenfalls in Treiberschaltung vorgesehenen Phasen-Regelschleife (PLL), hinsichtlich ihrer Frequenz eingestellt werden, vgl. hierzu beispielsweise auch die US-A 48 01 897 oder die US-B 63 11 136.

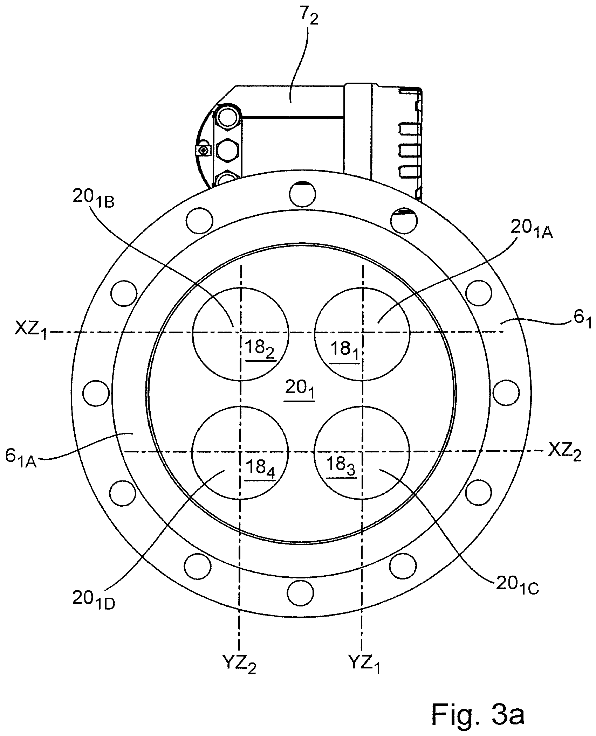

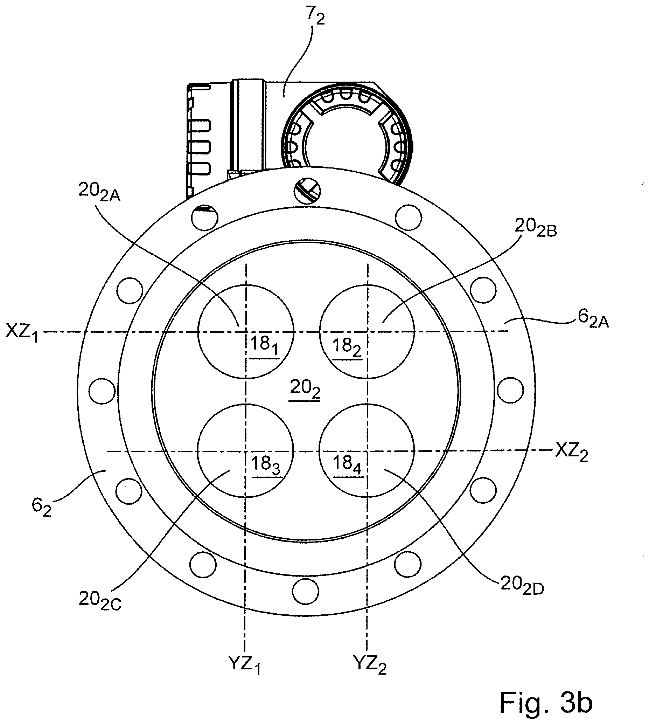

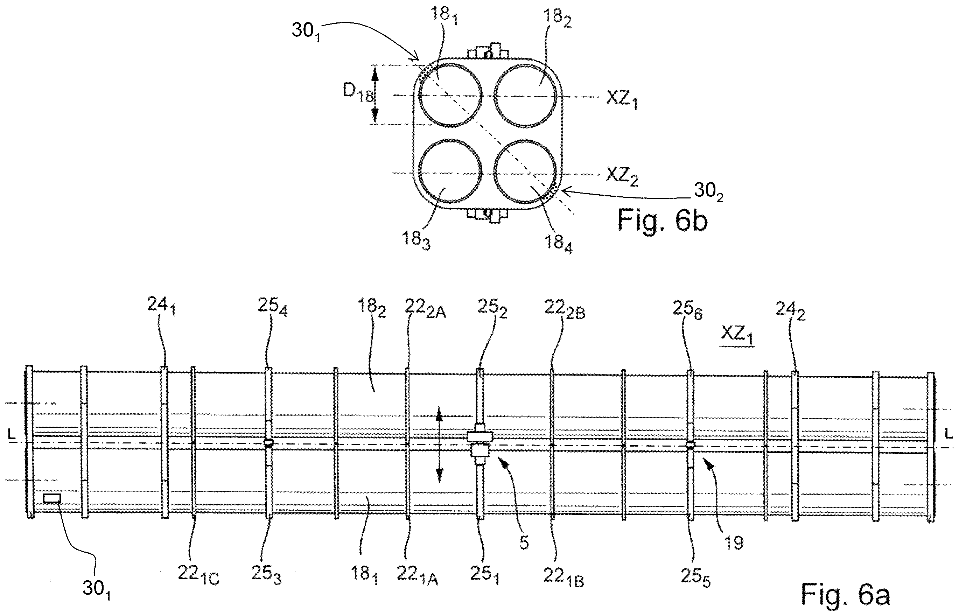

Infolge von durch die zu Schwingungen im Nutzmode angeregten Meßrohre hindurchströmendem Medium werden im Medium Corioliskräfte induziert, die wiederum eine zusätzliche, höheren Schwingungsmoden der Meßrohre, dem sogenannten Coriolismode, entsprechende Verformungen der Meßrohre bewirken. Beispielsweise können die Meßrohre 18₁, 18₂, 18₃, 18₄ im Betrieb von der daran gehalterten elektro-mechanischen Erregeranordnung zu Biegeschwingungen, insb. auf einer momentanen mechanischen Eigenfrequenz des mittels der vier Meßrohre 18₁, 18₂, 18₃, 18₄ gebildeten Innenteils, angeregt werden, bei denen sie - zumindest überwiegend - in einer jeweiligen Schwingungsebene lateral ausgelenkt und, wie aus der Zusammenschau der Fign. 3a, 3b bzw. 6a, 6b ohne weiteres ersichtlich, paarweise in einer gemeinsamen Schwingungsebene XZ₁ bzw. XZ₂ zueinander im wesentlichen gegengleich schwingen gelassen werden. Dies im besondern derart, daß von jedem der Meßrohre 18₁, 18₂, 18₃, 18₄ im Betrieb zeitgleich ausgeführten Vibrationen zumindest zeitweise und/oder zumindest anteilig jeweils als Biegeschwingungen um eine das erste und das jeweils zugehörige zweite Meßrohrende des jeweiligen Meßrohrs verbindende gedachte Meßrohr-Längsachse ausgebildet sind, wobei die vier Meßrohr-Längsachsen im hier gezeigten Ausführungsbeispiel mit vier zueinander parallelen Meßrohre 18₁, 18₂, 18₃, 18₄ gleichermaßen zueinander parallel verlaufen, wie die Meßrohre 18₁, 18₂, 18₃, 18₄, und im übrigen auch im wesentlichen parallel zu einer die beiden Strömungsteiler imaginär verbindenden und durch einen Massenschwerpunkt des Meßaufnehmers gedachten Längsachse L des gesamten Meßaufnehmers sind. Anders gesagt, können die Meßrohre, wie bei Meßaufnehmern vom Vibrationstyp durchaus üblich, jeweils zumindest abschnittsweise in einem Biegeschwingungsmode nach der Art einer beidseitig eingespannten Saite schwingen gelassen werden. Dementsprechend werden gemäß einer weiteren Ausgestaltung das erste und zweite Meßrohr 18₁, 18₂ jeweils in solche Biegeschwingungen versetzt, die in einer gemeinsamen ersten Schwingungsebene XZ₁ liegen und insoweit im wesentlichen koplanar ausgebildet sind. Ferner ist vorgesehen das dritte und vierte Meßrohr 18₃, 18₄ gleichermaßen in einer gemeinsamen, insb. zur ersten Schwingungsebene XZ₁ im wesentlichen parallelen, zweiten Schwingungsebene XZ₂ zueinander gegengleich schwingen zu lassen, vgl. hierzu auch Fign. 6a, 6b.

Gemäß einer weiteren Ausgestaltung der Erfindung sind die Meßrohre 18₁, 18₂, 18₃, 18₄ mittels der Erregeranordnung 5 im Betrieb zumindest anteilig, insb. überwiegend, zu Biegeschwingungen angeregt, die eine Biegeschwingungsfrequenz aufweisen, die in etwa gleich einer momentanen mechanischen Resonanzfrequenz des die vier Meßrohre 18₁, 18₂, 18₃, 18₄ umfassenden Innenteils ist oder die zumindest in der Nähe einer solchen Eigen- oder Resonanzfrequenz liegt. Die momentanen mechanischen Biegeschwingungsresonanzfrequenzen sind dabei bekanntlich in besonderem Maße von Größe, Form und Material der Meßrohre 18₁, 18₂, 18₃, 18₄ wie auch von einer momentanen Dichte des durch die Meßrohre hindurchströmenden Mediums abhängig und kann insoweit im Betrieb des Meßaufnehmers innerhalb eines durchaus einige Kilohertz breiten Nutz-Frequenzbandes veränderlich sein. Bei Anregung der Meßrohre auf Biegeschwingungsresonanzfrequenz kann einerseits anhand der momentan angeregten Schwingungsfrequenz eine mittlere Dichte des durch die vier Meßrohre momentane strömenden Mediums leicht ermittelt werden. Anderseits kann so auch die für die Aufrechterhaltung der im Nutzmode angeregten Schwingungen momentan erforderliche elektrische Leistung minimiert werden. Im besonderen werden die vier Meßrohre 18₁, 18₂, 18₃, 18₄, angetrieben von der Erregeranordnung, ferner zumindest zeitweise mit im wesentlichen gleicher Schwingungsfrequenz, insb. auf einer gemeinsamen natürlichen mechanischen Eigenfrequenz des Innenteils, schwingen gelassen. Darüber hinaus ist vorgesehen die im wesentlichen frequenzgleich schwingen gelassenen Meßrohre 18₁, 18₂, 18₃, 18₄ so anzuregen, daß zumindest bei nicht strömendem Medium das erste und dritte Meßrohr 18₁, 18₃ zueinander im wesentlichen synchron schwingen, d.h. mit im wesentlichen gleicher Schwingungsform, im wesentlichen gleicher Phasenlage und etwa gleicher Schwingungsamplitude. In dazu analoger Weise werden bei dieser Ausgestaltung der Erfindung auch das zweite und vierte Meßrohr 18₂, 18₄ zueinander im wesentlichen synchron schwingen gelassen.

Die Erregeranordnung ist gemäß einer Ausgestaltung der Erfindung derart ausgebildet, daß damit das erste Meßrohr 18₁ und das zweite Meßrohr 18₂ im Betrieb zu gegengleichen Biegeschwingungen in der gemeinsamen ersten Schwingungsebene XZ₁ und das dritte Meßrohr 18₃ und das vierte Meßrohr 18₄ im Betrieb gegengleiche Biegeschwingungen in der gemeinsamen, insb. zur ersten Schwingungsebene XZ₁ im wesentlichen parallelen, zweiten Schwingungsebene XZ₂ anregbar sind. Gemäß einer weiteren Ausgestaltung der Erfindung ist die Erregeranordnung 5 dafür mittels eines, insb. elektrodynamischen und/oder Schwingungen des ersten Meßrohrs 18₁ relativ zum zweiten Meßrohr 18₂ differentiell anregenden, ersten Schwingungserregers 5₁ gebildet.

Ferner ist vorgesehen, daß als erster Schwingungserreger 5₁ ein ein simultan, insb. differentiell, auf wenigstens zwei der Meßrohre 18₁, 18₂, 18₃, 18₄ wirkender Schwingungserreger vom elektrodynamischen Typ dient. Dementsprechend ist der erster Schwingungserreger 5₁ ferner mittels eines am ersten Meßrohr gehalterten Permanentmagneten und einer von dessen Magnetfeld durchfluteten, am zweiten Meßrohr gehalterten Zylinderspule gebildet ist, insb. nach Art einer Tauchspulenanordnung, bei der die Zylinderspule koaxial zum Permanentmagneten angeordnet und dieser als innerhalb der Spule bewegter Tauchanker ausgebildet ist. Nach einer Weiterbildung der Erfindung umfaßt die Erregeranordnung ferner einen, insb. elektrodynamischen und/oder zum ersten Schwingungserreger 5₁ baugleichen und/oder Schwingungen des dritten Meßrohrs 18₃ relativ zum vierten Meßrohr 18₄ differentiell anregenden, zweiten Schwingungserreger 5₂. Die beiden Schwingungserreger können in vorteilhafter Weise elektrisch seriell verschaltet sind, insb. derart, daß ein gemeinsames Treibersignal gemeinsame Schwingungen des ersten und dritten Meßrohrs 18₁, 18₃ relativ zum zweiten und vierten Meßrohr 18₂, 18₄ anregt. Gemäß einer weiteren Ausgestaltung ist der der zweite Schwingungserreger 5₂ mittels eines am dritten Meßrohr gehalterten Permanentmagneten und einer von dessen Magnetfeld durchfluteten, am vierten Meßrohr gehalterten Zylinderspule gebildet.

Wie in der Fig. 4 dargestellt, ist der erste Schwingungserreger 5₁ in oberhalb des ersten und zweiten Meßrohrs 18₁, 18₂ und insoweit auch oberhalb eines gemeinsamen örtlichen Schwerpunkts aller vier Meßrohre 18₁, 18₂, 18₃, 18₄ angeordnet, der in einer durch die Einbaustelle nämlichen Schwingungserregers hindurchgehenden gedachten Querschnittsebene des mittels der vier Meßrohre gebildeten Innenteils liegt. Infolge der Anordnungen wenigstens eines Schwingungserregers der Erregeranordnung 5 außerhalb des vorbeschriebenen gemeinsamen Schwerpunkts der vier Meßrohre können zusätzlich zu Biegeschwingungen in vorteilhafter Wiese auch - simultan oder intermittierend - nützliche Torsionsschwingungen angeregt werden. Dadurch können im im jeweiligen Meßrohr 18₁, 18₂, 18₃ bzw. 18₄ momentan befindlichen Medium in erheblichem Maße auch vornehmlich von der Viskosität abhängige Reib- oder Scherkräfte induziert werden, die wiederum dämpfend und insoweit meßbar auf die Schwingungen der Meßrohre 18₁, 18₂, 18₃ bzw. 18₄ zurückwirken. Basierend darauf kann beispielsweise anhand des in die Erregeranordnung 5 eingespeisten Treibersignals, insb. dessen Stromstärke, falls erforderlich, auch eine Viskosität des im Meßaufnehmer geführten Mediums ermittelt werden.

Es sei an dieser Stelle zudem ferner noch angemerkt, daß, obgleich die Schwingungserreger der im Ausführungsbeispiel gezeigten Erregeranordnung jeweils etwa mittig an den Meßrohren angreifen, alternativ oder in Ergänzung auch eher ein- und auslaßseitig an das jeweilige Meßrohr angreifende Schwingungserreger verwendet werden können, etwa nach Art der in der US-A 48 23 614, US-A 48 31 885, oder der US-A 2003/0070495 vorgeschlagenen Erregeranordnungen.

Wie aus den Fig. 2 und 4 ersichtlich und bei Meßaufnehmern der in Rede stehenden Art üblich, ist im Meßaufnehmer 11 ferner eine auf, insb. einlaß- und auslaßseitige, Vibrationen, insb. mittels der Erregeranordnung 5 angeregte Biegeschwingungen, der Meßrohre 18₁, 18₂, 18₃ bzw. 18₄ reagierende, beispielsweise elektro-dynamische, Vibrationssensoranordnung 19 zum Erzeugen von Vibrationen, insb. Biegeschwingungen, der Meßrohre repräsentierenden Schwingungsmeßsignalen vorgesehen, die beispielsweise hinsichtlich einer Frequenz, einer Signalamplitude und/oder einer Phasenlage - relativ zueinander und/oder relativ zum Treibersignal - von der von der zu erfassenden Meßgröße, wie etwa der Massendurchflußrate und/oder der Dichte bzw. einer Viskosität des Mediums, mit beeinflußt sind.

Gemäß einer weiteren Ausgestaltung der Erfindung ist die Vibrationssensoranordnung mittels eines, insb. elektrodynamischen und/oder zumindest Schwingungen des ersten Meßrohrs 18₁ relativ zum zweiten Meßrohr 18₂ differentiell erfassenden, einlaßseitigen ersten Schwingungssensors 19₁ sowie eines, insb. elektrodynamischen und/oder zumindest Schwingungen des ersten Meßrohrs 18₁ relativ zum zweiten Meßrohr 18₂ differentiell erfassenden, auslaßseitigen zweiten Schwingungssensors 19₂ gebildet, welche beiden Schwingungssensoren jeweils auf Bewegungen der Meßrohre 18₁, 18₂, 18₃, 18₄, insb. deren laterale Auslenkungen und/oder Verformungen, reagierend, ein erstes bzw. zweite Schwingungsmeßsignal liefern. Dies im besonderen in der Weise, daß wenigstens zwei der von der Vibrationssensoranordnung 19 gelieferten Schwingungsmeßsignale eine gegenseitige Phasenverschiebung aufweisen, die mit der momentanen Massendurchflußrate des durch die Meßrohre hindurchströmenden Mediums korrespondiert bzw. davon abhängig ist, sowie jeweils eine Signalfrequenz aufweisen, die von einer momentanen Dichte des in den Meßrohren strömenden Mediums abhängig sind. Die beiden, beispielsweise einander baugleichen, Schwingungssensoren 19₁, 19₂ können dafür - wie bei Meßaufnehmern der in Rede stehenden Art durchaus üblich - im wesentlichen äquidistant zum ersten Schwingungserreger 5₁ im Meßaufnehmer 11 plaziert sein. Überdies können die Schwingungssensoren der Vibrationssensoranordnung 19 zumindest insoweit baugleich zum wenigstens einen Schwingungserreger der Erregeranordnung 5 ausgebildet sein, als sie analog zu dessen Wirkprinzip arbeiten, beispielsweise also ebenfalls vom elektrodynamischen Typ sind. Gemäß einer Weiterbildung der Erfindung ist die Vibrationssensoranordnung 19 zudem auch mittels eines, insb. elektrodynamischen und/oder Schwingungen des dritten Meßrohrs 18₃ relativ zum vierten Meßrohr 18₄ differentiell erfassenden, einlaßseitigen dritten Schwingungssensors 19₃ sowie eines, insb. elektrodynamischen und/oder Schwingungen des dritten Meßrohrs 18₃ relativ zum vierten Meßrohr 18₄ differentiell erfassenden, auslaßseitigen vierten Schwingungssensors 19₄ gebildet. Zur weiteren Verbesserung der Signalqualität wie auch zur Vereinfachung der die Meßsignale empfangenden Umformer-Elektronik 12 können desweiteren der erste und dritte Schwingungssensor 19₁, 19₃ elektrisch seriell verschaltet sein, beispielsweise derart, daß ein gemeinsames Schwingungsmeßsignal gemeinsame einlaßseitige Schwingungen des ersten und dritten Meßrohrs 18₁, 18₃ relativ zum zweiten und vierten Meßrohr 18₂, 18₄ repräsentiert. Alternativ oder in Ergänzung können auch der zweite und vierte Schwingungssensor 19₂, 19₄ derart elektrisch seriell verschaltet sein, daß ein gemeinsames Schwingungsmeßsignal beider Schwingungssensoren 19₂, 19₄ gemeinsame auslaßseitige Schwingungen des ersten und dritten Meßrohrs 18₁, 18₃ relativ zum zweiten und vierten Meßrohr 18₂, 18₄ repräsentiert.

Für den vorgenannten Fall, daß die, insb. einander baugleichen, Schwingungssensoren der Vibrationssensoranordnung 19 Schwingungen der Meßrohre differentiell und elektrodynamisch erfassen sollen, sind der erste Schwingungssensor 19₁ mittels eines - hier im Bereich einlaßseitig zu erfassender Schwingungen - am ersten Meßrohr gehalterten Permanentmagneten und einer von dessen Magnetfeld durchfluteten, am zweiten Meßrohr - hier entsprechend ebenfalls im Bereich einlaßseitig zu erfassender Schwingungen - gehalterten Zylinderspule, und der zweite Schwingungssensor 19₂ mittels eines - im Bereich auslaßseitig zu erfassender Schwingungen - am ersten Meßrohr gehalterten Permanentmagneten und einer von dessen Magnetfeld durchfluteten, am zweiten Meßrohr gehalterten - hier entsprechend ebenfalls im Bereich auslaßseitig zu erfassender Schwingungen - Zylinderspule gebildet. Gleichermaßen können zudem auch der ggf. vorgesehene dritte Schwingungssensor 19₃ entsprechend mittels eines am dritten Meßrohr gehalterten Permanentmagneten und einer von dessen Magnetfeld durchfluteten, am vierten Meßrohr gehalterten Zylinderspule, und der ggf. vorgesehene vierte Schwingungssensor 19₄ mittels eines am dritten Meßrohr gehalterten Permanentmagneten und einer von dessen Magnetfeld durchfluteten, am vierten Meßrohr gehalterten Zylinderspule gebildet sein.

Es sei an dieser Stelle zudem noch angemerkt, daß, obgleich es sich bei den Schwingungssensoren der im Ausführungsbeispiel gezeigten Vibrationssensoranordnung 19 jeweils um solche vom elektrodynamischen Typ, also jeweils mittels einer an einem der Meßrohre fixierten zylindrischen Magnetspule und einem darin eintauchenden, an einem gegenüberliegenden Meßrohr entsprechend fixierten Permanentmagneten realisierte Schwingungssensoren, handelt, ferner auch andere dem Fachmann bekannte, wie z.B. opto-elektronische, Schwingungssensoren zur Bildung der Vibrationssensoranordnung verwendet werden können.

Zur Gewährleistung einer möglichst hohen Empfindlichkeit des Meßaufnehmers auf den Massendurchfluß sind nach einer weiteren Ausgestaltung der Erfindung die Meßrohre die Schwingungssensoren so im Meßaufnehmer angeordnet, daß eine einem minimalen Abstand zwischen dem ersten Schwingungssensor 19₁ und dem zweite Schwingungssensor 19₂ entsprechende Meßlänge, L₁₉, des Meßaufnehmers mehr als 500 mm, insb. mehr als 600 mm, beträgt.

Die Erregeranordnung 5 und die Vibrationssensoranordnung 19 sind ferner, wie bei derartigen Meßaufnehmern üblich, mit der Umformer-Elektronik, nicht zuletzt auch mit einer darin vorgesehenen Meßschaltung und einer gleichermaßen in der Umformer-Elektronik implementierten Treiberschaltung, gekoppelt, beispielsweise drahtgebunden mittels entsprechender Kabelverbindungen. Die Umformer-Elektronik wiederum erzeugt mittels der Treiberschaltung einerseits ein die Erregeranordnung 5 entsprechend treibendes, beispielsweise hinsichtlich eines Erregerstromes und/oder einer Erregerspannung geregeltes, Erregersignal. Andererseits empfängt die Umformer-Elektronik mittels der, etwa mittels eines Mikrocomputers und/oder eines digitalen Signalprozessors gebildeten, Meßschaltung die Schwingungsmeßsignale der Vibrationssensoranordnung 19 und generiert daraus, ggf. auch unter Verwendung des Treibersignals, die gewünschten Meßwerte, beispielsweise also eine Massedurchflußrate bzw. einen totalisierten Massendurchfluß repräsentierende Massendurchfluß-Meßwerte, eine Dichte des Medium repräsentierenden Dichte-Meßwerte und/oder eine Viskosität des zu messenden Mediums repräsentierende Viskositäts-Meßwerte. Die Meßwerte können ggf. vor Ort angezeigt und/oder auch an ein dem Meßsystem übergeordnetes Datenverarbeitungssystem inform digitaler Meßdaten gesendet und daselbst entsprechend weiterverarbeitet werden.

Die oben erwähnte Verwendung differentiell wirkender Schwingungserreger bzw. Schwingungssensoren bei dem hier gezeigten Innenteil birgt dabei u.a. auch den Vorteil, daß zum Betreiben des erfindungsgemäßen Meßaufnehmers auch solche etablierten Meß- bzw. Treiberschaltungen verwendet werden können, wie sie beispielsweise bereits in herkömmlichen Coriolis-Massedurchfluß-/ Dichtemeßgeräten breite Anwendung gefunden haben. Die Umformer-Elektronik 12 einschließlich der Meß- bzw. Treiberschaltung kann desweiteren beispielsweise in einem separaten Elektronik-Gehäuse 7₂ untergebracht sein, das vom Meßaufnehmer entfernt angeordnet oder, wie in Fig. 1 gezeigt, unter Bildung eines einzigen Kompaktgeräts direkt am Meßaufnehmer 1, beispielsweise von außen am Aufnehmer-Gehäuse 7₁, fixiert ist. Bei dem hier gezeigten Ausführungsbeispiel ist daher am Aufnehmer-Gehäuse 7₁ ferner ein dem Haltern des Elektronik-Gehäuses 7₂ dienendes halsartiges Übergangsstücks angebracht. Innerhalb des Übergangsstücks kann ferner eine, beispielsweise mittels Glas- und/oder Kunststoffverguß hergestellte, hermetisch dichte und/oder druckfeste Durchführung für die elektrische Verbindungsleitungen zwischen Meßaufnehmer 11, insb. den darin plazierten Schwingungserregern und Sensoren, und der erwähnten Umformer-Elektronik 12 angeordnet sein,

Wie bereits mehrfach erwähnt ist das Meßsystem und insoweit auch der Meßaufnehmer 11 im besonderen für Messungen auch hoher Massendurchflüsse von mehr als 2200 t/h in einer Rohrleitung von großem Kaliber von mehr als 250 mm vorgesehen. Dem Rechnung tragend ist nach einer weiteren Ausgestaltung der Erfindung die nominellen Nennweite des Meßaufnehmers 11, die wie bereits erwähnt einem Kaliber der Rohrleitung, in deren Verlauf der Meßaufnehmer 11 einzusetzen ist, entspricht, so gewählt, daß sie mehr als 100mm beträgt, insb. aber größer als 300mm ist. Ferner ist nach einer weiteren Ausgestaltung des Meßaufnehmers vorgesehen, daß jedes der Meßrohre 18₁, 18₂, 18₃, 18₄ jeweils ein einem jeweiligen Rohr-Innendurchmesser entsprechendes Kaliber D₁₈ aufweist, das mehr als 60 mm beträgt. Im besonderen sind die Meßrohre 18₁, 18₂, 18₃, 18₄ ferner so ausgebildet, das jedes ein Kaliber D₁₈ von mehr als 80 mm aufweist. Alternativ oder in Ergänzung dazu sind die Meßrohre 18₁, 18₂, 18₃, 18₄ nach einer anderen Ausgestaltung der Erfindung ferner so bemessen, daß sie jeweils eine Meßrohrlänge L₁₈ von wenigstens 1000 mm aufweisen. Die Meßrohrlänge L₁₈ entspricht im hier gezeigten Ausführungsbeispiel mit gleichlangen Meßrohren 18₁, 18₂, 18₃, 18₄ jeweils einem minimalen Abstand zwischen der ersten Strömungsöffnung 20_{1A} des ersten Strömungsteilers 20₁ und der ersten Strömungsöffnung 20_{2A} des zweiten Strömungsteilers 20₂. Im besonderen sind die Meßrohre 18₁, 18₂, 18₃, 18₄ dabei so ausgelegt, daß deren Meßrohrlänge L₁₈ jeweils größer als 1200 mm ist.

Dementsprechend ergibt sich zumindest für den erwähnten Fall, daß die Meßrohre 18₁, 18₂, 18₃, 18₄ aus Stahl bestehen, bei den üblicherweise verwendeten Wandstärken von über 1 mm eine Masse von jeweils wenigstens 20 kg, insb. mehr als 30 kg, aufweist. Ferner ist aber angestrebt, die Leermasse jedes der Meßrohre 18₁, 18₂, 18₃, 18₄ kleiner als 50 kg zu halten.

In Anbetracht dessen, daß, wie bereits erwähnt, jedes der Meßrohre 18₁, 18₂, 18₃, 18₄ bei erfindungsgemäßen Meßaufnehmer durchaus weit über 20 kg wiegen und dabei, wie aus den obigen Maßangaben ohne weiteres ersichtlich, ein Fassungsvermögen von durchaus 101 oder mehr haben kann, kann das dann die vier Meßrohre 18₁, 18₂, 18₃, 18₄ umfassende Innenteil zumindest bei hindurchströmendem Medium mit hoher Dichte eine Gesamt-Masse von weit über 80 kg erreichen. Besonders bei der Verwendung von Meßrohren mit vergleichsweise großem Kaliber D₁₈, großer Wandstärke und großer Meßrohrlänge L₁₈ kann die Masse des von den Meßrohren 18₁, 18₂, 18₃, 18₄ gebildeten Innenteils ohne weiteres aber auch größer als 100 kg oder zumindest mit hindurchströmendem Medium, z.B. Öl oder Wasser, mehr als 120 kg betragen. Infolgedessen beträgt eine Leermasse M₁₁ des Meßaufnehmers insgesamt auch weit mehr als 200 kg, bei nominellen Nennweiten D₁₁ von wesentlich größer als 250 mm sogar mehr als 300 kg. Im Ergebnis kann beim erfindungsgemäßen Meßaufnehmer ein Massenverhältnis M₁₁/M₁₈ einer Leermasse M₁₁ des gesamten Meßaufnehmers zu einer Leermasse M₁₈ des ersten Meßrohrs durchaus größer als 10, insb. größer als 15, sein.

Um bei den erwähnten hohen Leermassen M₁₁ des Meßaufnehmers das dafür insgesamt verwendete Material möglichst optimal einzusetzen und insoweit das - zumeist auch sehr teure - Material insgesamt möglichst effizient zu nutzen, ist gemäß einer weiteren Ausgestaltung die nominelle Nennweite D₁₁ des Meßaufnehmers abgestimmt auf dessen Leermasse M₁₁ so bemessen, daß ein Masse-zu-Nennweite-Verhältnis M₁₁/ D₁₁ des Meßaufnehmers 11, definiert durch ein Verhältnis der Leermasse M₁₁ des Meßaufnehmers 11 zur nominellen Nennweite D₁₁ des Meßaufnehmers 11 kleiner als 2 kg/mm, insb. möglichst aber kleiner als 1 kg/mm ist. Um eine ausreichend hohe Stabilität des Meßaufnehmers 11 zu gewährleisten, ist das Masse-zu-Nennweite-Verhältnis M₁₁/D₁₁ des Meßaufnehmers 11 zumindest im Falle des Verwendens der oben erwähnten herkömmlichen Materialien jedoch möglichst größer als 0.5 kg/mm zu wählen. Ferner ist gemäß einer weiteren Ausgestaltung der Erfindung zur weiteren Verbesserung der Effizienz des eingesetzten Materials vorgesehen, das erwähnte Massenverhältnis M₁₁/M₁₈ kleiner als 25 zu halten.

Zur Schaffung eines dennoch möglichst kompakten Meßaufnehmers von ausreichend hoher Schwingungsgüte und möglichst geringem Druckabfall sind nach einer weiteren Ausgestaltung der Erfindung die Meßrohre, abgestimmt auf die oben erwähnte Einbaulänge L₁₁ des Meßaufnehmers 11, so bemessen, daß ein Kaliber-zu-Einbaulänge-Verhältnis D₁₈/ L₁₁ des Meßaufnehmers, definiert durch ein Verhältnis des Kalibers D₁₈ zumindest des ersten Meßrohrs zur Einbaulänge L₁₁ des Meßaufnehmers 11, mehr als 0.02, insb. mehr als 0.05 und/oder weniger als 0.09, beträgt. Alternativ oder in Ergänzung sind die Meßrohre 18₁, 18₂, 18₃, 18₄, abgestimmt auf die oben erwähnte Einbaulänge L₁₁ des Meßaufnehmers, so bemessen, daß ein Meßrohrlänge-zu-Einbaulänge-Verhältnis L₁₈/L₁₁ des Meßaufnehmers, definiert durch ein Verhältnis der Meßrohrlänge L₁₈ zumindest des ersten Meßrohrs zur Einbaulänge L₁₁ des Meßaufnehmers, mehr als 0.7, insb. mehr als 0.8 und/oder weniger als 0.95, beträgt.

Falls erforderlich, können allfällig oder zumindest potentiell von den vibrierenden, insb. in der erwähnte Weise relativ groß dimensionierten, Meßrohren einlaßseitig oder auslaßseitig im Aufnehmer-Gehäuse verursachte mechanische Spannungen und/oder Vibrationen, z.B. dadurch minimiert werden, daß die vier Meßrohre 18₁, 18₂, 18₃, 18₄ zumindest paarweise ein- und auslaßseitig zumindest paarweise jeweils mittels als sogenannte Knotenplatten dienenden Kopplerelemente - im folgenden Kopplerelemente erster Art - miteinander mechanisch verbunden sind. Darüber hinaus können mittels solcher Kopplerelemente erster Art, sei es durch deren Dimensionierung und/oder deren Positionierung auf den Meßrohren mechanische Eigenfrequenzen der Meßrohre und somit auch mechanische Eigenfrequenzen des mittels der vier Meßrohre sowie daran angebrachten weiteren Komponenten des Meßaufnehmers gebildet Innenteil und insoweit auch dessen Schwingungsverhalten insgesamt gezielt beeinflußt werden.

Die als Knotenplatten dienenden Kopplerelemente erster Art können beispielsweise dünne, insb. aus demselben Material wie die Meßrohre gefertigte, Platten- oder Scheiben sein, die jeweils mit der Anzahl und den Außenmaßen der miteinander zu koppelnden Meßrohre entsprechenden, ggf. zusätzlich noch zum Rand hin geschlitzten, Bohrungen versehen sind, so daß die Scheiben zunächst auf die jeweiligen Meßrohre 18₁, 18₂, 18₃ bzw. 18₄ aufgeklemmt und ggf. hernach noch mit dem jeweiligen Meßrohr, beispielsweise durch Hartverlöten oder Schweißen, stoffschlüssig verbunden werden können.

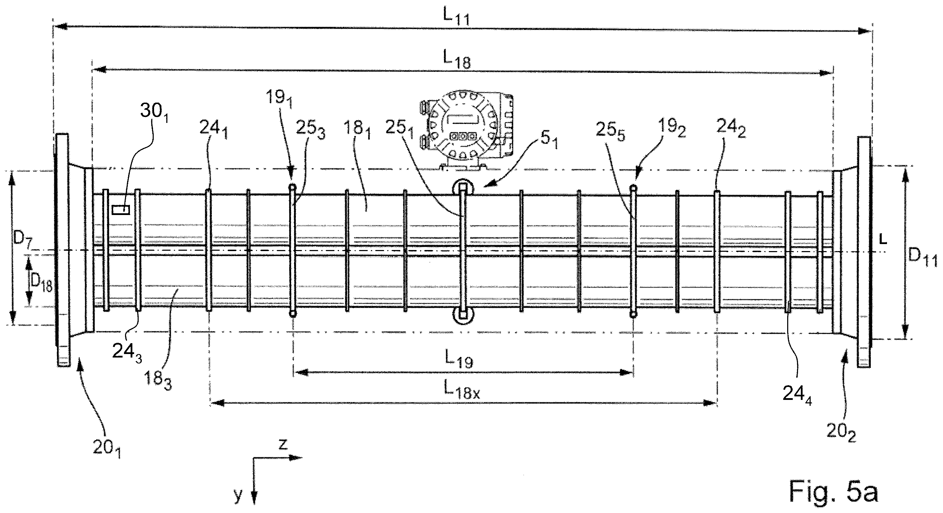

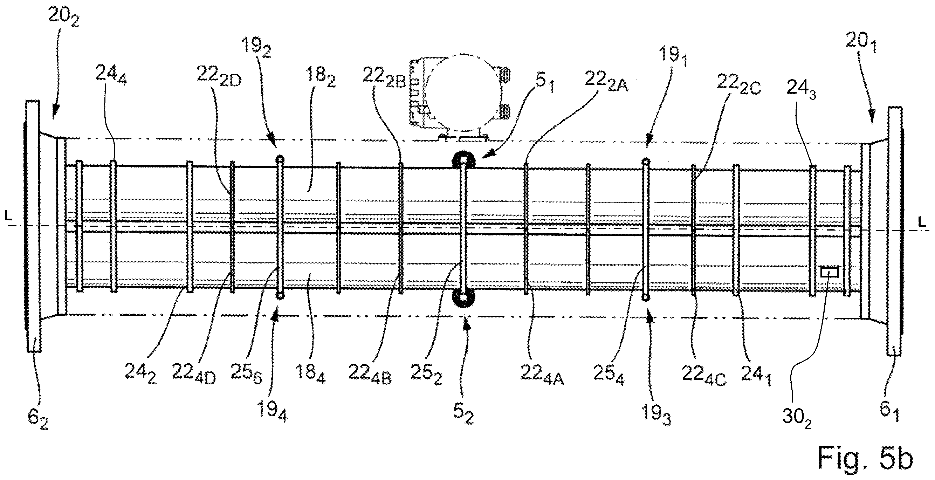

Dementsprechend umfaßt der Meßaufnehmer gemäß einer weiteren Ausgestaltung der Erfindung ein erstes Kopplerelement 24₁ erster Art, das zum Bilden von einlaßseitigen Schwingungsknoten zumindest für Vibrationen, insb. Biegeschwingungen, des ersten Meßrohrs und für dazu gegengleiche Vibrationen, insb. Biegeschwingungen, des zweiten Meßrohrs sowohl vom ersten Strömungsteiler als auch vom zweiten Strömungsteiler beabstandet einlaßseitig zumindest am ersten Meßrohr und am zweiten Meßrohr fixiert ist, sowie ein, insb. zum ersten Kopplerelement baugleiches, zweites Kopplerelement 24₂ erster Art, das zum Bilden von auslaßseitigen Schwingungsknoten zumindest für Vibrationen, insb. Biegeschwingungen, des ersten Meßrohrs 18₁ und für dazu gegengleiche Vibrationen, insb. Biegeschwingungen, des zweiten Meßrohrs 18₁ sowohl vom ersten Strömungsteiler 20₁ als auch vom zweiten Strömungsteiler 20₂ wie auch vom ersten Kopplerelement 24₁ beabstandet auslaßseitig zumindest am ersten Meßrohr 18₁ und am zweiten Meßrohr 18₂ fixiert ist. Wie aus Fig. 4 bzw. 5a, 5b ohne weiteres ersichtlich, sind das erste Kopplerelement 24₁ erster Art zum Bilden von einlaßseitigen Schwingungsknoten auch für Vibrationen, insb. Biegeschwingungen, des dritten Meßrohrs 18₃ und für dazu gegengleiche Vibrationen, insb. Biegeschwingungen, des vierten Meßrohrs 18₄ sowohl vom ersten Strömungsteiler 20₁ als auch vom zweiten Strömungsteiler 20₂ beabstandet einlaßseitig auch am dritten Meßrohr 18₃ und am vierten Meßrohr 184 und das zweite Kopplerelement 24₂ erster Art zum Bilden von auslaßseitigen Schwingungsknoten zumindest für Vibrationen, insb. Biegeschwingungen, des dritten Meßrohrs 18₃ und für dazu gegengleiche Vibrationen, insb. Biegeschwingungen, des vierten Meßrohrs 18₄ sowohl vom ersten Strömungsteiler 20₁ als auch vom zweiten Strömungsteiler 20₂ wie auch vom ersten Kopplerelement 24₁ beabstandet auslaßseitig auch am dritten Meßrohr 18₃ und am vierten Meßrohr 184 fixiert, so daß im Ergebnis alle vier Meßrohre 18₁, 18₂, 18₃, 18₄ mittels des ersten Kopplerelements 24₁ erster Art sowie mittels des zweiten Kopplerelements 24₂ erster Art miteinander mechanisch verbunden sind. Jedes der beiden vorgenannten, insb. einander baugleichen, Kopplerelemente 24₁, 24₂ erster Art ist gemäß einer weiteren Ausgestaltung der Erfindung plattenförmig ausgebildet, insb. in derart, daß es, wie auch aus der Zusammenschau der Figuren ohne weiteres ersichtlich, eine eher rechteckförmige oder auch quadratische, Grundfläche oder aber daß es eher eine runde, eine ovale, eine kreuzförmig oder, wie beispielsweise auch in der US-A 2006/0283264 vorgeschlagen, eine eher H-förmige Grundfläche aufweist. Ferner sind die beiden Kopplerelemente 24₁, 24₂ zueinander im wesentlichen parallel verlaufend ausgerichtet sein.

Wie aus den Fig. 4 bzw. 5a, 5b ohne weiteres ersichtlich, sind die beiden vorgenannten Kopplerelemente 24₁, 24₂ ferner so ausgebildet und im Meßaufnehmer so plaziert, daß ein Massenschwerpunkt des ersten Kopplerelements 24₁ erster Art einen Abstand zu einem Massenschwerpunkt des Meßaufnehmers 11 aufweist, der im wesentlichen gleich ist mit einem Abstand eines Massenschwerpunkt des zweiten Kopplerelements 24₂ erster Art zu nämlichen Massenschwerpunkt des Meßaufnehmers 11, insb. so, daß die beiden Kopplerelemente 24₁, 24₂ im Ergebnis symmetrisch zu einer die Meßrohre 18₁, 18₂, 18₃, 18₄ jeweils in Mitte schneidenden gemeinsamen gedachten Querschnittsebene angeordnet sind.

Zur weiteren Erhöhung der Freiheitsgrade bei der Optimierung des Schwingungsverhaltens des mittels der vier Meßrohre 18₁, 18₂, 18₃, 18₄ gebildeten Innenteils umfaßt der Meßaufnehmer 11 nach einer Weiterbildung der Erfindung ferner ein drittes Kopplerelement 24₃ erster Art, das zum Bilden von einlaßseitigen Schwingungsknoten zumindest für Vibrationen, insb. Biegeschwingungen, des dritten Meßrohrs 183 und für dazu gegengleiche Vibrationen, insb. Biegeschwingungen, des vierten Meßrohrs 18₄ sowohl vom ersten Strömungsteiler 20₁ als auch vom zweiten Strömungsteiler 20₂ beabstandet einlaßseitig zumindest am dritten 183 Meßrohr und am vierten Meßrohr 18₄ fixiert ist. Darüberhinaus umfaßt der Meßaufnehmer 11 bei dieser Weiterbildung ein, insb. zum dritten Kopplerelement 24₃ erster Art baugleiches, viertes Kopplerelement 24₄ erster Art, das zum Bilden von auslaßseitigen Schwingungsknoten zumindest für Vibrationen, insb. Biegeschwingungen, des dritten Meßrohrs 18₃ und für dazu gegengleiche Vibrationen, insb. Biegeschwingungen, des vierten Meßrohrs 18₄ sowohl vom ersten Strömungsteiler 20₁ als auch vom zweiten Strömungsteiler 202 wie auch vom dritten Kopplerelement 24₃ erster Art beabstandet auslaßseitig zumindest am dritten Meßrohr 18₃ und am vierten Meßrohr 18₄ fixiert ist.

Jedes der beiden vorgenannten, insb. einander baugleichen, dritten und vierten Kopplerelemente 24₃, 24₄ erster Art ist gemäß einer weiteren Ausgestaltung der Erfindung wiederum plattenförmig ausgebildet, insb. in derart, daß es eine rechteckförmige, quadratische, runde, kreuzförmig oder H-förmige Grundfläche aufweist. Ferner sind die beiden vorgenannten dritten und vierten Kopplerelemente 24₃, 24₄ zueinander im wesentlichen parallel verlaufend ausgerichtet.

Wie in Fig. 4 bzw. 5a, 5b dargestellt sind das dritte Kopplerelement 24₃ erster Art sowohl vom ersten Strömungsteiler 20₁ als auch vom zweiten Strömungsteiler 20₂ wie auch vom ersten Kopplerelement erster Art 24₁ beabstandet einlaßseitig auch am ersten Meßrohr 18₁ und am zweiten Meßrohr 18₂ und das vierte Kopplerelement 24₄ erster Art sowohl vom ersten Strömungsteiler als auch vom zweiten Strömungsteiler wie auch vom zweiten Kopplerelement beabstandet auslaßseitig auch am ersten Meßrohr und am zweiten Meßrohr fixiert, so daß im Ergebnis alle vier Meßrohre 18₁, 18₂, 18₃, 18₄ auch mittels des dritten Kopplerelements 24₃ erster Art sowie mittels des vierten Kopplerelements 24₄ erster Art miteinander mechanisch verbunden sind.

Wie aus der Zusammenschau der Fig. 4, 5a, 5b ohne weiteres ersichtlich, sind auch das dritte und vierte Kopplerelemente 24₃, 24₄ ferner so ausgebildet und im Meßaufnehmer so plaziert, daß ein Massenschwerpunkt des dritten Kopplerelements 24₃ erster Art einen Abstand zum Massenschwerpunkt des Meßaufnehmers aufweist, der im wesentlichen gleich ist mit einem Abstand eines Massenschwerpunkt des vierten Kopplerelements 24₄ erster Art zu nämlichen Massenschwerpunkt des Meßaufnehmers, insb. so, daß die beiden Kopplerelemente 24₃, 24₄ im Ergebnis symmetrisch zu einer die vier Meßrohre 18₁, 18₂, 18₃, 18₄ jeweils in Mitte schneidenden gemeinsamen gedachten Querschnittsebene angeordnet sind. Ferner sind gemäß einer weiteren Ausgestaltung der Erfindung die vier Kopplerelement 24₁, 24₂, 24₃, 24₄ erster Art so im Meßaufnehmer angeordnet, daß der Abstand des Massenschwerpunkts des dritten Kopplerelements 24₃ erster Art vom Massenschwerpunkt des Meßaufnehmers größer als der Abstand des Massenschwerpunkts des ersten Kopplerelements 24₁ erster Art von nämlichem Massenschwerpunkt des Meßaufnehmers und größer als der Abstand des Massenschwerpunkt des zweiten Kopplerelements 24₂ erster Art von nämlichem Massenschwerpunkt des Meßaufnehmers ist.

Wie aus der Zusammenschau der Fign. 4, 5a und 5b ohne weiteres ersichtlich, definierte ein minimaler Abstand zwischen dem dem Massenschwerpunkt des Meßaufnehmers 11 am nähesten liegenden einlaßseitig am jeweiligen Meßrohr fixierten Kopplerelement erster Art - hier also dem ersten Kopplerelement 24₁ erster Art - und dem dem Massenschwerpunkt des Meßaufnehmers am nähesten liegenden auslaßseitig an nämlichem Meßrohr fixierten Kopplerelement erster Art - hier also dem zweiten Kopplerelement 24₂ erster Art - jeweils eine freie Schwinglänge, L₁₈ₓ, selbigen Meßrohrs, wobei nach einer weiteren Ausgestaltung der Erfindung die Kopplerelemente erster Art so im Meßaufnehmer plaziert sind, daß im Ergebnis die freie Schwinglänge jedes der Meßrohre 18₁, 18₂, 18₃, 18₄ weniger als 2500 mm, insb. weniger als 2000 mm und/oder mehr als 800 mm, beträgt. Alternativ oder in Ergänzung ist ferner vorgesehen, daß alle vier Meßrohre 18₁, 18₂, 18₃, 18₄ die gleiche freie Schwinglänge L₁₈ₓ aufweisen.

Es kann ferner im Sinne einer noch einfacheren und noch genaueren Einstellung des Schwingungsverhaltens des Meßaufnehmers durchaus von Vorteil sein, wenn der Meßaufnehmer, wie beispielsweise in der US-A 2006/0150750 vorgeschlagen, darüberhinaus noch weitere, dem Bilden von ein- bzw. auslaßseitigen Schwingungsknoten für Vibrationen, insb. Biegeschwingungen, des ersten Meßrohrs und für dazu gegengleiche Vibrationen, insb. Biegeschwingungen, des zweiten Meßrohrs bzw. für Vibrationen, insb. Biegeschwingungen, des dritten Meßrohrs und für dazu gegengleiche Vibrationen, insb. Biegeschwingungen, des vierten Meßrohrs dienende Kopplerelemente der vorgenannten Art aufweist, beispielsweise also insgesamt 6 oder 8 solcher Kopplerelemente erster Art.

Zur Schaffung eines möglichst kompakten Meßaufnehmers von ausreichend hoher Schwingungsgüte und hoher Empfindlichkeit bei möglichst geringem Druckabfall sind nach einer weiteren Ausgestaltung der Erfindung die Meßrohre 18₁, 18₂, 18₃, 18₄, abgestimmt auf die erwähnte freie Schwinglänge, so bemessen, daß ein Kaliber-zu- Schwinglänge-Verhältnis D₁₈/L₁₈ₓ des Meßaufnehmers, definiert durch ein Verhältnis des Kalibers D₁₈ des ersten Meßrohrs zur freien Schwinglänge L₁₈ₓ des ersten Meßrohrs, mehr als 0.07, insb. mehr als 0.09 und/oder weniger als 0.15, beträgt. Alternativ oder in Ergänzung hierzu sind nach einer weiteren Ausgestaltung der Erfindung die Meßrohre 18₁, 18₂, 18₃, 18₄, abgestimmt auf die oben erwähnte Einbaulänge L₁₁ des Meßaufnehmer, so bemessen, daß ein Schwinglänge-zu-Einbaulänge-Verhältnis L₁₈ₓ/L₁₁ des Meßaufnehmers, definiert durch ein Verhältnis der freien Schwinglänge L₁₈ₓ des ersten Meßrohrs zur Einbaulänge L₁₁ des Meßaufnehmers, mehr als 0.55, insb. mehr als 0.6 und/oder weniger als 0.9, beträgt.

Nach einer weiteren Ausgestaltung der Erfindung sind die Schwingungssensoren, abgestimmt auf die freie Schwinglänge, so im Meßaufnehmer angeordnet, daß ein Meßlänge-zu-Schwinglänge-Verhältnis des Meßaufnehmers, definiert durch ein Verhältnis der erwähnten Meßlänge des Meßaufnehmers zur freien Schwinglänge des ersten Meßrohrs, mehr als 0.6, insb. mehr als 0.65 und/oder weniger als 0.95, beträgt.

Zur Schaffung eines möglichst kompakten, dennoch aber für den Massendurchfluß möglichst empfindlichen Meßaufnehmers sind nach einer weiteren Ausgestaltung der Erfindung die Schwingungssensoren, abgestimmt auf die Einbaulänge des Meßaufnehmers, so im Meßaufnehmer angeordnet, daß ein Meßlänge-zu-Einbaulänge-Verhältnis des Meßaufnehmers, welches durch ein Verhältnis der Meßlänge zur Einbaulänge des Meßaufnehmers definiert ist, mehr als 0.3, insb. mehr als 0.4 und/oder weniger als 0.7, beträgt. Alternativ oder in Ergänzung sind die Schwingungssensoren nach einer weiteren Ausgestaltung der Erfindung, abgestimmt auf die Meßrohre, so im Meßaufnehmer plaziert, daß ein Kaliber-zu-Meßlänge-Verhältnis D₁₈/L₁₉, des Meßaufnehmers, welches durch ein Verhältnis des Kalibers D₁₈ des ersten Meßrohrs zur Meßlänge L₁₉ des Meßaufnehmers definiert ist, mehr als 0.05, insb. mehr als 0.09, beträgt. Gemäß einer weiteren Ausgestaltung der Erfindung ist ferner die oben erwähnte Meßlänge L₁₉ kleiner als 1200 mm gehalten.

Gemäß einer weiteren Ausgestaltung der Erfindung ist ferner vorgesehen, die Meßrohre 18₁, 18₂, 18₃, 18₄ im Betrieb paarweise synchron, also mit gleicher Phasenlage, und insoweit die Schwingungen aller vier Meßrohre 18₁, 18₂, 18₃, 18₄ aufeinander entsprechend abzugleichen, daß die Meßrohre lediglich paarweise außerphasig schwingen gelassen sind. In vorteilhafter Weise sind das Schwingungsverhalten des mittels der vier Meßrohre 18₁, 18₂, 18₃, 18₄ zusammen mit der Erreger- und der Vibrationssensoranordnung gebildeten Innenteils wie auch die die Erregeranordnung steuernden Treibersignale so aufeinander abgestimmt, daß zumindest die im Nutzmode angeregten Schwingungen der vier Meßrohre 18₁, 18₂, 18₃, 18₄ so ausgebildet sind, daß das erste und das zweite Meßrohr 18₁, 18₂ zueinander im wesentlichen gegengleich schwingen und auch das dritte und das vierte Meßrohr 18₃, 18₄ zueinander im wesentlichen gegengleich schwingen, während gleichzeitig das erste und dritte Meßrohr 18₁, 18₃ zueinander im wesentlichen phasengleich schwingen und das zweite und vierte Meßrohr 18₂, 18₄ zueinander im wesentlichen phasengleich schwingen.

Daher umfaß der Meßaufnehmer gemäß einer weiteren Ausgestaltung der Erfindung ferner ein, insb. plattenförmiges oder stabförmiges, erstes Kopplerelement 25₁ zweiter Art, das zum Synchronisieren von Vibrationen, insb. Biegeschwingungen, des ersten Meßrohrs 18₁ und von dazu frequenzgleichen Vibrationen, insb. Biegeschwingungen, des dritten Meßrohrs 18₃ sowohl vom ersten Kopplerelement 24₁ erster Art als auch vom zweiten Kopplerelement 24₂ erster Art beabstandet am ersten Meßrohr 18₁ und am dritten Meßrohr 18₃ ansonsten aber an keinem anderen der Meßrohre, insoweit also lediglich am ersten Meßrohr 18₁ und am dritten Meßrohr 18₃ fixiert ist. Desweiteren umfaßt der Meßaufnehmer zumindest bei dieser Ausgestaltung der Erfindung wenigstens ein, insb. plattenförmiges oder stabförmiges, zweites Kopplerelement 25₂ zweiter Art, das zum Synchronisieren von Vibrationen, insb. Biegeschwingungen, des zweiten Meßrohrs 18₂ und von dazu frequenzgleichen Vibrationen, insb. Biegeschwingungen, des vierten Meßrohrs 18₄ sowohl vom ersten Kopplerelement 24₁ erster Art als auch vom zweiten Kopplerelement 24₁ erster Art wie auch vom ersten Kopplerelement 25₁ zweiter Art beabstandet am zweiten Meßrohr 18₂ und am vierten Meßrohr 18₄ ansonsten aber an keinem anderen der Meßrohre, insoweit also lediglich am zweiten Meßrohr 18₂ und am vierten Meßrohr 18₄ fixiert ist. Wie aus der Zusammenschau der Fig. 4, 5a und 5b ohne weiteres ersichtlich, sind das erste und zweite Kopplerelement 25₁, 25₂ zweiter Art möglichst einander gegenüberliegend im Meßaufnehmer 11 plaziert.

Ein Vorteil der mechanischen Kopplung der Meßrohre in der vorbeschriebenen Weise ist u.a. zu sehen, daß die vier Meßrohre 18₁, 18₂, 18₃, 18₄ zu zwei jeweils effektiv als ein Schwingungssystem wirkenden Meßrohr-Verbunden reduziert werden, die jeder für sich praktisch wie ein einziges Meßrohr wirken, da die von der Erregeranordnung 5 erzeugten Erregerkräfte aufgrund der mechanischen Kopplung sowohl zwischen dem ersten und dem zweiten Meßrohr 18₁, 18₂ als auch gleichermaßen zwischen dem dritten und vierten Meßrohr 18₃, 18₄ wirken bzw. auch die zum Zwecke der Messung im hindurchströmenden Medien verursachten Reaktionskräfte jeweils gemeinsam auf die Schwingungssensoren der Vibrationssensoranordnung 5 zurück übertragen werden. Des weiteren können allfällige Unterschiede zwischen den einzelnen Meßrohren 18₁, 18₂, 18₃, 18₄ hinsichtlich deren nominellen Schwingungsverhaltens, z.B. infolge ungleichmäßiger Strömung, unterschiedlicher Temperatur- und/oder unterschiedlicher Dichteverteilung etc., auf sehr einfache Weise ausgeglichen werden. Die Verwendung von Kopplerelementen zweiter Art hat ferner auch den Vorteil, daß jeder die somit auf sehr einfache Weise gebildeten zwei Meßrohr-Verbunde nicht nur für die Erreger- sondern gleichermaßen auch für die Vibrationssensoranordnung 19 und insoweit auch für die Meß- bzw. die Treiberschaltung der Umformer-Elektronik 12 insgesamt praktisch jeweils als ein einziges Meßrohr wirkt und der Meßaufnehmer 11 insoweit aus Sicht der Meß- bzw. Treiberschaltung scheinbar lediglich zwei gegeneinander schwingen gelassenen Meßrohre aufweist. Infolge dessen kann zumindest für die Vorverarbeitung und allfällige Digitalisierungen der Schwingungsmeßsignale bewährte Signalverarbeitungstechnologien und auch bewährte, insb. zweikanalige, also von lediglich zwei Schwingungssensoren gelieferte Schwingungsmeßsignale verarbeitende, Meßschaltungen aus dem Bereich der Coriolis-Massendurchfluß- bzw. der Dichtemessung zurückgegriffen werden. Gleichermaßen kann somit auch für die die Erregeranordnung treibende Treiberschaltung ohne weiteres dem Fachmann bekannte, insb. auf einkanalige, also genau ein Treibersignal für die Erregeranordnung liefernde, Treibererschaltungen verwendet werden. Falls erforderlich, können aber auch die von den zwei oder mehr Schwingungssensoren jeweils gelieferten Schwingungsmeßsignale aber auch einzeln in jeweils separaten Meßkanälen vorverarbeitet und entsprechend digitalisiert werden; gleichermaßen können, falls erforderlich, auch die ggf. vorhandenen zwei oder mehr Schwingungserreger mittels separaten Treibersignalen separat angesteuert werden.

Nach einer Ausgestaltung der Erfindung sind die Meßrohre 18₁, 18₂, 18₃, 18₄ sowie die diese miteinander verbindenden Kopplerelementen daher ferner so geformt und miteinander mittels Kopplerelementen zweiter Art, ggf. zusätzlich auch mittels Kopplerelementen erster Art, so mechanisch gekoppelt, daß ein durch das erste und das dritte Meßrohr 18₁, 18₃ gebildeter erster Meßrohr-Verbund und ein durch das zweite und das vierte Meßrohr 18₂, 18₄ gebildeter zweiter Meßrohr-Verbund im wesentlichen die gleichen mechanischen Eigenfrequenzen aufweisen.

Im hier gezeigten Ausführungsbeispiel ist das erste Kopplerelement 25₁ zweiter Art im Bereich von 50% eines minimaler Abstand zwischen dem ersten Kopplerelement 24₁ erster Art und dem zweiten Kopplerelement 24₂ erster Art am ersten bzw. dritten Meßrohr 18₁, 18₃ fixiert - insoweit also bei etwa der halben freien Schwinglänge des ersten bzw. dritten Meßrohrs 18₁, 18₃. Ferner ist auch das zweite Kopplerelement zweiter Art in entsprechender Weise im Bereich von 50% eines minimaler Abstand zwischen dem ersten Kopplerelement 24₁ erster Art und dem zweiten Kopplerelement 24₂ erster Art am zweiten bzw. vierten Meßrohr 18₂, 18₄ fixiert, also etwa bei der halben freien Schwinglänge des zweiten bzw. vierten Meßrohrs 18₂, 18₄.

In vorteilhafter Weise können die Kopplerelemente zweiter Art zusätzlich auch als Halterung von Komponenten der Erregeranordnung 5 dienen. Daher ist nach einer weiteren Ausgestaltung der Erfindung vorgesehen, daß jeder der, insb. baugleichen, Schwingungserreger 5₁, 5₂ anteilig jeweils an zwei einander gegenüberliegenden Kopplerelementen zweiter Art - - hier dem ersten und zweiten Kopplerelement 25₁, 25₂ - gehaltert ist. Somit kann auf sehr effektive, gleichwohl sehr einfache Weise sichergestellt werden, daß die mittels des Schwingungserregers 5₁ generierte Erregerkraft zumindest überwiegend synchrone, insb. auch einander im wesentlichen phasengleiche, Biegeschwingungen des ersten und dritten Meßrohr 18₁, 18₃ bzw. des zweiten und vierten Meßrohrs 18₂, 18₄ bewirkt. Beispielsweise kann im Falle elektro-dynamischer Schwingungserreger die jeweilige Zylinderspule am ersten und der jeweils zugehörige Permanentmagnet am gegenüberliegenden zweiten Kopplerelement zweiter Art fixiert sein. Für den erwähnten Fall, daß die Erregeranordnung 5 zwei Schwingungserreger 5₁, 5₂ aufweist können sowohl der erste Schwingungserreger 5₁ als auch der zweite Schwingungserreger 5₂ jeweils am ersten und zweiten Kopplerelement 25₁, 25₂ zweiter Art gehaltert sein, beispielsweise auch in der Weise, daß, wie aus den Fig. 4 bzw. 5a ohne weiteres ersichtlich, ein minimaler Abstand zwischen dem ersten und zweiten Schwingungserreger 5₁, 5₂ mehr als doppelt so groß ist, wie ein Rohr-Außendurchmessers der Meßrohre 18₁, 18₂, 18₃, 18₄, zumindest aber des ersten Meßrohrs 18₁. Dadurch ist insgesamt ein optimale Ausnutzung des im Innenraum des Aufnehmer-Gehäuses 7₁ angeboten Platzes wie auch eine einfache Montage der Schwingungserreger 5₁, 5₂ ermöglicht.

Nach einer weiteren Ausgestaltung der Erfindung umfaßt der Meßaufnehmer ferner ein, beispielsweise wiederum plattenförmiges oder stabförmiges, drittes Kopplerelement 25₃ zweiter Art, das zum Synchronisieren von Vibrationen, insb. Biegeschwingungen, des ersten Meßrohrs 18₁ und von dazu frequenzgleichen Vibrationen, insb. Biegeschwingungen, des dritten Meßrohrs 18₃ sowohl vom ersten Kopplerelement 24₁ erster Art als auch vom zweiten Kopplerelement 24₂ erster Art wie auch vom ersten Kopplerelement 25₁ zweiter Art beabstandet am ersten Meßrohr 18₁ und am dritten Meßrohr 18₃ ansonsten aber an keinem anderen der Meßrohre, insoweit also lediglich am ersten Meßrohr 18₁ und am dritten Meßrohr 18₃ fixiert ist, sowie ein, insb. plattenförmiges oder stabförmiges, viertes Kopplerelement 25₄ zweiter Art, das zum Synchronisieren von Vibrationen, insb. Biegeschwingungen, des zweiten Meßrohrs 18₂ und von dazu frequenzgleichen Vibrationen, insb. Biegeschwingungen, des vierten Meßrohrs 18₄ sowohl vom ersten und zweiten Kopplerelement erster Art als auch vom zweiten und dritten Kopplerelement zweiter Art jeweils beabstandet am zweiten Meßrohr 18₂ und am vierten Meßrohr 18₄ ansonsten aber an keinem anderen der Meßrohre, insoweit also lediglich am zweiten Meßrohr 18₂ und am vierten Meßrohr 18₄ fixiert ist. Das dritte und vierte Kopplerelement 25₃, 25₄ zweiter Art sind, wie aus der Zusammenschau der Fig. 4, 5a und 5b ohne weiteres ersichtlich, vorzugsweise einander gegenüberliegend im Meßaufnehmer 11 plaziert.

Ferner umfaßt der Meßaufnehmer 11 gemäß einer weiteren Ausgestaltung der Erfindung ein, insb. plattenförmiges oder stabförmiges, fünftes Kopplerelement 25₅ zweiter Art, das zum Synchronisieren von Vibrationen, insb. Biegeschwingungen, des ersten Meßrohrs 18₁ und von dazu frequenzgleichen Vibrationen, insb. Biegeschwingungen, des dritten Meßrohrs 18₃ sowohl vom ersten und zweiten Kopplerelement erster Art als auch vom ersten und dritten Kopplerelement zweiter Art beabstandet am ersten Meßrohr 18₁ und am dritten Meßrohr 18₂ ansonsten aber an keinem anderen der Meßrohre, insoweit also lediglich am ersten Meßrohr 18₁ und am dritten Meßrohr 18₂ fixiert ist, sowie ein, insb. plattenförmiges oder stabförmiges, sechstes Kopplerelement 25₆ zweiter Art, das zum Synchronisieren von Vibrationen, insb. Biegeschwingungen, des zweiten Meßrohrs und von dazu frequenzgleichen Vibrationen, insb. Biegeschwingungen, des vierten Meßrohrs sowohl vom ersten und zweiten Kopplerelement erster Art als auch vom zweiten, vierten und fünften Kopplerelement zweiter Art jeweils beabstandet am zweiten Meßrohr 18₂ und am vierten Meßrohr 18₄ ansonsten aber an keinem anderen der Meßrohre, insoweit also lediglich am zweiten Meßrohr 18₂ und am vierten Meßrohr 18₄ fixiert ist. Das fünfte und sechste Kopplerelement 25₅, 25₆ zweiter Art sind in vorzugsweise wiederum einander gegenüberliegend im Meßaufnehmer 11 plaziert.

Desweiteren kann es von Vorteil sein, vorgenannte Kopplerelemente zweiter Art ferner auch zum Haltern einzelner Komponenten der Vibrationssensoranordnung verwenden. Demnach ist nach einer weiteren Ausgestaltung der Erfindung vorgesehen, daß der einlaßseitige erste Schwingungssensor 19₁ anteilig jeweils am dritten und vierten Kopplerelement 25₃, 25₄ zweiter Art gehaltert ist. Ferner ist der zweite Schwingungssensor 19₂ in entsprechender Weise am fünften und sechsten Kopplerelement 25₅, 25₆ zweiter Art gehaltert. Somit kann auf sehr effektive, gleichwohl sehr einfache Weise sichergestellt werden, daß das mittels des ersten Schwingungssensors 19₁ im Betrieb generierte Schwingungsmeßsignal zumindest überwiegend synchrone, insb. auch einander phasengleiche, einlaßseitige Biegeschwingungen des ersten und dritten Meßrohrs 18₁, 18₃ relativ zu den gleichermaßen synchronisierten, insb. auch einander phasengleichen, einlaßseitigen Biegeschwingungen des zweiten und vierten Meßrohrs 18₂, 18₄ repräsentiert, bzw. daß das mittels des zweiten Schwingungssensors 19₂ im Betrieb generierte Schwingungsmeßsignal zumindest überwiegend synchrone, insb. auch einander phasengleiche, auslaßseitige Biegeschwingungen des ersten und dritten Meßrohrs 18₁, 18₃ relativ zu den gleichermaßen synchronisierten, insb. auch einander phasengleichen, auslaßseitigen Biegeschwingungen des zweiten und vierten Meßrohrs 18₂, 18₄ repräsentiert. Beispielsweise können im Falle elektro-dynamischer Schwingungssensoren die Zylinderspule des ersten Schwingungssensors 19₁ am dritten Kopplerelement zweiter Art und der zugehörige Permanentmagnet am gegenüberliegenden vierten Kopplerelement zweiter Art bzw. die Zylinderspule des zweiten Schwingungssensors 19₂ am fünften und der zugehörige Permanentmagnet am gegenüberliegenden sechsten Kopplerelement zweiter Art fixiert sein. Für den erwähnten Fall, daß die Vibrationssensoranordnung 19 mittels vier Schwingungssensoren 19₁, 19₂, 19₃, 19₄ gebildet ist, sind nach einer weiteren Ausgestaltung der Erfindung sowohl der erste Schwingungssensor 19₁ als auch der dritte Schwingungssensor 19₃ jeweils anteilig am dritten und vierten Kopplerelement zweiter Art gehaltert, insb. derart, daß, wie aus der Zusammenschau der Fig. 4, 5a und 5b ohne weiteres ersichtlich, ein minimaler Abstand zwischen dem ersten und dritten Schwingungssensor 19₁, 19₃ mehr als doppelt so groß ist, wie ein Rohr-Außendurchmessers des ersten Meßrohrs 18₁. In entsprechender Weise können zudem auch der zweite Schwingungssensor 19₂ und der vierte Schwingungssensor 19₄ jeweils am fünften und sechsten Kopplerelement zweiter Art gehaltert sein, insb. in der Weise, daß, wie aus der Zusammenschau der Fig. 4, 5a und 5b ohne weiteres ersichtlich, ein minimaler Abstand zwischen dem zweiten und vierten Schwingungssensor 19₂, 19₄ mehr als doppelt so groß ist, wie ein Rohr-Außendurchmessers des ersten Meßrohrs 18₁, wodurch insgesamt ein optimale Ausnutzung des im Innenraum des Aufnehmer-Gehäuses 7₁ angeboten Platzes wie auch eine einfache Montage der Schwingungssensoren der Vibrationssensoranordnung 19 ermöglicht ist. Daher ist nach einer weiteren Ausgestaltung der Erfindung jeder der, insb. baugleichen, Schwingungssensoren der Vibrationssensoranordnung 19 an zwei einander gegenüberliegenden Kopplerelementen zweiter Art gehaltert.

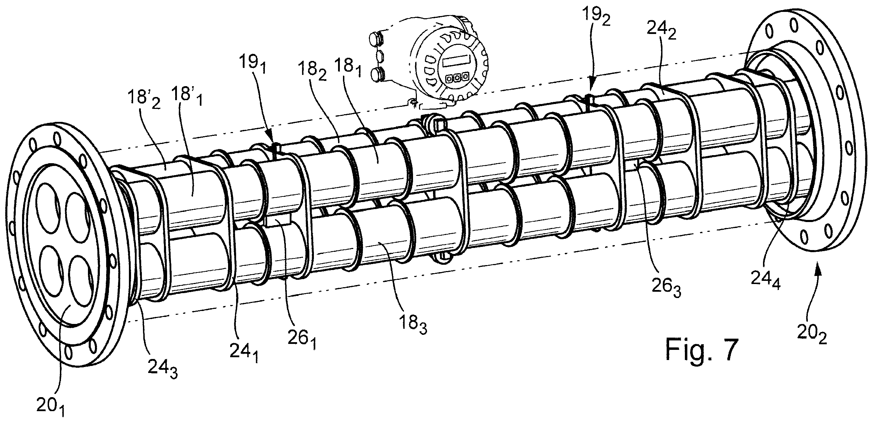

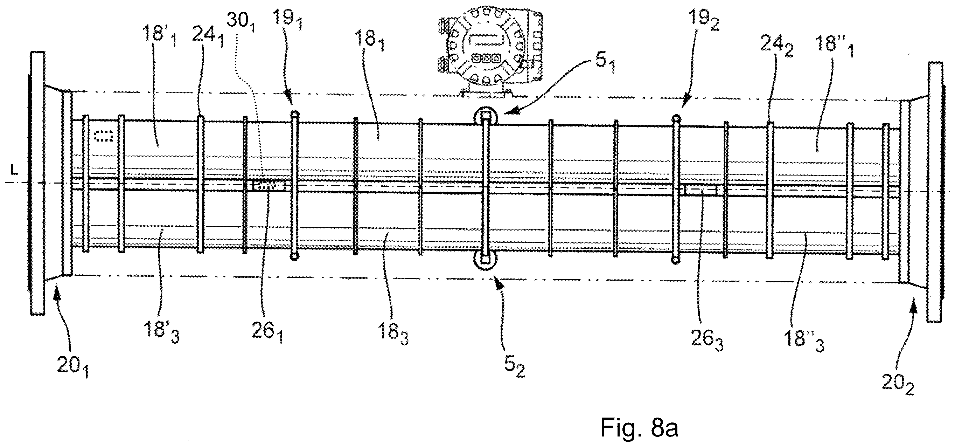

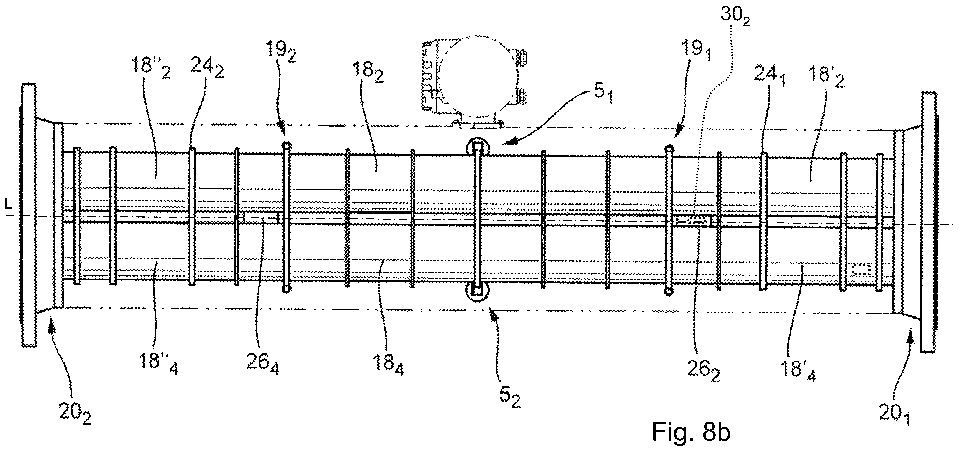

Zur weiteren Verbesserung der Schwingungsgüte des Innenteils bei möglichst kurzer Einbaulänge L₁₁ des Meßaufnehmers 11 bzw. möglichst kurzer freier Schwinglänge L₁₈ₓ der Meßrohre 18₁, 18₂, 18₃ bzw. 18₄ umfaßt der Meßaufnehmer gemäß einer weiteren Ausgestaltung der Erfindung eine Vielzahl von ringförmigen, insb. einander baugleichen, Versteifungselementen 22_{1A},...22_{2A},...22_{3A},...22_{4A},... von denen jedes an genau einem der Meßrohre 18₁, 18₂, 18₃, 18₄ so angebracht ist, daß es dieses entlang einer von dessen, insb. zirkulär umlaufenden, gedachten Umfangslinien umgreift, vgl. hierzu auch die eingangs erwähnte US-B 69 20 798. Im besonderen ist hierbei ferner vorgesehen, daß auf jedem der Meßrohre 18₁, 18₂, 18₃ bzw. 18₄, wenigstens vier, insb. baugleiche, nämlicher Versteifungselemente 22_{1A}, 22_{1B}, 22_{1C}, 22_{1D} bzw. 22_{2A}, 22_{2B}, 22_{2C}, 22_{2D} bzw. 22_{3A}, 22_{3B}, 22_{3C}, 22_{3D} bzw. 22_{4A}, 22_{4B}, 22_{4C}, 22_{4D} angebracht sind. Die Versteifungselementen 22_{1A},...22_{2A},...22_{3A},...22_{4A},... sind in vorteilhafter Weise so im Meßaufnehmer 11 plaziert, daß zwei auf demselben Meßrohr angebrachte, benachbarte Versteifungselementen zueinander einen Abstand aufweisen, der mindestens 70% eines Rohr-Außendurchmessers nämlichen Meßrohrs, höchstens aber 150% selbigen Rohr-Außendurchmessers beträgt. Als besonders geeignet hat sich hierbei ein gegenseitiger Abstand benachbarter Versteifungselementen erwiesen, der im Bereich von 80% bis 120% des Rohr-Außendurchmessers des jeweiligen Meßrohrs 18₁, 18₂, 18₃ bzw. 18₄ liegt. Alternativ oder in Ergänzung dazu ist zur Verbesserung der Schwingungseigenschaften des Innenteils und insoweit auch zur Verbesserung der Meßgenauigkeit des Meßaufnehmers ferner vorgesehen, daß der Meßaufnehmer, wie in den Fign. 7, 8a, 8b schematisch dargestellt, desweiteren plattenförmige Versteifungselemente 26₁, 26₂, 26₃, 26₄ zum Einstellen der natürlichen Eigenfrequenzen von Biegeschwingungen der Meßrohre 18₁, 18₂, 18₃ bzw. 18₄ auch in jenen Schwingungsebenen YZ₁, YZ₂, die, wie in Zusammenschau auch mit den Fign. 3a, 3b ersichtlich, zu den oben erwähnten Schwingungsebene XZ₁, XZ₂ im wesentlichen senkrecht sind, aufweist. Die, beispielsweise einander baugleichen, plattenförmigen Versteifungselemente 26₁, 26₂, 26₃, 26₄ sind dabei im besonderen so ausgebildet und jeweils so mit den Meßrohren verbunden, daß im Ergebnis zumindest die Biegeschwingungs-Resonanzfrequenzen der Biegeschwingungen der Meßrohre 18₁, 18₂, 18₃ bzw. 18₄ in dem in den vorgenannten - primären - Schwingungsebenen XZ₁, XZ₂ angeregten Nutzmode stets niedriger sind, als die natürlichen Eigenfrequenzen von Biegeschwingungen der Meßrohre , die von gleicher modaler Ordnung wie der Nutzmode sind, jedoch innerhalb der - insoweit sekundären - Schwingungsebenen YZ₁, YZ₂ ausgeführt würden. Dadurch kann auf sehr einfache, gleichwohl sehr effektive Weise hinsichtlich der jeweiligen Resonanzfrequenzen der Meßrohre eine signifikante Separierung der Biegeschwingungsmoden der Meßrohre in den zueinander senkrechten - hier primären und sekundären - Schwingungsebenen des Innenteils bzw. der Meßrohre erzielt werden.

Dafür umfaßt der Meßaufnehmer in einer weiteren, aus der Zusammenschau der Fig. 7, 8a, 8b ohne weiteres ersichtlichen, Ausgestaltung der Erfindung ein erstes plattenförmiges Versteifungselement 26₁, das zum Einstellen einer oder mehrerer Resonanzfrequenzen von Biegeschwingungen des ersten Meßrohrs 18₁ und des dritten Meßrohrs 18₃ in einer zu den - primären - Schwingungsebenen XZ₁ bzw. XZ₂ jeweils im wesentlichen senkrechten - sekundären - dritten Schwingungsebene YZ₁ am ersten Meßrohr 18₁ und am dritten Meßrohr 18₃ fixiert ist, und zwar jeweils an einem zwischen dem ersten Schwingungserreger 5₁ und dem ersten Strömungsteiler 20₁ liegenden Segment 18'₁, 18'₃ des ersten bzw. dritten Meßrohrs 18₁, 18₃.

Ferner umfaßt der Meßaufnehmer bei dieser Ausgestaltung der Erfindung ein zweites plattenförmiges Versteifungselement 26₂, das zum Einstellen einer oder mehrerer Resonanzfrequenzen von Biegeschwingungen des zweiten Meßrohrs 18₂ und des vierten Meßrohrs 18₄ in einer zu den - primären - Schwingungsebenen XZ₁ bzw. XZ₂ im wesentlichen senkrechten - insoweit also auch zur vorgenannten dritten Schwingungsebene YZ₁ im wesentlichen parallelen, sekundären - vierten Schwingungsebene YZ₂ am zweiten Meßrohr 18₂ und am vierten Meßrohr 18₄ fixiert ist, nämlich jeweils an einem zwischen dem ersten Schwingungserreger 5₁ und dem ersten Strömungsteiler 20₁ liegenden Segment 18'₂, 18'₄ des zweiten bzw. vierten Meßrohrs 18₂, 18₄. Außerdem weist der Meßaufnehmer ein drittes plattenförmiges Versteifungselement 26₃, das zum Einstellen nämlicher Resonanzfrequenzen des ersten Meßrohrs 18₁ und des dritten Meßrohrs 18₃ in der dritten Schwingungsebene YZ₁ am ersten Meßrohr 18₁ und am dritten Meßrohr 18₃ fixiert ist - hier jeweils an einem zwischen dem ersten Schwingungserreger 5₁ und dem zweiten Strömungsteiler 20₂ liegenden Segment 18"₁, 18"₃ des ersten bzw. dritten Meßrohrs 18₁, 18₃ - sowie ein viertes plattenförmiges Versteifungselement 26₄, das zum Einstellen nämlicher Resonanzfrequenzen des zweiten Meßrohrs 18₂ und des vierten Meßrohrs 18₄ in der vierten Schwingungsebene YZ₂ am zweiten Meßrohr 18₂ und am vierten Meßrohr 18₄ fixiert ist - hier jeweils an einem ebenfalls zwischen dem ersten Schwingungserreger 5₁ und dem zweiten Strömungsteiler 20₂ liegenden Segment 18"₂, 18"₄ des zweiten bzw. vierten Meßrohrs 18₂, 18₄. Beispielsweise können hierbei die ersten und zweiten plattenförmigen Versteifungselemente 26₁, 26₂ jeweils zwischen dem ersten Schwingungssensor 19₁ und dem ersten Strömungsteiler 20₁, insb. auch zwischen oben erwähnten ersten und dritten Kopplerelementen 24₁, 24₃ erster Art sowie die dritten und vierten plattenförmige Versteifungselement 26₃, 24₄ jeweils zwischen dem zweiten Schwingungssensor 19₂ und dem zweiten Strömungsteiler 20₂, insb. auch zwischen den oben erwähnten zweiten und vierten Kopplerelementen 24₂, 24₄ erster Art plaziert sein. Die plattenförmigen Versteifungselemente können beispielsweise aber auch so im Meßaufnehmer angeordnet werden, daß, wie auch aus der Zusammenschau der Fig. 7, 8a, 8b ersichtlich, das erste und zweite plattenförmige Versteifungselement 26₁, 26₂ jeweils zwischen dem ersten Kopplerelement 24₁ erster Art und dem ersten Schwingungssensor 19₁ plaziert ist; und das dritte und vierte plattenförmige Versteifungselement 26₃, 26₄ jeweils zwischen dem zweiten Kopplerelement 24₂ erster Art und dem zweiten Schwingungssensor 19₂ plaziert ist.

Die plattenförmigen Versteifungselemente können durch Löten oder Schweißen mit den jeweiligen Meßrohren verbunden sein. Beispielsweise können die Versteifungselemente dabei in der Weise mit den Meßrohren verbunden sein, daß, wie auch aus der Zusammenschau der Fig. 7, 8a, 8b ersichtlich, das erste plattenförmige Versteifungselement 26₁ an dem zwischen dem ersten Schwingungssensor 19₁ und dem ersten Strömungsteiler 20₁ liegenden Segment 18'₁ des ersten Meßrohrs 18₁ entlang einer von dessen geraden Seitenlinien - hier etwa der dem dritten Meßrohr 18₃ nächstliegenden - sowie an dem gleichermaßen zwischen dem ersten Schwingungssensor 19₁ und dem ersten Strömungsteiler 20₁ liegenden Segment 18'₃ des dritten Meßrohrs 18₃ entlang einer von dessen geraden Seitenlinien - hier etwa der dem ersten Meßrohr nächstliegenden- fixiert sein. In dazu analoger Weise sind dann auch das zweite plattenförmige Versteifungselement 26₂ an den jeweils zwischen dem ersten Schwingungssensor 19₁ und dem ersten Strömungsteiler 20₁ liegenden Segmenten 18'₂ bzw.18'₄ des zweiten und vierten Meßrohrs 18₂, 18₄, das dritte plattenförmige Versteifungselement 26₃ an den jeweils zwischen dem zweiten Schwingungssensor 19₂ und dem zweiten Strömungsteiler 20₂ liegenden Segmenten 18"₁ bzw. 18"₃ des ersten und dritten Meßrohrs 18₁, 18₃ sowie das vierte plattenförmige Versteifungselement 26₄ an den jeweils zwischen dem zweiten Schwingungssensor 19₂ und dem zweiten Strömungsteiler 20₂ liegenden Segment 18"₂, 18"₄ des zweiten und vierten Meßrohrs 18₂, 18₄ entsprechend zu fixieren, und zwar jeweils entlang einer von den geraden Seitenlinien des jeweiligen Meßrohrs. Zum Erzielen einer ausreichenden Separierung der Resonanzfrequenzen ist jedes der vier plattenförmigen Versteifungselemente 26₁, 26₂, 26₃, 26₄ gemäß einer weitern Ausgestaltung der Erfindung ferner jeweils so ausgebildet und so im Meßaufnehmer plaziert, daß es eine einem kleinsten Abstand zwischen den Seitenlinien jener beiden Meßrohre 18₁, 18₃ bzw. 18₂, 18₄, entlang denen es jeweils fixiert ist, entsprechende Höhe aufweist, die kleiner ist als eine in Richtung nämlicher Seitenlinien gemessene Länge des jeweiligen plattenförmigen Versteifungselements 26₁, 26₂, 26₃, 26₄, beispielsweise derart, daß die Höhe weniger als 50%, insb. weniger als 30%, nämlicher Länge beträgt. Desweiteren ist es von Vorteil, wenn jedes der vier plattenförmigen Versteifungselemente 26₁, 26₂, 26₃, 26₄ zudem jeweils so ausgebildet ist, daß die Länge jedes der plattenförmigen Versteifungselemente größer ist, beispielsweise mehr als das Doppelte, insb. mehr als das 5-fache, als eine - quer zu Länge und Höhe gemessene - zugehörige Breite des nämlichen plattenförmigen Versteifungselements 26₁, 26₂, 26₃, 26₄. Alternativ zur Fixierung an den jeweils am nächsten liegende Seitenlinien können die Versteifungselemente beispielsweise aber auch, insb. auch unter Wahrung vorgenannter Höhe-zu-Breite-zu-Länge-Verhältnisse, so ausgebildet und mit den Meßrohren so verbunden sein, daß jedes der Versteifungselemente die jeweiligen zwei Meßrohre im wesentlichen tangential kontaktiert, beispielsweise jeweils entlang der am weitesten außen oder jeweils entlang der am weitesten innen liegenden Seitenlinie jedes der Meßrohre.

Wie bereits erwähnt kann der Meßaufnehmer des erfindungsgemäßen Meßsystem trotz seiner sehr kompakten Bauweise temporär deformiert werden. Solche - zumeist reversiblen - Deformationen können beispielsweise thermisch bedingt sein, etwa als Folge unterschiedlicher thermischer Ausdehnungskoeffizienten der für die Meßrohre und das Aufnehmer-Gehäuse jeweils verwendeten Materialien und/oder als Folge von Temperaturgradienten zwischen den Meßrohren und dem Aufnehmer-Gehäuse, und/oder durch äußere Kräfte, wie etwa via angeschlossener Rohrleitung in den Meßaufnehmer eingetragenen Einspannkräfte, und/oder hohen Mediumsdruck verursacht sein, Im Ergebnis solcher Deformationen bzw. Verzerrungen des Meßaufnehmers können nicht zuletzt auch translatorische Dehnungen, eines oder mehrerer der Meßrohre, also Änderungen von deren jeweiliger Meßrohrlänge (Verlängerung bzw. Verkürzung), und damit einhergehend zu einer unerwünschten, weil das Schwingungsverhalten der Meßrohre in einer für die angestrebte hohe Meßgenauigkeit signifikanten Weise beeinflussenden, Änderung des momentanen Spannungszustands, nämlich der räumlichen Verteilung aller mechanischen Spannungen innerhalb des Meßaufnehmers, auftreten; dies überraschenderweise auch für die erwähnten Fälle großer nomineller Nennweite von mehr als 150 mm und vergleichsweise kurzer freie Schwinglänge L₁₈ₓ von weniger als 2000 mm bzw. vergleichsweise großen Kaliber-zu- Schwinglänge-Verhältnissen, D₁₈/L₁₈ₓ, von mehr als 0.09.

Dem Rechnung tragend ist beim erfindungsgemäßen Meßsystem die Meßschaltung ferner dafür eingerichtet beim Erzeugen des Dichte-Meßwerts und/oder des Massendurchfluß-Meßwerts eine von vorgenannten Deformationen des Meßaufnehmers bzw. den daraus resultierenden Änderungen des Spannungszustands des Meßaufnehmers verursachte Änderung von wenigstens einer charakteristischen Größe, etwa einer Signalfrequenz, der vom Meßwandler gelieferten Schwingungsmeßsignale, beispielsweise also eine Änderung von deren Signalfrequenz und/oder eine Änderung einer Phasendifferenz zwischen den zwei mittels der Vibrationssensoranordnung generierten Schwingungsmeßsignalen und/oder zwischen dem wenigstens einen Schwingungsmeßsignal und dem wenigstens einen Treibersignal, zu korrigieren, mithin also den schädlichen Einfluß von Deformationen des Meßaufnehmers auf die Meßgenauigkeit, mit Dichte-Meßwerte bzw. Massendurchfluß-Meßwerte erzeugt werden, entsprechend zu kompensieren. Der Referenz-Spannungszustand kann beispielsweise vorab im Zuge herstellerseitig, etwa im Werk, und/oder in Einbaulage, also bei in die Rohrleitung betriebsfähig eingebautem Meßaufnehmer, durchgeführten Kalibrierung des Meßsystems ermittelt werden, beispielsweise inform eines entsprechenden Nullabgleichs der Meßschaltung.

Nach einer weiteren Ausgestaltung der Erfindung weist der Meßaufnehmer daher ferner eine, beispielsweise mittels durch die erwähnte Durchführung hindurchgeführter Verbindungsleitungen mit der Umformer-Elektronik elektrisch verbundene, Deformationsmeßanordnung 30 zum sensorischen Erfassen einer solchen, nicht zuletzt auch ein Schwingungsverhalten der Meßrohre beeinflussenden und/oder eine Veränderung wenigstens einer Resonanzfrequenz des Meßaufnehmers bewirkenden, Deformation des Meßaufnehmers auf, beispielsweise zum direkten sensorischen Erfassen einer Dehnung eines oder mehrerer der Meßrohre. Die Deformationsmeßanordnung ist gemäß einer weiteren Ausgestaltung der Erfindung mittels wenigstens eines, etwa als Halbleiter-Dehnungsmeßstreifen oder als Metallgitter-Dehnungsmeßstreifen ausgebildeten - beispielsweise außen auf dem Meßrohr fixierten - Sensorelements 30₁ gebildet, das einen von einer Verformung des Meßaufnehmers - hier einer Dehnung eines oder mehrerer der Meßrohre - abhängigen ohmschen Widerstand aufweist. Das, insb. als Dehnungsmeßstreifen ausgebildete, Sensorelement kann beispielsweise direkt auf einer äußeren Rohrwand-Oberfläche eines der Meßrohre, beispielsweise mittels Epoxydharz, adhäsiv fixiert sein, etwa derart, daß es auf Änderungen der - hier dem jeweiligen minimalen Abstand zwischen der mit dem jeweiligen ersten Meßrohrende korrespondierenden Strömungsöffnung 20_{1A} des ersten Strömungsteilers 20₁ und der mit dem jeweiligen zweiten Meßrohrende korrespondierenden Strömungsöffnung 20_{2A} des zweiten Strömungsteilers 20₂ entsprechenden - Meßrohrlänge des nämlichen Meßrohrs mit einer Änderung seines ohmschen Widerstands reagiert, und/oder daß es mit nämlichem Meßrohr flächig verbunden ist; falls erforderlich kann es aber beispielsweise auch mit dem jeweiligen Meßrohr verlötet sein. Sowohl für den Fall des Verklebens als auch des Verlötens des wenigstens eines -im Betrieb also allfällige Dehnungen des jeweiligen Meßrohrs direkt erfassende - Sensorelements auf der äußeren Rohrwand-Oberfläche des nämlichen Meßrohrs ist letzteres zwecks optimaler Erfassung der Dehnung möglichst derart zu fixieren, daß es einen davon überdeckten Detektionsbereich auf nämlicher Rohrwand-Oberfläche zumindest teilweise flächig kontaktiert bzw. daß es mit einem davon überdeckten Detektionsbereich auf nämlicher Rohrwand-Oberfläche flächig, insb. vollflächig, verbunden ist.

Gemäß einer weiteren Ausgestaltung der Erfindung ist ferner vorgesehen, daß wenigstens eine Sensorelement auf der äußeren Rohrwand-Oberfläche eines der Meßrohre so zu plazieren, daß ein von nämlichen Sensorelement überdeckter, ggf. auch von diesem flächig kontaktierter und/oder damit flächig verbundener, Detektionsbereich auf nämlicher Rohrwand-Oberfläche wenigstens eine Zone aufweist, in der die mittels der Erregeranordnung angeregten gegengleichen Biegeschwingungen keine, jedenfalls aber keine für die Meßgenauigkeit erheblichen, Biegespannungen verursachen. Anders gesagt ist also der Detektionsbereich des wenigstens einen Sensorelements 30₁ so gewählt, daß er möglichst genau auf jener neutralen Faser liegt, die den mit den Biegeschwingungen im Nutzmode einhergehenden Verbiegungen des nämlichen Meßrohrs zugehörig ist. Bei einem Meßaufnehmer des erfindungsgemäßen Meßsystems verläuft eine der nämlichen neutralen Fasern jedes der Meßrohre, wie u.a. auch aus der Zusammenschau der Fig. 3a, 3b, 4, 5a, 5b, 6a, 6b ersichtlich, beispielsweise jeweils auch in einem am weitesten von der Längsachse L des Meßaufnehmers entfernten, mittels entlang der Schwingungsebenen XZ₁, XZ₂, YZ₁, YZ₂ imaginär gelegter Schnitte erzeugten Viertel-Sektor jedes der Meßrohre. In den hier gezeigten Ausführungsbeispielen verläuft also eine der nämlichen neutralen Fasern, mithin auch für die Plazierung des Sensorelements 30₁ gut geeignete neutrale Faser, jedes der Meßrohre also jeweils oberhalb eines der Schwingungsebene XZ₁ entsprechenden Schnittes bzw. jeweils unterhalb eines der Schwingungsebene XZ₂ entsprechenden Schnittes sowie in Strömungsrichtung gesehen jeweils rechtsseitig eines der Schwingungsebene YZ₁ entsprechenden Schnittes bzw. jeweils linksseitig eines der Schwingungsebene YZ₂ entsprechenden Schnittes.

Nach einer weiteren Ausgestaltung der Erfindung ist ferner vorgesehen, daß die Deformationsmeßanordnung mittels wenigstens zwei, insb. im wesentlichen baugleichen und/oder elektrisch seriell verschalteten, Sensorelementen 30₁, 30₂ mit verformungsabhängigem elektrischen Widerstand gebildet ist. Demnach umfaßt die Deformationsmeßanordnung 30 in zumindest in diesem Fall ein einen von einer Verformung des Meßaufnehmers abhängigen ohmschen Widerstand aufweisenden, etwa wiederum als Halbleiter-Dehnungsmeßstreifen oder als Metallgitter-Dehnungsmeßstreifen ausgebildetes, erstes Sensorelement 30₁ und wenigstens ein einen von einer Verformung des Meßaufnehmers abhängigen ohmschen Widerstand aufweisenden, ggf. wiederum als Halbleiter-Dehnungsmeßstreifen oder als Metallgitter-Dehnungsmeßstreifen ausgebildetes, zweites Sensorelement 30₂. Im besonderen ist hierbei ferner vorgesehen, daß das erste Sensorelement 30₁ der Deformationsmeßanordnung am ersten Meßrohr fixiert ist, vorzugsweise so, daß mittels des ersten Sensorelements 30₁ eine die Meßrohrlänge des ersten Meßrohres verändernde translatorische Dehnung des ersten Meßrohrs 18₁ erfaßbar ist. Das zweite Sensorelement 30₂ der Deformationsmeßanordnung ist ebenfalls an einem der Meßrohre fixiert, vorzugsweise an einem anderen als dem ersten Meßrohr und/oder derart, daß auch mittels des zweiten Sensorelements 30₂ eine die Meßrohrlänge des tragenden Meßrohres verändernde translatorische Dehnung des nämlichen Meßrohrs erfaßbar ist. Als besonders geeignete Variante für die Deformationsmeßanordnung 30 hat es sich hierbei gezeigt, das zweite Sensorelement 30₂, wie auch aus der Zusammenschau der Fig. 5a, 5b bzw. 6b ersichtlich, an dem Meßrohr zu fixieren, das von dem das erste Sensorelement 30₁ tragenden am weitesten seitlichen beabstandet ist - im hier gezeigten Ausführungsbeispiel also dem vierten Meßrohr 18₄. Dies ist nicht zuletzt auch deshalb sehr vorteilhaft, weil für die angestrebte Meßgenauigkeit dann durchaus auch zwei Sensorelemente für die Deformationsmeßanordnung ausreichend sein können. Alternativ oder in Ergänzung sind die wenigstens zwei Sensorelement der Deformationsmeßanordnung 30 ferner so im Meßaufnehmer plazierte, daß das erste Sensorelement und das zweite Sensorelement in einer, nämlich ein und derselben, gedachten Schnittebene des Meßaufnehmers liegen, in der eine zur erwähnten Längsachse L des Meßaufnehmers verläuft. Im hier gezeigten Ausführungsbeispiel sind das erste Sensorelement 30₁ und das zweite Sensorelement 30₂ dabei zudem so plaziert, daß sie, wie auch aus der Fig. 6b ersichtlich, von der in der gemeinsamen gedachten Schnittebene verlaufenden Längsachse L möglichst äquidistant entfernt sind, bzw. daß die mittels der beiden Sensorelemente gebildete Deformationsmeßanordnung 30, bezogen auf nämliche Längsachse, im wesentlichen punktsymmetrisch ist.

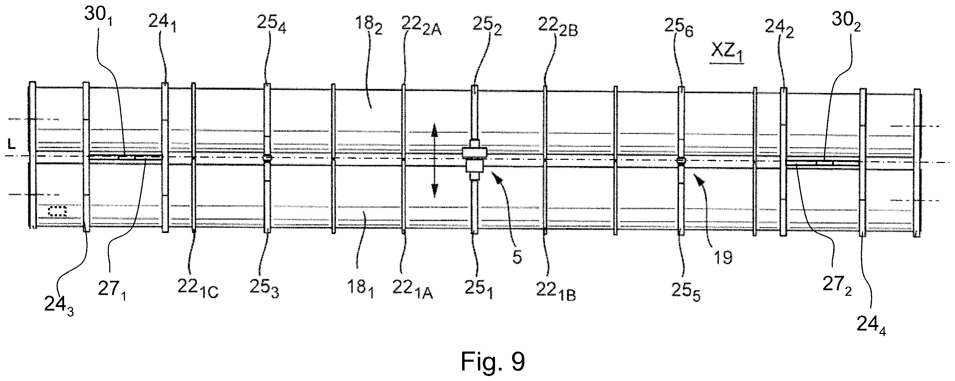

Für den erwähnten Fall, daß im Meßaufnehmer plattenförmige Versteifungselemente 26₁, 26₂, 26₃, 26₄ zum Einstellen der natürlichen Eigenfrequenzen von Biegeschwingungen der Meßrohre 18₁, 18₂, 18₃ bzw. 18₄ in den Schwingungsebenen YZ_{1,} YZ₂ vorgesehen sind, kann das wenigstens eine Sensorelement der Deformationsmeßanordnung 30 bzw. wenigstens eines der Sensorelemente der Deformationsmeßanordnung 30 aber beispielsweise auch auf einem der nämlichen Versteifungselemente 26₁, 26₂, 26₃, 26₄ fixiert sein, etwa derart, daß das Sensorelement auf eine Dehnung der mit nämlichem Versteifungselement verbundenen Meßrohre mit einer Änderung seines ohmschen Widerstands reagiert. Beispielsweise kann das erste Sensorelement 30₁ der Deformationsmeßanordnung 30, wie in der Fig. 9 schematisch dargestellt, hierbei auf dem ersten 27₁ Versteifungselement angebracht werden, so daß das erste Sensorelement 30₁ im Ergebnis auf eine Dehnung des ersten und/oder dritten Meßrohrs, einhergehend mit einer entsprechenden Dehnung des ersten Versteifungselement 27₁, mit einer Änderung seines ohmschen Widerstands reagiert, und/oder kann das zweite Sensorelement 30₂ der Deformationsmeßanordnung auf dem zweiten Versteifungselement 27₂ angebracht werden, so daß das zweite Sensorelement im Ergebnis auf eine Dehnung des zweiten und/oder vierten Meßrohrs, einhergehend mit einer entsprechenden Dehnung des zweiten Versteifungselement, mit einer Änderung seines ohmschen Widerstands reagiert.

Für den anderen erwähnten Fall, daß einlaßseitig und auslaßseitig jeweils wenigstens zwei Kopplerelemente erster Art vorgesehen sind, sind gemäß einer weiteren Ausgestaltung der Erfindung das erste und dritte Kopplerelement erster Art mittels eines daran jeweils fixierten, beispielsweise stab- oder plattenförmigen bzw. zu den Meßrohren beabstandet und parallel verlaufenden, ersten Kopplerverbindungselement 27₁ (zusätzlich zu der durch die Meßrohre ohnehin hergestellten Verbindung) verbunden. Letzteres kann dann - auch alternativ oder in Ergänzung zu den bereits erwähnten Positionen für Sensorelemente der Deformationsmeßanordnung, wie etwa eines der Meßrohre selbst oder eines der dies paarweise verbindenden plattenförmigen Versteifungselemente 26₁, 26₂, 26₃, 26₄ - dem Haltern und Anregen des wenigstens einen Sensorelements der Deformationsmeßanordnung dienen. Demnach ist gemäß einer anderen Ausgestaltung der Erfindung das wenigstens eine Sensorelement der Deformationsmeßanordnung auf dem ersten Kopplerverbindungselement fixiert, etwa derart, daß nämliches Sensorelement auf eine Dehnung eines oder mehrerer der Meßrohre, übertragen auf das Kopplerverbindungselement, mit einer Änderung seines ohmschen Widerstands reagiert. Zwecks Erhöhung der Empfindlichkeit und/oder zwecks der Detektion asymmetrischer Deformationen des Meßaufnehmers kann es ferner von Vorteil sein, auch noch ein sowohl am zweiten als auch am vierten Kopplerelement fixiertes, beispielsweise wiederum stab- oder plattenförmiges und/oder zu den Meßrohren parallel verlaufendes und/oder zum ersten Kopplerverbindungselement baugleiches, zweites Kopplerverbindungselement 27₂ vorzusehen, so daß im Falle wenigstens zweier Sensorelemente für die Deformationsmeßanordnung 30 dann beispielsweise das erste Sensorelement der Deformationsmeßanordnung in der vorbeschriebenen Weise auf dem ersten Kopplerverbindungselement 27₁ und/oder das zweite Sensorelement der Deformationsmeßanordnung 30 gleichermaßen auf dem zweiten Kopplerverbindungselement 27₂ fixiert sein können.

Alternativ oder in Ergänzung zur Verwendung von einem oder mehreren an jeweils einem Meßrohr fixierten Sensorelementen 30₁, 30₂ kann die Deformationsmeßanordnung 30 zudem aber auch mittels wenigstens eines am Aufnehmer-Gehäuse fixierten und auf allfällige Deformationen desselben mit einer Änderungen eines ohmschen Widerstanderstandes reagierenden Sensorelements gebildet sein.

Für den mehrfach erwähnten Fall, daß die Deformationsmeßanordnung 30 mit zwei oder mehreren beispielsweise jeweils als Dehnungsmeßstreifen realisierten, Sensorelementen gebildet ist, sind zudem das erste Sensorelement und das zweite Sensorelement der Deformationsmeßanordnung 30 nach einer weiteren Ausgestaltung der Erfindung mittels wenigstens eines innerhalb des Aufnehmergehäuses verlaufenden Drahtes miteinander elektrisch verbunden, insb. in der Weise, daß die wenigstens zwei oder ggf. noch weiteren Sensorelemente der Deformationsmeßanordnung elektrisch seriell verschaltet sind; dies nicht zuletzt auch deshalb, um einerseits die Empfindlichkeit der Deformationsanordnung 30 auf die zu erfassende(n) Deformation(en) zu erhöhen und anderseits die Anzahl der Verbindungsleitungen durch die erwähnte Durchführung insgesamt hindurch zur Umformer-Elektronik 12 zu führenden möglichst klein zu halten. Nicht zuletzt für den erwähnten Fall, daß das zweite oder ein weiteres Sensorelement der Deformationsmeßanordnung 30 zwecks direkter Erfassung von allfälligen Verformungen des Aufnehmergehäuses unmittelbar an diesem fixiert ist kann es von Vorteil sein, dieses mit einer anderen Empfindlichkeit auf Dehnung als das, etwa am Meßrohr fixierte, erste Sensorelement auszulegen, beispielsweise durch Verwendung unterschiedlicher Widerstände für das erste und zweite Sensorelement, und somit die unterschiedlichen erfaßten Deformationen bzw. deren Einfluß auf das Schwingungsverhalten der Meßrohre, mithin der damit gebildeten Rohranordnung, schon bei der Detektion entsprechend zu gewichten.

Alternativ oder in Ergänzung zur vorgenannten Verwendung eines oder mehrerer, etwa als Dehnungsmeßstreifen ausgebildeten und/oder auf Dehnungen eines oder mehrerer der Meßrohre mit Änderungen eines jeweiligen ohmschen Widerstands reagierenden, Sensorelementen kann die Meßschaltung die Änderung des Spannungszustands im Meßaufnehmer und/oder die Abweichung des momentanen Spannungszustands im Meßaufnehmer von dem dafür vorgegebenen Referenz-Spannungszustand auch mittels des wenigstens einen von der Vibrationssensoranordnung erzeugten Vibrationen der Meßrohre repräsentierenden Schwingungsmeßsignals ermitteln und bei der Generierung der Meßwerte entsprechend korrigierende einfließen lassen, beispielsweise indem mittels der Treiberschaltung zwei- oder mehrmodale Schwingungen der Meßrohre mittles der Erregeranordnung aktiv angeregt werden, so daß im Ergebnis das wenigstens eine Schwingungssignal dementsprechend zwei oder mehr Signalkomponenten von unterschiedlicher Signalfrequenz aufweist. Änderungen von deren jeweiligen Beitrag zum Gesamtspektrum des Schwingungssignals bzw. Änderungen von Amplituden einzelner Schwingungsmoden relativ zueinander können dabei als ein Maß für die zu detektierende Deformation des Meßaufnehmers, mithin als Maß für die Änderung von dessen Spannungszustand, bzw. als ein Maß für den aus nämlicher Änderung des Spannungszustands resultierenden Meßfehler dienen.

Zur Separierung von auf thermisch bedingte Deformation und thermisch bedingte Änderung der Nachgiebigkeit bzw. des E-Moduls einzelner Komponenten des Meßaufnehmers zurückzuführender Änderungen des Schwingverhaltens der Meßrohre von eher auf äußere Krafteinwirkung zurückzuführenden Deformationen des Meßaufnehmers, mithin auf äußere Krafteinwirkung zurückzuführenden Änderungen von dessen Spannungszustand, weist die das Meßsystem nach einer weiteren Ausgestaltung der Erfindung zudem eine, insb. mittels eines auf einem der Meßrohre fixierten Widerstandsthermometer und/oder mittels eines am Aufnehmergehäuse fixierten Widerstandsthermometer gebildete, Temperaturmeßanordnung 40 zum Erfassen einer, insb. ein Schwingungsverhalten der Meßrohre beeinflussenden und/oder eine Veränderung wenigstens einer Resonanzfrequenz zumindest eines der Meßrohre bewirkenden, Temperatur des Meßaufnehmers, insb. Temperatur eines oder mehrerer der Meßrohre, auf. Beispielsweise kann die Temperaturmeßanordnung mittels eines, insb. auf einem der Meßrohre fixierten, Widerstandsthermometer gebildet sein, das einen von einer Temperatur des Meßaufnehmers, insb. einer Temperatur eines der Meßrohre, abhängigen ohmschen Widerstand aufweist; alternativ oder in Ergänzung kann die Temperaturmeßanordnung 40 aber beispielsweise auch mittels eines oder mehren entsprechend im Meßaufnehmer plazierten Thermoelementen gebildet sein.

Darüberhinaus können, wie bei Meßaufnehmern der in Rede stehenden Art durchaus üblich, zusätzlich zu den Schwingungssensoren der Vibrationsmeßanordnung, sowie den ggf. vorhandenen Sensorelementen der Deformationsmeßanordnung bzw. der Temperaturmeßanordnung weitere, insb. Hilfs- bzw. Störgrößen erfassende, Sensoren im Meßaufnehmer vorgesehen sein, wie z.B. Beschleunigungssensoren und/oder Drucksensoren, mittels denen beispielsweise die Funktionstüchtigkeit des Meßaufnehmers und/oder Änderungen der Empfindlichkeit des Meßsaufnehmers auf die primär zu erfassenden Meßgrößen, insb. die Massendurchflußrate und/oder die Dichte, infolge von Querempfindlichkeiten bzw. äußeren Störungen überwacht und ggf. entsprechend kompensiert werden können.

Durch die Verwendung von vier statt wie bisher zwei parallel durchströmten Meßrohren in Kombination mit einer auch mechanische Spannungen bzw. Deformationen erfassenden Meßschaltung ist es somit auch möglich, Meßsysteme der beschriebenen Art auch für große Massendurchflußraten bzw. mit großen nominellen Nennweiten von weit über 250 mm einerseits mit einer Meßgenauigkeit von über 99,8% bei einem akzeptablem Druckabfall, insb. von etwa 1bar oder weniger, kostengünstig herzustellen, und andererseits die Einbaumaße wie auch die Leermasse der darin verwendeten Meßaufnehmer soweit in Grenzen zu halten, daß trotz großer Nennweite die Herstellung, der Transport, der Einbau wie auch der Betrieb immer noch wirtschaftlich sinnvoll erfolgen kann. Besonders auch durch Realisierung voranstehend erläuterter, die Erfindung weiter ausgestaltender Maßnahmen - einzeln oder auch in Kombination - können Meßsysteme der in Rede stehenden Art auch bei großer nomineller Nennweite so ausgeführt und so dimensioniert werden, daß ein durch ein Verhältnis der erwähnten Leermasse des Meßaufnehmers zu einer Gesamtmasse des mittels der vier Meßrohre und der daran gehalterten Erreger- und Vibrationssensoranordnung sowie ggf. weiteren an den Meßrohren fixierten und deren Schwingungsverhalten beeinflussenden Komponenten des Meßaufnehmers gebildeten Innenteils definiertes Massenverhältnis des Meßaufnehmers ohne weiteres kleiner als 3, insb. kleiner als 2.5, gehalten werden kann.

## Patentansprüche

1. Meßsystem zum Messen einer Dichte, insb. auch einer Massendurchflußrate und/oder eines über ein Zeitintervall totalisierten Gesamt-Massendurchflusses und/oder einer Viskosität, eines in einer Rohrleitung zumindest zeitweise, insb. mit einer Massendurchflußrate von mehr als 2200 t/h, strömenden Mediums, welches Meßsystem umfaßt:
- einen Meßaufnehmer vom Vibrationstyp zum Erzeugen von Schwingungsmeßsignalen, wobei der Meßaufnehmer
-- ein Aufnehmer-Gehäuse (7₁), von dem ein einlaßseitiges erstes Gehäuseende mittels eines genau vier jeweils voneinander beabstandeten Strömungsöffnungen (20_{1A}, 20_{1B}, 20_{1C}, 20_{1D}) aufweisenden einlaßseitigen als integraler Bestandteil des Gehäuses (7₁) gebildeten ersten Strömungsteilers (20₁) und ein auslaßseitiges zweites Gehäuseende mittels eines genau vier jeweils voneinander beabstandeten Strömungsöffnungen (20_{2A}, 20_{2B}, 20_{2C}, 20_{2D}) aufweisenden auslaßseitigen, als integraler Bestandteil des Gehäuses (7₁) gebildeten zweiten Strömungsteilers (20₂) gebildet sind,
-- genau vier unter Bildung strömungstechnisch parallel geschalteter Strömungspfade an die Strömungsteiler (20₁, 20₂) angeschlossene Meßrohre (18₁, 18₂, 18₃, 18₄) zum Führen von strömendem Medium, von denen
--- ein erstes Meßrohr (18₁) mit einem einlaßseitigen ersten Meßrohrende in eine erste Strömungsöffnung (20_{1A}) des ersten Strömungsteilers (20₁) und mit einem auslaßseitigen zweiten Meßrohrende in eine erste Strömungsöffnung (20_{2A}) des zweiten Strömungsteilers (20₂) mündet,
--- ein zweites Meßrohr (18₂) mit einem einlaßseitigen ersten Meßrohrende in eine zweite Strömungsöffnung (20_{1B}) des ersten Strömungsteilers (20₁) und mit einem auslaßseitigen zweiten Meßrohrende in eine zweite Strömungsöffnung (20_{2B}) des zweiten Strömungsteilers (20₂) mündet,
--- ein drittes Meßrohr (18₃) mit einem einlaßseitigen ersten Meßrohrende in eine dritte Strömungsöffnung (20_{1C}) des ersten Strömungsteilers (20₁) und mit einem auslaßseitigen zweiten Meßrohrende in eine dritte Strömungsöffnung (20_{2C}) des zweiten Strömungsteilers (20₂) mündet und
--- ein viertes Meßrohr (18₄) mit einem einlaßseitigen ersten Meßrohrende in eine vierte Strömungsöffnung (20_{1D}) des ersten Strömungsteilers (20₁) und mit einem auslaßseitigen zweiten Meßrohrende in eine vierte Strömungsöffnung (20_{2D}) des zweiten Strömungsteilers (20₂) mündet,
-- eine mittels eines ersten Schwingungserregers (51) und eines zweiten Schwingungserregers (52) gebildete, elektro-mechanische Erregeranordnung (5) zum Erzeugen und/oder Aufrechterhalten von mechanischen Schwingungen der vier Meßrohre (18₁, 18₂, 18₃, 18₄), wobei die Erregeranordnung derart ausgebildet ist, daß damit das erste Meßrohr (18₁) und das zweite Meßrohr (18₂) im Betrieb zu gegengleichen Biegeschwingungen in einer gemeinsamen gedachten ersten Schwingungsebene (XZ₁) und das dritte Meßrohr (18₃) und das vierte Meßrohr (18₄) im Betrieb zu gegengleichen Biegeschwingungen in einer gemeinsamen gedachten, insb. zur ersten Schwingungsebene (XZ₁) im wesentlichen parallelen, zweiten Schwingungsebene (XZ₂) anregbar sind,
-- eine auf Vibrationen der Meßrohre (18₁, 18₂, 18₃,18₄) reagierende Vibrationssensoranordnung (19) zum Erzeugen von Vibrationen, insb. Biegeschwingungen, der Meßrohre (18₁ 18₂, 18₃, 18₄) repräsentierenden Schwingungsmeßsignalen
-- und eine, insb. mit wenigstens einem der Meßrohre mechanisch gekoppelte, Deformationsmeßanordnung (30) zum Erfassen einer, insb. thermisch bedingten und/oder durch auf den Meßaufnehmer von außen einwirkende Kräfte bewirkten und/oder ein Schwingungsverhalten der Meßrohre beeinflussenden und/oder eine Veränderung wenigstens einer Resonanzfrequenz zumindest eines der Meßrohre bewirkenden und/oder translatorischen, Deformation des Meßaufnehmers, insb. einer Dehnung eines oder mehrerer der Meßrohre, aufweist;
- eine mit dem Meßaufnehmer elektrisch gekoppelte Umformer-Elektronik zum Ansteuern des Meßaufnehmers und zum Auswerten von vom Meßwandler gelieferten Schwingungsmeßsignalen, welche Umformer-Elektronik
-- eine Treiberschaltung für die Erregeranordnung, und
-- eine Meßschaltung aufweist,
--- wobei die Meßschaltung dafür ausgestaltet ist, unter Verwendung wenigstens eines von der Vibrationssensoranordnung gelieferten Schwingungsmeßsignals einen die Dichte des Medium repräsentierenden Dichte-Meßwert zu generieren,
--- und wobei die Meßschaltung ausgestaltet ist, zum Erzeugen des Dichte-Meßwerts eine Änderung von wenigstens einer charakteristischen Größe, insb. einer Signalfrequenz, der vom Meßwandler gelieferten Schwingungsmeßsignale, insb. eine Änderung von deren Signalfrequenz und/oder eine Änderung einer Phasendifferenz zwischen zwei mittels der Vibrationssensoranordnung generierten Schwingungsmeßsignalen, zu korrigieren, welche Änderung der wenigstens einer charakteristischen Größe durch eine Änderung eines Spannungszustands im Meßaufnehmer und/oder eine Abweichung eines momentanen Spannungszustands im Meßaufnehmer von einem dafür vorgegebenen Referenz-Spannungszustand verursacht sind.

2. Meßsystem nach dem vorherigen Anspruch, wobei nämliche, insb. ein Schwingungsverhalten der Meßrohre beeinflussende und/oder eine Veränderung wenigstens einer Resonanzfrequenz des Meßaufnehmers bewirkende, Änderung des Spannungszustands im Meßaufnehmer und/oder nämliche, insb. ein Schwingungsverhalten der Meßrohre beeinflussende und/oder eine Veränderung wenigstens einer Resonanzfrequenz des Meßaufnehmers bewirkende, Abweichung des momentanen Spannungszustands im Meßaufnehmer von dem dafür vorgegebenen Referenz-Spannungszustand aus einer, insb. thermisch bedingten und/oder durch äußere Kräfte bewirkten, Deformation des Meßaufnehmers, insb. einer Dehnung eines oder mehrerer der Meßrohre, resultiert.

3. Meßsystem nach einem der vorherigen Ansprüche,
- wobei die Meßschaltung die Änderung des Spannungszustands im Meßaufnehmer und/oder die Abweichung des momentanen Spannungszustands im Meßaufnehmer von dem dafür vorgegebenen Referenz-Spannungszustand mittels wenigstens eines von der Vibrationssensoranordnung (19) erzeugten, insb. zwei- oder mehrmodale, Vibrationen, insb. Biegeschwingungen, der Meßrohre (18₁, 18₂, 18₃, 18₄) repräsentierenden, insb. zwei oder mehr Signalkomponenten von unterschiedlicher Signalfrequenz aufweisenden, Schwingungsmeßsignals ermittelt; und/oder
- wobei die Meßschaltung die aus der Änderung des Spannungszustands im Meßaufnehmer bzw. der Abweichung des momentanen Spannungszustands im Meßaufnehmer von dem dafür vorgegebenen Referenz-Spannungszustand resultierende Änderung der wenigstens einen charakteristischen Größe der vom Meßwandler gelieferten Schwingungsmeßsignale mittels wenigstens eines von der Vibrationssensoranordnung (19) erzeugten, insb. zwei- oder mehrmodale, Vibrationen, insb. Biegeschwingungen, der Meßrohre (18₁, 18₂, 18₃, 18₄) repräsentierenden, insb. zwei oder mehr Signalkomponenten von unterschiedlicher Signalfrequenz aufweisenden, Schwingungsmeßsignals korrigiert.

4. Meßsystem nach einem der vorherigen Ansprüche, wobei die Deformationsmeßanordnung (30) mit der Umformer-Elektronik elektrisch verbunden ist.

5. Meßsystem nach Anspruch 4, wobei die Deformationsmeßanordnung mittels eines, insb. als Halbleiter-Dehnungsmeßstreifen oder als Metallgitter-Dehnungsmeßstreifen ausgebildeten, Sensorelements (30₁) gebildet ist, das einen von einer Verformung des Meßaufnehmers, insb. einer Dehnung eines oder mehrerer der Meßrohre, abhängigen ohmschen Widerstand aufweist.

6. Meßsystem nach Anspruch 5,
- wobei das, insb. als Dehnungsmeßstreifen ausgebildete, Sensorelement (30₁) an einem der Meßrohre (18₁, 18₂, 18₃, 18₄), insb. adhäsiv, fixiert ist, insb. derart, daß es auf Änderungen einer einem jeweiligen minimalen Abstand zwischen der mit dem jeweiligen ersten Meßrohrende korrespondierenden Strömungsöffnung (20_{1A}) des ersten Strömungsteilers (20₁) und der mit dem jeweiligen zweiten Meßrohrende korrespondierenden Strömungsöffnung (20_{2A}) des zweiten Strömungsteilers (20₂) entsprechenden Meßrohrlänge des nämlichen Meßrohrs mit einer Änderung seines ohmschen Widerstands reagiert und/oder daß es mit nämlichem Meßrohr flächig verbunden ist; und/oder
- wobei das wenigstens eine, insb. als Dehnungsmeßstreifen ausgebildete, Sensorelement (30₁) auf einer äußeren Rohrwand-Oberfläche des nämlichen Meßrohrs, insb. adhäsiv, fixiert ist; und/oder
- wobei das wenigstens eine, insb. als Dehnungsmeßstreifen ausgebildete, Sensorelement auf einer äußeren Rohrwand-Oberfläche des nämlichen Meßrohrs, insb. adhäsiv, fixiert ist, derart,
-- daß es einen davon überdeckten Detektionsbereich auf nämlicher Rohrwand-Oberfläche zumindest teilweise flächig kontaktiert; und/oder
-- daß es mit einem davon überdeckten Detektionsbereich auf nämlicher Rohrwand-Oberfläche flächig verbunden ist; und/oder
-- daß ein vom Sensorelement überdeckter, insb. von diesem flächig kontaktierter und/oder damit flächig verbundener, Detektionsbereich auf nämlicher Rohrwand-Oberfläche wenigstens eine Zone aufweist, in der die mittels der Erregeranordnung angeregten gegengleichen Biegeschwingungen keine Biegespannung verursachen.

7. Meßsystem nach einem der Ansprüche 4 bis 6,
- wobei jedes der Meßrohre jeweils eine Meßrohrlänge, L₁₈, aufweist, die einem jeweiligen minimalen Abstand zwischen der mit dem jeweiligen ersten Meßrohrende korrespondierenden Strömungsöffnung (20_{1A}) des ersten Strömungsteilers (20₁) und der mit dem jeweiligen zweiten Meßrohrende korrespondierenden Strömungsöffnung (20_{2A}) des zweiten Strömungsteilers (20₂) entspricht, und
- wobei mittels der Deformationsmeßanordnung Änderungen der Meßrohrlänge eines oder mehrerer der Meßrohre erfaßbar sind.

8. Meßsystem nach dem vorherigen Anspruch, wobei die Deformationsmeßanordnung zum Erfassen von Änderungen der Meßrohrlänge eines oder mehrerer der Meßrohre wenigstens einen, insb. außen, an einem der Meßrohre, insb. adhäsiv und/oder flächig, fixierten Dehnungsmeßstreifen, insb. einen Halbleiter-Dehnungsmeßstreifen oder einen Metallgitter-Dehnungsmeßstreifen, aufweist.

9. Meßsystem nach einem der Ansprüche 4 bis 8, wobei die Deformationsmeßanordnung mittels eines einen von einer Verformung des Meßaufnehmers abhängigen ohmschen Widerstand aufweisenden, insb. als Halbleiter-Dehnungsmeßstreifen oder als Metallgitter-Dehnungsmeßstreifen ausgebildeten, ersten Sensorelements (30₁) und mittels wenigstens eines einen von einer Verformung des Meßaufnehmers abhängigen ohmschen Widerstand aufweisenden, insb. als Halbleiter-Dehnungsmeßstreifen oder als Metallgitter-Dehnungsmeßstreifen ausgebildeten, zweiten Sensorelements (30₂) gebildet ist, insb. derart, daß das erste Sensorelement und das zweite Sensorelement mittels wenigstens eines innerhalb des Aufnehmergehäuses verlaufenden Drahtes miteinander elektrisch verbunden sind, und/oder daß das erste Sensorelement und das zweite Sensorelement elektrisch seriell verschaltet sind, und/oder daß das erste Sensorelement und das zweite Sensorelement baugleich sind, und/oder daß das erste Sensorelement und das zweite Sensorelement in einer gedachten Schnittebene des Meßaufnehmers liegen, in der eine zu einer Hauptströmungsachse des Meßaufnehmers parallele Längsachse des Meßaufnehmers verläuft.

10. Meßsystem nach Anspruch 9,
- wobei das erste Sensorelement der Deformationsmeßanordnung am ersten Meßrohr fixiert ist, insb. derart, daß mittels des ersten Sensorelements (30₁) eine die Meßrohrlänge des ersten Meßrohres verändernde Dehnung des ersten Meßrohrs erfaßbar ist; und
- wobei das zweite Sensorelement (30₂) der Deformationsmeßanordnung an einem anderen als dem ersten Meßrohr, insb. dem davon am weitesten seitlichen beabstandeten Meßohr, fixiert ist, insb. derart, daß mittels des Sensorelements eine die Meßrohrlänge des vierten Meßrohres verändernde Dehnung des vierten Meßrohrs erfaßbar ist.

11. Meßsystem nach einem der Ansprüche 4 bis 10,
- wobei die Deformationsmeßanordnung mittels wenigstens eines mit wenigstens einem der Meßrohre mechanisch gekoppelten, insb. adhäsiv an einem der Meßrohre fixierten, Dehnungsmeßstreifen, insb. einem Halbleiter-Dehnungsmeßstreifen oder einem Metallgitter-Dehnungsmeßstreifen, gebildet ist; und/oder
- wobei die Meßschaltung die Änderung des Spannungszustands im Meßaufnehmer und/oder die Abweichung des momentanen Spannungszustands im Meßaufnehmer von dem dafür vorgegebenen Referenz-Spannungszustand anhand einer von der Deformationsmeßanordnung erfaßten, insb. thermisch bedingten und/oder durch auf den Meßaufnehmer von außen einwirkende Kräfte bewirkten und/oder ein Schwingungsverhalten der Meßrohre beeinflussenden und/oder eine Veränderung wenigstens einer Resonanzfrequenz zumindest eines der Meßrohre bewirkenden und/oder translatorischen, Deformation des Meßaufnehmers, insb. einer Dehnung eines oder mehrerer der Meßrohre, ermittelt; und/oder
- wobei die Meßschaltung die aus der Änderung des Spannungszustands im Meßaufnehmer bzw. der Abweichung des momentanen Spannungszustands im Meßaufnehmer von dem dafür vorgegebenen Referenz-Spannungszustand resultierende Änderung der wenigstens einen charakteristischen Größe der vom Meßwandler gelieferten Schwingungsmeßsignale basierend auf einer von der Deformationsmeßanordnung erfaßten, insb. thermisch bedingten und/oder durch auf den Meßaufnehmer von außen einwirkende Kräfte bewirkten und/oder ein Schwingungsverhalten der Meßrohre beeinflussenden und/oder eine Veränderung wenigstens einer Resonanzfrequenz zumindest eines der Meßrohre bewirkenden und/oder translatorischen, Deformation des Meßaufnehmers, insb. einer Dehnung eines oder mehrerer der Meßrohre, korrigiert.

12. Meßsystem nach einem der vorherigen Ansprüche, weiters umfassend eine, insb. mittels eines auf einem der Meßrohre fixierten Widerstandsthermometer und/oder mittels eines am Aufnehmergehäuse fixierten Widerstandsthermometer gebildete und/oder mit der Umformer-Elektronik elektrisch verbundene, Temperaturmeßanordnung (40) zum Erfassen einer, insb. ein Schwingungsverhalten der Meßrohre beeinflussenden und/oder eine Veränderung wenigstens einer Resonanzfrequenz zumindest eines der Meßrohre bewirkenden, Temperatur des Meßaufnehmers, insb. eine Temperatur eines oder mehrerer der Meßrohre.

13. Meßsystem nach Anspruch 12,
- wobei die Temperaturmeßanordnung (40) mittels eines, insb. auf einem der Meßrohre fixierten, Widerstandsthermometer gebildet ist, das einen von einer Temperatur des Meßaufnehmers, insb. einer Temperatur eines der Meßrohre, abhängigen ohmschen Widerstand aufweist; und/oder
- wobei die Meßschaltung die Änderung des Spannungszustands im Meßaufnehmer und/oder die Abweichung des momentanen Spannungszustands im Meßaufnehmer von dem dafür vorgegebenen Referenz-Spannungszustand anhand einer von der Temperaturmeßanordnung erfaßten, insb. ein Schwingungsverhalten der Meßrohre beeinflussenden und/oder eine Veränderung wenigstens einer Resonanzfrequenz zumindest eines der Meßrohre bewirkenden, Temperatur des Meßaufnehmers, insb. eine Temperatur eines oder mehrerer der Meßrohre, ermittelt; und/oder
- wobei die Meßschaltung die aus der Änderung des Spannungszustands im Meßaufnehmer bzw. der Abweichung des momentanen Spannungszustands im Meßaufnehmer von dem dafür vorgegebenen Referenz-Spannungszustand resultierende Änderung der wenigstens einen charakteristischen Größe der vom Meßwandler gelieferten Schwingungsmeßsignale basierend auf einer von der Temperaturmeßanordnung erfaßten, insb. ein Schwingungsverhalten der Meßrohre beeinflussenden und/oder eine Veränderung wenigstens einer Resonanzfrequenz zumindest eines der Meßrohre bewirkenden, Temperatur des Meßaufnehmers, insb. einer Temperatur eines oder mehrerer der Meßrohre, korrigiert.

14. Meßsystem nach einem der vorherigen Ansprüche,
- wobei der erste Strömungsteiler (20₁) einen Flansch (6₁) zum Anschließen des Meßaufnehmers an ein dem Zuführen von Medium zum Meßaufnehmer dienendes Rohrsegment der Rohrleitung und der zweite Strömungsteiler (20₂) einen Flansch (6₂) zum Anschließen des Meßaufnehmers an ein dem Abführen von Medium vom Meßaufnehmer dienendes Rohrsegment der Rohrleitung aufweisen;
- wobei eine nominellen Nennweite, D₁₁, des Meßaufnehmers, die einem Kaliber der Rohrleitung, in deren Verlauf der Meßaufnehmer einzusetzen ist, entspricht, mehr als 100 mm beträgt, insb. größer als 300 mm ist;
- wobei jeder der, insb. jeweils eine Masse von mehr als 50 kg aufweisenden, Flansche (6₁, 62) jeweils eine Dichtfläche (6_{1A}, 6_{2A}) zum fluiddichten Verbinden des Meßaufnehmers mit dem jeweils korrespondierenden Rohrsegment der Rohrleitung aufweist, und wobei ein Abstand zwischen den Dichtflächen (6_{1A}, 6_{2A}) beider Flansche (6₁, 6₂) eine, insb. mehr als 1200 mm betragende und/oder weniger als 3000 mm betragende, Einbaulänge, L₁₁, des Meßaufnehmers definiert;
- wobei eine einem minimalen Abstand zwischen der ersten Strömungsöffnung (20_{1A}) des ersten Strömungsteilers (20₁) und der ersten Strömungsöffnung (20_{2A}) des zweiten Strömungsteilers (20₂) entsprechende Meßrohrlänge, L₁₈, des ersten Meßrohrs (18₁) mehr als 1000 mm, insb. mehr als 1200 mm und/oder weniger als 2000 mm, beträgt; und
- wobei jedes der vier, insb. gleichkalibrigen und/oder gleichlangen, Meßrohre (18₁, 18₂, 18₃, 18₄) ein Kaliber, D₁₈, aufweist, das mehr als 60 mm, insb. mehr als 80 mm, beträgt; und
- wobei das Aufnehmer-Gehäuse (7₁) im wesentlichen rohrförmig, insb. kreiszylindrisch, ausgebildet ist sowie einen größten Gehäuse-Innendurchmesser, D₇, aufweist, der größer als 150 mm, insb. größer als 250 mm, ist.

15. Meßsystem nach Anspruch 14,
- wobei ein Gehäuse-zu-Meßrohr-Innendurchmesser-Verhältnis, D₇/D₁₈, des Meßaufnehmers, definiert durch ein Verhältnis des größten Gehäuse-Innendurchmessers, D₇, zu einem Kaliber, D₁₈, des ersten Meßrohrs größer als 3, insb. größer als 4 und/oder kleiner als 5, ist; und/oder
- wobei ein Gehäuse-Innendurchmesser-zu-Nennweite-Verhältnis, D₇/D₁₁, des Meßaufnehmers, definiert durch ein Verhältnis des größten Gehäuse-Innendurchmessers, D₇, zur nominellen Nennweite, D₁₁, des Meßaufnehmers kleiner als 1.5, insb. kleiner als 1.2 und/oder größer als 0.9, ist, insb. derart, daß das Gehäuse-Innendurchmesser-zu-Nennweite-Verhältnis, D₇/D₁₁, des Meßaufnehmers gleich eins ist; und/oder
- wobei ein Meßrohrlänge-zu-Einbaulänge-Verhältnis, L₁₈/L₁₁, des Meßaufnehmers, definiert durch ein Verhältnis der Meßrohrlänge, L₁₈, des ersten Meßrohrs zur Einbaulänge, L₁₁, des Meßaufnehmers, mehr als 0.7, insb. mehr als 0.8 und/oder weniger als 0.95, beträgt; und/oder
- wobei ein Kaliber-zu-Einbaulänge-Verhältnis, D₁₈/L₁₁, des Meßaufnehmers, definiert durch ein Verhältnis des Kalibers, D₁₈, des ersten Meßrohrs zur Einbaulänge, L₁₁, des Meßaufnehmers, mehr als 0.02, insb. mehr als 0.05 und/oder weniger als 0.09, beträgt; und/oder
- wobei ein Nennweite-zu Einbaulänge-Verhältnis, D₁₁/L₁₁, des Meßaufnehmers, definiert durch ein Verhältnis der nominellen Nennweite des Meßaufnehmers zur Einbaulänge des Meßaufnehmers kleiner als 0.3, insb. kleiner als 0.2 und/oder größer als 0.1, ist.

16. Meßsystem nach einem der Ansprüche 14 bis 15, weiters umfassend
- ein, insb. plattenförmiges, erstes Kopplerelement (24₁) erster Art, das zum Bilden von einlaßseitigen Schwingungsknoten zumindest für Vibrationen, insb. Biegeschwingungen, des ersten Meßrohrs und für dazu gegengleiche Vibrationen, insb. Biegeschwingungen, des zweiten Meßrohrs sowohl vom ersten Strömungsteiler als auch vom zweiten Strömungsteiler beabstandet einlaßseitig zumindest am ersten Meßrohr und am zweiten Meßrohr fixiert ist, insb. derart, daß alle vier Meßrohre (18₁, 18₂, 18₃, 18₄) mittels des ersten Kopplerelements (24₁) erster Art miteinander mechanisch verbunden sind, sowie;
- ein, insb. plattenförmiges und/oder zum ersten Kopplerelement (24₁) baugleiches und/oder zum ersten Kopplerelement (24₁) paralleles, zweites Kopplerelement (24₂) erster Art, das zum Bilden von auslaßseitigen Schwingungsknoten zumindest für Vibrationen, insb. Biegeschwingungen, des ersten Meßrohrs und für dazu gegengleiche Vibrationen, insb. Biegeschwingungen, des zweiten Meßrohrs sowohl vom ersten Strömungsteiler als auch vom zweiten Strömungsteiler wie auch vom ersten Kopplerelement beabstandet auslaßseitig zumindest am ersten Meßrohr und am zweiten Meßrohr fixiert ist, insb. derart, daß alle vier Meßrohre (18₁, 18₂, 18₃, 18₄) mittels des zweiten Kopplerelements (24₂) erster Art miteinander mechanisch verbunden sind;
- wobei eine einem minimalen Abstand zwischen dem ersten Kopplerelement erster Art und dem zweiten Kopplerelement erster Art entsprechende freie Schwinglänge, L₁₈ₓ, des ersten Meßrohrs, insb. jedes der Meßrohre, weniger als 2500 mm, insb. weniger als 2000 mm und/oder mehr als 800 mm, beträgt.

17. Meßsystem nach Anspruch 16,
- wobei ein Schwinglänge-zu-Einbaulänge-Verhältnis, L₁₈ₓ/L₁₁, des Meßaufnehmers, definiert durch ein Verhältnis der freien Schwinglänge, L₁₈ₓ, des ersten Meßrohrs zur Einbaulänge, L₁₁, des Meßaufnehmers, mehr als 0.55, insb. mehr als 0.6 und/oder weniger als 0.9, beträgt; und/oder
- wobei ein Kaliber-zu- Schwinglänge-Verhältnis, D₁₈/L₁₈ₓ, des Meßaufnehmers, definiert durch ein Verhältnis des Kalibers, D₁₈, des ersten Meßrohrs (18₁) zur freien Schwinglänge, L₁₈ₓ, des ersten Meßrohrs (18₁), mehr als 0.07, insb. mehr als 0.09 und/oder weniger als 0.15, beträgt.

18. Meßsystem nach einem der Ansprüche 14 bis 17, wobei die Vibrationssensoranordnung (19) mittels eines, insb. elektrodynamischen und/oder Schwingungen des ersten Meßrohrs (18₁) relativ zum zweiten Meßrohr (18₂) differentiell erfassenden, einlaßseitigen ersten Schwingungssensors (19₁) sowie eines, insb. elektrodynamischen und/oder Schwingungen des ersten Meßrohrs (18₁) relativ zum zweiten Meßrohr (18₂) differentiell erfassenden, auslaßseitigen zweiten Schwingungssensors (19₂) gebildet ist.

19. Meßsystem nach Anspruch 18,
- wobei eine einem minimalen Abstand zwischen dem ersten Schwingungssensors (19₁) und dem zweiten Schwingungssensor (19₂) entsprechende Meßlänge, L₁₉, des Meßaufnehmers mehr als 500 mm, insb. mehr als 600 mm und/oder weniger als 1200 mm, beträgt; und/oder
- wobei ein Meßlänge-zu-Einbaulänge-Verhältnis, L₁₉/L₁₁, des Meßaufnehmers, definiert durch ein Verhältnis der Meßlänge, L₁₉, zur Einbaulänge, L₁₁, des Meßaufnehmers, mehr als 0.3, insb. mehr als 0.4 und/oder weniger als 0.7, beträgt; und/oder
- wobei ein Kaliber-zu-Meßlänge-Verhältnis, D₁₈/L₁₉, des Meßaufnehmers, definiert durch ein Verhältnis des Kalibers, D₁₈, des ersten Meßrohrs zur Meßlänge, L₁₉, des Meßaufnehmers, mehr als 0.05, insb. mehr als 0.09, beträgt; und/oder
- wobei ein Meßlänge-zu-Schwinglänge-Verhältnis, L₁₉/L₁₈ₓ, des Meßaufnehmers, definiert durch ein Verhältnis der Meßlänge, L₁₉, des Meßaufnehmers zur freien Schwinglänge, L₁₈ₓ, des ersten Meßrohrs, mehr als 0.6, insb. mehr als 0.65 und/oder weniger als 0.95, beträgt; und/oder
- wobei die Vibrationssensoranordnung (19) mittels eines, insb. elektrodynamischen und/oder Schwingungen des dritten Meßrohrs (18₃) relativ zum vierten Meßrohr (18₄) differentiell erfassenden, einlaßseitigen dritten Schwingungssensors (19₃) sowie eines, insb. elektrodynamischen und/oder Schwingungen des dritten Meßrohrs (18₃) relativ zum vierten Meßrohr (18₄) differentiell erfassenden, auslaßseitigen vierten Schwingungssensors (19₄) gebildet ist.

20. Meßsystem nach einem der vorherigen Ansprüche,
- wobei ein Massenverhältnis, M₁₁/M₁₈, einer Leermasse, M₁₁, des gesamten Meßaufnehmers zu einer Leermasse, M₁₈, des ersten Meßrohrs größer als 10, insb. größer als 15 und kleiner als 25, ist;
und/oder
- wobei jeder der beiden Strömungsteiler (20₁, 20₂) jeweils eine Masse von mehr als 20 kg, insb. von mehr als 40 kg, aufweist; und/oder
- wobei eine Leermasse, M₁₈, des ersten Meßrohrs, insb. jedes der Meßrohre (18₁, 18₂, 18₃, 18₄), größer als 20 kg, insb. größer als 30 kg und/oder kleiner als 50 kg, ist; und/oder
- wobei das erste und das zweite Meßrohr (18₁, 18₂) zumindest hinsichtlich eines Materials, aus dem deren Rohrwände jeweils bestehen, und/oder hinsichtlich ihrer geometrischer Rohr-Abmessungen, insb. einer Rohrlänge, einer Rohrwandstärke, eines Rohr-Außendurchmessers und/oder eines Kalibers, baugleich sind; und/oder
- wobei das dritte und das vierte Meßrohr (18₃, 18₄) zumindest hinsichtlich eines Materials, aus dem deren Rohrwände jeweils bestehen, und/oder hinsichtlich ihrer geometrischen Rohr-Abmessungen, insb. einer Rohrlänge, einer Rohrwandstärke, eines Rohr-Außendurchmessers und/oder eines Kalibers, baugleich sind; und/oder
- wobei ein Material, aus dem die Rohrwände der vier Meßrohre (18₁, 18₂, 18₃, 18₄) zumindest anteilig bestehen, Titan und/oder Zirconium und/oder Duplexstahl und/oder Superduplexstahl ist; und/oder
- wobei das Aufnehmer-Gehäuse (7₁), die Strömungsteiler (20₁, 20₂) und Rohrwände der Meßrohre (18₁, 18₂, 18₃, 18₄) jeweils aus, insb. rostfreiem, Stahl bestehen; und/oder
- wobei die vier Strömungsöffnungen (20_{1A}, 20_{1B}, 20_{1C}, 20_{1D}) des ersten Strömungsteilers (20₂) so angeordnet sind, daß zu, insb. kreisförmigen, Querschnittsflächen der Strömungsöffnungen (20_{1A}; 20_{1B}; 20_{1C}; 20_{1D}) des ersten Strömungsteilers (20₁) zugehörige gedachte Flächenschwerpunkte die Eckpunkte eines gedachten Quadrats bilden, wobei nämliche Querschnittsflächen in einer gemeinsamen gedachten, senkrecht zu einer, insb. zu einer Hauptströmungsachse des Meßaufnehmers parallelen, Längsachse des Meßaufnehmers verlaufenden Schnittebene des ersten Strömungsteilers (20₁) liegen; und/oder
- wobei die vier Strömungsöffnungen (20_{2A}, 20_{2B}, 20_{2C}, 20_{2D}) des zweiten Strömungsteilers (20₂) so angeordnet sind, daß zu, insb. kreisförmigen, Querschnittsflächen der Strömungsöffnungen (20_{2A}; 20_{2B}; 20_{2C}; 20_{2D}) des zweiten Strömungsteilers (20₂) zugehörige gedachte Flächenschwerpunkte die Eckpunkte eines gedachten Quadrats bilden, wobei nämliche Querschnittsflächen in einer gemeinsamen gedachten, senkrecht zu einer, insb. zu einer Hauptströmungsachse des Meßaufnehmers parallelen, Längsachse des Meßaufnehmers verlaufenden Schnittebene des zweiten Strömungsteilers (20₂) liegen; und/oder
- wobei ein Mittelsegment (7_{1A}) des Aufnehmer-Gehäuses (7₁) mittels eines geraden, insb. kreiszylindrischen, Rohres gebildet ist; und/oder
- wobei eine Leermasse, M₁₁, des Meßaufnehmers größer als 200 kg, insb. größer als 300 kg, ist; und/oder
- wobei die vier Meßrohre (18₁, 18₂, 18₃, 18₄) hinsichtlich eines Materials, aus dem deren Rohrwände bestehen, und/oder hinsichtlich ihrer geometrischen Rohr-Abmessungen, insb. einer Rohrlänge, einer Rohrwandstärke, eines Rohr-Außendurchmessers und/oder eines Kalibers, baugleich sind.

21. Verwenden eines Meßsystems gemäß einem der vorherigen Ansprüche zum Messen einer Dichte, insb. auch einer Massendurchflußrate und/oder eines über ein Zeitintervall totalisierten Gesamt-Massendurchflusses, eines in einer Rohrleitung zumindest zeitweise mit einer Massendurchflußrate von mehr als 2200 t/h, insb. mehr als 2500 t/h, strömenden Mediums, insb. eines Gases, einer Flüssigkeit, eines Pulvers oder eines anderen strömungsfähigen Stoffes.

## Claims

1. Measuring system for measuring a density, particularly also a mass flow rate and/or a total mass flow totalized over a time interval, and/or a viscosity, of a medium flowing at least temporarily through a pipe, particularly at a mass flow rate of more than 2 200 t/h, wherein said measuring system comprises:
- a vibronic-type sensor for generating vibration measuring signals, wherein said sensor comprises:
- a sensor housing (7₁), wherein a first housing end on the inlet side is formed by a first flow divider (20₁) formed as an integral part of the housing (7₁) and having precisely four flow openings (20_{1A}, 20_{1B}, 20_{1C}, 20_{1D}) spaced at a distance from one another on the inlet side, and a second housing end on the outlet side is formed by a second flow divider (20₂) formed as an integral part of the housing (7₁) and having precisely four flow openings (20_{2A}, 20_{2B}, 20_{2C}, 20_{2D}) spaced at a distance from one another on the outlet side,
-- precisely four measuring tubes (18₁, 18₂, 18₃, 18₄), which are connected to the flow dividers (20₁, 20₂) and, in terms of flow, form parallel flow paths, wherein said measuring tubes are designed to conduct the flowing medium, wherein of said tubes
--- a first measuring tube (18₁) enters into a first flow opening (20_{1A}) of the first flow divider (20₁) with an inlet-side first measuring tube end and enters into a first flow opening (20_{2A}) of the second flow divider (20₂) with an outlet-side second measuring tube end,
--- a second measuring tube (18₂) enters into a second flow opening (20_{1B}) of the first flow divider (20₁) with an inlet-side first measuring tube end and enters into a second flow opening (20_{2B}) of the second flow divider (20₂) with an outlet-side second measuring tube end,
--- a third measuring tube (18₃) enters into a third flow opening (20_{1C}) of the first flow divider (20₁) with an inlet-side first measuring tube end and enters into a third flow opening (20_{2C}) of the second flow divider (20₂) with an outlet-side second measuring tube end, and
--- a fourth tube (18₄) enters into a fourth flow opening (20_{1d}) of the first flow divider (20₁) with an inlet-side first measuring tube end and enters into a fourth flow opening (20_{2d}) of the second flow divider (20₂) with an outlet-side second measuring tube end,
-- an electromechanical exciter arrangement (5), formed by a first vibration generator (51) and a second vibration generator (52), which is designed to generate and/or maintain mechanical vibrations of the four measuring tubes (18₁, 18₂, 18₃, 18₄), wherein the exciter arrangement is designed in such a way that the first measuring tube (18₁) and the second measuring tube (18₂) can be excited, during operation, to perform diametrically opposed flexural vibrations on a common imaginary first plane of vibration (XZ₁) and the third measuring tube (18₃) and the fourth measuring tube (18₄) can be excited, during operation, to perform diametrically opposed flexural vibrations on a common imaginary second plane of vibration (XZ₂), wherein said second plane of vibration (XZ₂) is essentially parallel to the first plane of vibration (XZ₁),
-- a vibration sensor arrangement (19) that reacts to vibrations of the measuring tubes (18₁, 18₂, 18₃, 18₄) and is designed to generate vibration measuring signals that represent vibrations, particularly flexural vibrations, of the measuring tubes (18₁, 18₂, 18₃, 18₄),
-- and a deformation measuring arrangement (30), particularly mechanically coupled with at least one of the measuring tubes, wherein said arrangement is designed to measure a deformation of the sensor - particularly an expansion of one or more of the measuring tubes - particularly caused by thermal conditions and/or by forces acting on the sensor from the outside and/or influencing a vibration behavior of the measuring tubes and/or causing a modification of at least a resonance frequency of at least one of the measuring tubes and/or a translational deformation;
- a transmitter electronics module that is electrically coupled with the sensor, said module being designed to control the sensor and to evaluate vibration measuring signals provided by the transducer, wherein said transmitter electronics module comprises
-- a driver circuit for the exciter arrangement, and
-- a measuring circuit,
--- wherein the measuring circuit is designed to generate a density measured value that represents the density of the medium using at least one of the vibration measuring signals provided by the vibration sensor arrangement,
--- and wherein, for the purpose of generating the density measured value, the measuring circuit is designed to correct a change of at least one characteristic variable, particularly a signal frequency, of the vibration measuring signals provided by the transducer, particularly a change of the signal frequency and/or a change in the phase difference between two vibration measuring signals generated using the vibration sensor arrangement, wherein said change of the at least one characteristic variable is caused by a change in the state of strain in the sensor and/or a deviation of a current state of strain in the sensor from a predefined reference state of strain.

2. Measuring system as claimed in the previous claim,
wherein said change of the state of strain in the sensor, particularly influencing a vibration behavior of the measuring tubes and/or causing a change at least of a resonance frequency of the sensor and/or said deviation of the current state of strain in the sensor from the predefined reference state of strain, particularly influencing a vibration behavior of the measuring tubes and/or causing a change at least of a resonance frequency of the sensor, results from a deformation of the sensor, particularly an expansion of one or more of the measuring tubes, said deformation being particularly caused by thermal conditions and/or by external forces.

3. Measuring system as claimed in one of the previous claims,
- wherein the measuring circuit determines the change in the state of strain in the sensor and/or the deviation of the current state of strain in the sensor from the reference state of strain predefined for this purpose using at least one vibration measuring signal generated by the vibration sensor arrangement (19), said signal representing vibrations, particularly bimodal or multimodal vibrations, particularly flexural vibrations, of the measuring tubes (18₁, 18₂, 18s, 18₄), particularly having two (or more) signal components of different signal frequency; and/or
- wherein the measuring circuit corrects the change of the at least one characteristic variable of the vibration measuring signals provided by the transducer using at least a vibration measuring signal generated by the vibration sensor arrangement (19) and representing vibrations, particularly bimodal or multi-modal vibrations, particularly flexural vibrations, of the measuring tubes (18₁, 18₂, 18₃, 18₄), particularly having two (or more) signal components of different signal frequency, said change resulting from the change in the state of strain in the sensor and/or the deviation of the current state of strain in the sensor from the reference state of strain predefined for this purpose.

4. Measuring system as claimed in one of the previous claims, wherein the deformation measuring arrangement (30) is electrically connected to the transmitter electronics module.

5. Measuring system as claimed in Claim 4, wherein the deformation measuring arrangement is formed by means of a sensor element (30₁), particularly designed as a semi-conductor strain gauge or as a metal lattice strain gauge, said sensor element having an ohmic resistance that depends on a deformation of the sensor, particularly an expansion of one or more of the measuring tubes.

6. Measuring system as claimed in Claim 5,
- wherein the sensor element (30₁), particularly designed as a strain gauge, is fixed, particularly by means of an adhesive connection, to one of the measuring tubes (18₁, 18₂, 18₃, 18₄), particularly in such a way that it reacts with a change in its ohmic resistance to changes to the length of the measuring tube corresponding to a minimum distance between the first flow opening (20_{1A}) of the first flow divider (20₁), said opening corresponding to the first measuring tube end, and the flow opening (20_{2A}) of the second flow divider (20₂), said opening corresponding to the second measuring tube end and/or in such a way that it is connected over a surface area with said measuring tube; and/or
- wherein the at least one sensor element (30₁), particularly designed as a strain gauge, is fixed, particularly by means of an adhesive connection, on an outer tube wall surface of said measuring tube; and/or
- wherein the at least one sensor element, particularly designed as a strain gauge, is fixed, particularly by means of an adhesive connection, on an outer pipe wall surface of said measuring tube in such a way
-- that it at least partially establishes contact over an area with a detection area, covered by the sensor element, on said tube wall surface; and/or
-- that it is connected over an area with a detection area, covered by the sensor element, on said tube wall surface; and/or
-- that a detection area on said tube wall surface, said area being covered by the sensor element and in particular being in surface contact with said sensor element and/or connected with said sensor element over a surface area, has at least one zone in which the diametrically opposed flexural vibrations excited by the exciter arrangement do not cause bending stress.

7. Measuring system as claimed in one of the Claims 4 to 6,
- wherein each of the measuring tubes has a measuring tube length, L₁₈, which corresponds to a minimum distance between the flow opening (20_{1A}) of the first flow divider (20₁), said opening corresponding to the first measuring tube end, and the flow opening (20_{2A}) of the second flow divider (20₂), said opening corresponding to the second measuring tube end, and
- wherein changes in the measuring tube length of one or more of the measuring tubes can be measured by the deformation measuring arrangement.

8. Measuring system as claimed in the previous claim, wherein, for the purpose of measuring changes in the measuring tube length of one or more of the measuring tubes, the deformation measuring arrangement has at least one strain gauge, particularly fixed on the outside on one of the measuring tubes, particularly via an adhesive and/or surface connection, particularly a semi-conductor strain gauge or a metal lattice strain gauge.

9. Measuring system as claimed in one of the Claims 4 to 8, wherein the deformation measuring arrangement is formed by a first sensor element (30₁) having an ohmic resistance that depends on the deformation of the sensor, wherein said sensor element is particularly designed as a semi-conductor strain gauge or a metal lattice strain gauge, and by a second sensor element (30₂) having an ohmic resistance that depends on a deformation of the sensor, wherein said sensor element is particularly designed as a semi-conductor strain gauge or a metal lattice strain gauge, particularly in such a way that the first sensor element and the second sensor element are electrically connected to one another by means of at least one wire running inside the sensor housing, and/or in such a way that the first sensor element and the second sensor element are electrically connected in series, and/or the first sensor element and the second sensor element are identical in design, and/or that the first sensor element and the second sensor element are located on an imaginary section plane of the sensor in which a longitudinal axis of the sensor extends in a manner that is parallel to a primary flow axis of the sensor.

10. Measuring system as claimed in Claim 9,
- wherein the first sensor element of the deformation measuring arrangement is fixed on the first measuring tube, particularly in such a way that an expansion of the first measuring tube, which changes the length of the first measuring tube, can be measured using the first sensor element (30₁); and
- wherein the second sensor element (30₂) of the deformation measuring arrangement is fixed on a measuring tube other than the first measuring tube, particularly the measuring tube that is laterally farthest away from the first measuring tube, particularly in such a way that an expansion of the fourth measuring tube, which changes the length of the fourth measuring tube, can be measured using the sensor element.

11. Measuring system as claimed in one of the Claims 4 to 10,
- wherein the deformation measuring arrangement is formed by means of at least one strain gauge, particularly a semi-conductor strain gauge or a metal lattice strain gauge, said gauge being mechanically coupled with at least one of the measuring tubes, particularly adhesively fixed to one of the measuring tubes; and/or
- wherein the measuring circuit determines the change in the state of strain in the sensor and/or the deviation of the current state of strain in the sensor from a reference state of strain predefined for this purpose, on the basis of a deformation of the sensor, particularly an expansion of one or more of the measuring tubes, measured by the deformation measuring arrangement, particularly caused by thermal conditions and/or by forces acting on the sensor from the outside and/or influencing a vibration behavior of the measuring tubes and/or causing a modification of at least a resonance frequency of at least one of the measuring tubes and/or a translational deformation; and/or
- wherein the measuring circuit corrects the change of the at least one characteristic variable of the vibration measuring signals provided by the transducer, said change resulting from the change in the state of strain in the sensor and/or the deviation of the current state of strain in the sensor from the reference state of strain predefined for this purpose, based on the deformation of the sensor, particularly an expansion of one or more measuring tubes, said deformation being measured by the deformation measuring arrangement, and being particularly caused by thermal conditions and/or by forces acting on the sensor from the outside and/or influencing a vibration behavior of the measuring tubes and/or causing a modification of at least a resonance frequency of at least one of the measuring tubes and/or a translational deformation.

12. Measuring system as claimed in one of the previous claims, further comprising a temperature measuring arrangement (40) designed to measure a temperature of the sensor, particularly a temperature of one or more of the measuring tubes, particularly a temperature influencing a vibration behavior of the measuring tubes and/or causing a change of at least a resonance frequency of at least one of the measuring tubes, said arrangement being formed particularly by a resistance thermometer fixed on one of the measuring tubes and/or a resistance thermometer fixed on the sensor housing and/or being electrically connected to the transmitter electronics.

13. Measuring system as claimed in Claim 12,
- wherein the temperature measuring arrangement (40) is formed by a resistance thermometer, particularly fixed on one of the measuring tubes, said thermometer having an ohmic resistance that depends on a temperature of the sensor, particularly on a temperature of one of the measuring tubes; and/or
- wherein the measuring circuit determines the change in the state of strain in the sensor and/or the deviation of the current state of strain in the sensor from the reference state of strain predefined for this purpose on the basis of a temperature of the sensor, particularly a temperature of one or more of the measuring tubes, which is measured by the temperature measuring arrangement, particularly influencing a vibration behavior of the measuring tubes and/or causing a modification of at least a resonance frequency of at least one of the measuring tubes; and/or
- wherein the measuring circuit corrects the change of the at least one characteristic variable of the vibration measuring signals provided by the transducer, said change resulting from the change in the state of strain in the sensor and/or the deviation of the current state of strain in the sensor from the reference state of strain predefined for this purpose based on a temperature of the sensor, particularly a temperature of one or more measuring tubes, said temperature being measured by the temperature measuring arrangement, and particularly influencing a vibration behavior of the measuring tubes and/or causing a modification of at least a resonance frequency of at least one of the measuring tubes.

14. Measuring system as claimed in one of the previous claims,
- wherein the first flow divider (20₁) has a flange (6₁) to connect the sensor to a pipe segment of the pipe, said segment being designed to conduct medium to the sensor, and wherein the second flow divider (20₂) has a flange (6₂) to connect the sensor to a pipe segment of the pipe, said segment being designed to conduct medium away from the sensor;
- wherein a nominal diameter, D₁₁, of the sensor, which corresponds to a caliber of the pipe in the course of which the sensor is to be inserted, is greater than 100 mm, particularly greater than 300 mm;
- wherein each of the flanges (6₁, 6₂), particularly having a mass of more than 50 kg, has a sealing surface (6_{1A}, 6_{2A}) designed for the fluid-tight connection of the sensor with the corresponding pipe segment of the pipe, and wherein a distance between the sealing surfaces (6_{1A}, 6_{2A}) of the two flanges (6₁, 6₂) defines an installation length, L₁₁, of the sensor, particularly greater than 1200 mm and/or less than 3000 mm;
- wherein a measuring tube length, L₁₈, of the first measuring tube (18₁), which corresponds to a minimum distance between the first flow opening (20_{1A}) of the first flow divider (20₁) and the first flow opening (20_{2A}) of the second flow divider (20₂) is greater than 1000 mm, particularly greater than 1200 mm and/or less than 2000 mm; and
- wherein each of the four measuring tubes (18₁, 18₂, 18₃, 18₄), particularly of the same caliber and/or length, has a caliber, D₁₈, which is greater than 60 mm, particularly greater than 80 mm; and
- wherein the sensor housing (7₁) is essentially tubular, particularly circular cylindrical, in design and has a maximum housing internal diameter, D₇, which is greater than 150 mm, particularly greater than 250 mm.

15. Measuring system as claimed in Claim 14,
- wherein a ratio of the housing to the measuring tube internal diameter, D₇/D₁₈, of the sensor, defined by a ratio of the largest housing internal diameter, D₇, to a caliber, D₁₈, of the first measuring tube is greater than 3, particularly greater than 4 and/or less than 5; and/or
- wherein a ratio of the housing internal diameter to the nominal diameter, D₇/D₁₁, of the sensor, defined by a ratio of the largest housing internal diameter, D₇, to the nominal diameter, D₁₁, of the sensor is less than 1.5, particularly less than 1.2 and/or greater than 0.9, particularly in such a way that the housing-internal-diameter-to-nominal-diameter ratio, D₇/D₁₁, of the sensor is equal to one; and/or
- wherein a ratio of the measuring tube length to the installation length, L₁₈/L₁₁, of the sensor, defined by a ratio of the measuring tube length, L₁₈, of the first measuring tube to the installation length, L₁₁, of the sensor, is greater than 0.7, particularly greater than 0.8 and/or less than 0.95; and/or
- wherein a ratio of the caliber to installation length, D₁₈/L₁₁, of the sensor, defined by a ratio of the caliber, D₁₈, of the first measuring tube to the installation length, L₁₁, of the sensor, is greater than 0.02, particularly greater than 0.05 and/or less than 0.09; and/or
- wherein a ratio of the nominal diameter to the installation length, D₁₁/L₁₁, of the sensor, defined by a ratio of the nominal diameter of the sensor to the installation length of the sensor, is less than 0.3, particularly less than 0.2 and/or greater than 0.1.

16. Measuring system as claimed in one of the Claims 14 to 15, further comprising
- a first coupling element (24₁) of the first type, particularly in the form of a plate, which is fixed on the inlet side at least on the first measuring tube and on the second measuring tube for the purpose of the formation of inlet-side vibration nodes at least for vibrations, particularly flexural vibrations, of the first measuring tube, and for diametrically opposite vibrations, particularly flexural vibrations, of the second measuring tube, at a distance from both the first flow divider and the second flow divider, particularly fixed in such a manner that all four measuring tubes (18₁, 18₂, 18₃, 18₄) are mechanically connected with one another by means of the first coupling element (24₁) of the first type, as well as;
- a second coupling element (24₂) of the first type, particularly in the form of a plate and/or identical in design to the first coupling element (24₁) and/or parallel to the first coupling element (24₁), wherein said second coupling element is fixed on the outlet side at least on the first measuring tube and on the second measuring tube for the purpose of the formation of outlet-side vibration nodes at least for vibrations, particularly flexural vibrations, of the first measuring tube, and for diametrically opposite vibrations, particularly flexural vibrations, of the second measuring tube, wherein said second coupling element is arranged at a distance from both the first flow divider and the second flow divider, as well as from the first coupling element, particularly in such a manner that all four measuring tubes (18₁, 18₂, 18₃, 18₄) are mechanically connected with one another by means of the second coupling element (24₂) of the first type;
- wherein a free vibration length, L₁₈ₓ, of the first measuring tube, particularly of each measuring tube, corresponding to a minimum distance between the first coupling element of the first type and the second coupling element of the first type, is less than 2500 mm, particularly less than 2000 mm and/or greater than 800 mm.

17. Measuring system as claimed in Claim 16,
- wherein a ratio of the vibration length to the installation length, L₁₈ₓ/L₁₁, of the sensor, defined by a ratio of the free vibration length, L₁₈ₓ, of the first measuring tube to the installation length, L₁₁, of the sensor, is greater than 0.55, particularly greater than 0.6 and/or less than 0.9; and/or
- wherein a ratio of the caliber to vibration length, D₁₈/L₁₈ₓ, of the sensor, defined by a ratio of the caliber, D₁₈, of the first measuring tube (18₁) to the free vibration length, L₁₈ₓ, of the first measuring tube (18₁) is greater than 0.07, particularly greater than 0.09 and/or less than 0.15.

18. Measuring system as claimed in one of the Claims 14 to 17, wherein the vibration sensor arrangement (19) is formed by a first vibration sensor (19₁) on the inlet side, particularly electrodynamic and/or measuring in a differential manner vibrations of the first measuring tube (18₁) in relation to the second measuring tube (18₂), as well as by a second vibration sensor (19₂) on the outlet side, particularly electrodynamic and/or measuring in a differential manner vibrations of the first measuring tube (18₁) in relation to the second measuring tube (18₂).

19. Measuring system as claimed in Claim 18,
- wherein a measurement length, L₁₉, of the sensor, corresponding to a minimum distance between the first vibration sensor (19₁) and the second vibration sensor (19₂) is greater than 500 mm, particularly greater than 600 mm and/or less than 1200 mm; and/or
- wherein a ratio of the measurement length to the installation length, L₁₉/L₁₁, of the sensor, defined by a ratio of the measurement length, L₁₉, to the installation length, L₁₁, of the sensor, is greater than 0.3, particularly greater than 0.4 and/or less than 0.7; and/or
- wherein a ratio of the caliber to the measurement length, D₁₈/L₁₉, of the sensor, defined by a ratio of the caliber, D₁₈, of the first measuring tube to the measurement length, L₁₉, of the sensor, is greater than 0.05, particularly greater than 0.09; and/or
- wherein a ratio of the measurement length to the vibration length, L₁₉/L₁₈ₓ, of the sensor, defined by a ratio of the measurement length, L₁₉, of the sensor to the free vibration length, L₁₈ₓ, of the first measuring tube, is greater than 0.6, particularly greater than 0.65 and/or less than 0.95; and/or
- wherein the vibration sensor arrangement (19) is formed by a third vibration sensor (19₃) on the inlet side, particularly electrodynamic and/or measuring in a differential manner the vibrations of the third measuring tube (18₃) in relation to the fourth measuring tube (18₄), as well as a fourth vibration sensor (19₄) on the outlet side, particularly electrodynamic and/or measuring in a differential manner the vibrations of the third measuring tube (18₃) in relation to the fourth measuring tube (18₄).

20. Measuring system as claimed in one of the previous claims,
- wherein a mass ratio, M₁₁/M₁₈, of an empty mass, M₁₁, of the entire sensor to an empty mass, M₁₈, of the first measuring tube is greater than 10, particularly greater than 15 and less than 25;
and/or
- wherein each of the two flow dividers (20₁, 20₂) has a mass of more than 20 kg, particularly more than 40 kg; and/or
- wherein an empty mass, M₁₈, of the first measuring tube, particularly of each of the measuring tubes (18₁, 18₂, 18₃, 18₄) is greater than 20 kg, particularly greater than 30 kg and/or less than 50 kg; and/or
- wherein the first and the second measuring tube (18₁, 18₂) are identical in design at least with regard to a material from which the tube walls are each made, and/or with regard to their geometric tube dimensions, particularly a tube length, a tube wall thickness, a tube outer diameter and/or a caliber; and/or
- wherein the third and the fourth measuring tube (18₃, 18₄) are identical in design at least with regard to a material from which the tube walls are each made, and/or with regard to their geometric tube dimensions, particularly a tube length, a tube wall thickness, a tube outer diameter and/or a caliber; and/or
- wherein a material from which the tube walls of the four measuring tubes (18₁, 18₂, 18₃, 18₄) are at least partially made, is titanium and/or zirconium and/or duplex steel and/or super duplex steel; and/or
- wherein the sensor housing (7₁), the flow dividers (20₁, 20₂) and the tube walls of the measuring tubes (18₁, 18₂, 18₃, 18₄) are each made from steel, particularly stainless steel; and/or
- wherein the four flow openings (20_{1A}, 20_{1B}, 20_{1C}, 20_{1D}) of the first flow divider (20₁) are arranged in such a way that imaginary centroids pertaining to - particularly circular - cross-section areas of the flow openings (20_{1A}, 20_{1B}, 20_{1C}, 20_{1D}) of the first flow divider (20₁) form the corner points of an imaginary square, wherein said cross-section areas are located on a common imaginary section plane of the first flow divider (20₁), said plane being perpendicular to a longitudinal axis of the sensor, which particularly is parallel to a primary flow axis of the sensor; and/or
- wherein the four flow openings (20_{2A}, 20_{2B}, 20_{2C}, 20_{2D}) of the second flow divider (20₂) are arranged in such a way that imaginary centroids pertaining to - particularly circular - cross-section areas of the flow openings (20_{2A}, 20_{2B}, 20_{2C}, 20_{2D}) of the second flow divider (20₂) form the corner points of an imaginary square, wherein said cross-section areas are located on a common imaginary section plane of the second flow divider (20₂), said plane being perpendicular to a longitudinal axis of the sensor, which particularly is parallel to a primary flow axis of the sensor; and/or
- wherein a central segment (7_{1A}) of the sensor housing (7₁) is formed by a straight tube, particularly circular cylindrical; and/or
- wherein an empty mass, M₁₁, of the sensor is greater than 200 kg, particularly greater than 300 kg; and/or
- wherein the four measuring tubes (18₁, 18₂, 18₃, 18₄) are identical in design with regard to a material from which the tube walls are made and/or with regard to their geometric tube dimensions, particularly a tube length, a tube wall thickness, a tube outer diameter and/or a caliber.

21. Use of a measuring system as claimed in one of the previous claims for measuring a density, particularly also a mass flow rate and/or a total mass flow totalized over time, of a medium flowing through a pipe at least intermittently at a mass flow rate of more than 2200 t/h, particularly more than 2500 t/h, particularly a gas, a liquid, a powder or another substance which can flow.

## Revendications

1. Système de mesure destiné à la mesure d'une densité, notamment également d'un débit massique et/ou d'un débit massique total, totalisé sur un intervalle de temps, et/ou d'une viscosité, d'un produit s'écoulant au moins temporairement dans une conduite, notamment avec un débit massique supérieur à 2 200 t/h, lequel système de mesure comprend :
- un capteur du type à vibrations destiné à la génération de signaux de mesure de vibrations, lequel capteur comprend :
- un boîtier de capteur (7₁), pour lequel sont formées une première extrémité de boîtier côté entrée au moyen d'un premier de diviseur débit (20₁) faisant partie intégrante du boîtier (7₁) et présentant exactement quatre ouvertures d'écoulement (20_{1A}, 20_{1B}, 20_{1C}, 20_{1D}) espacées les unes par rapport aux autres, et une deuxième extrémité de boîtier côté sortie au moyen d'un deuxième de diviseur débit (20₂) faisant partie intégrante du boîtier (7₁) et présentant exactement quatre ouvertures d'écoulement (20_{2A}, 20_{2B}, 20_{2C}, 20_{2D}) espacées les unes par rapport aux autres,
-- exactement quatre tubes de mesure (18₁, 18₂, 18₃, 18₄) formant des chemins d'écoulement couplés en parallèle et raccordés aux diviseurs de débit (20₁, 20₂), destinés à guider le produit en écoulement, parmi lesquels
--- un premier tube de mesure (18₁) débouche avec une première extrémité de tube de mesure côté entrée dans une première ouverture d'écoulement (20_{1A}) du premier diviseur de débit (20₁) et avec une deuxième extrémité de tube de mesure côté sortie dans une première ouverture d'écoulement (20_{2A}) du deuxième diviseur de débit (20₂),
--- un deuxième tube de mesure (18₂) débouche avec une première extrémité de tube de mesure côté entrée dans une deuxième ouverture d'écoulement (20_{1B}) du premier diviseur de débit (20₁) et avec une deuxième extrémité de tube de mesure côté sortie dans une deuxième ouverture d'écoulement (20_{2B}) du deuxième diviseur de débit (20₂),
--- un troisième tube de mesure (18₃) débouche avec une première extrémité de tube de mesure côté entrée dans une troisième ouverture d'écoulement (20_{1C}) du premier diviseur de débit (20₁) et avec une deuxième extrémité de tube de mesure côté sortie dans une troisième ouverture d'écoulement (20_{2C}) du deuxième diviseur de débit (20₂), et
--- un quatrième tube de mesure (18₄) débouche avec une première extrémité de tube de mesure côté entrée dans une quatrième ouverture d'écoulement (20_{1D}) du premier diviseur de débit (20₁) et avec une deuxième extrémité de tube de mesure côté sortie dans une quatrième ouverture d'écoulement (20_{2D}) du deuxième diviseur de débit (20₂),
-- un circuit d'excitation électromécanique (5) constitué d'un premier générateur de vibrations (51) et d'un deuxième générateur de vibrations (52), lequel circuit est destiné à générer et/ou à maintenir les vibrations mécaniques des quatre tubes de mesure (18₁, 18₂, 18₃, 18₄), le circuit d'excitation étant conçu de telle sorte que le premier tube de mesure (18₁) et le deuxième tube de mesure (18₂) peuvent être excités, en fonctionnement, en vibrations de flexion diamétralement opposées dans un premier plan de vibration (XZ₁) imaginaire commun et le troisième tube de mesure (18₃) et le quatrième tube de mesure (18₄) peuvent être excités, en fonctionnement, en vibrations de flexion diamétralement opposées dans un deuxième plan de vibration (XZ₂) imaginaire commun, lequel deuxième plan est notamment pour l'essentiel parallèle au premier plan de vibration (XZ₁),
-- un agencement de capteurs de vibration (19) réagissant aux vibrations des tubes de mesure (18₁, 18₂, 18₃, 18₄), destiné à générer des signaux de mesure de vibrations représentant les vibrations, notamment les vibrations de flexion, des tubes de mesure (18₁, 18₂, 18₃, 18₄),
-- et un agencement de mesure de déformation (30), notamment couplé mécaniquement avec au moins l'un des tubes de mesure, lequel agencement est destiné à mesurer une déformation du capteur - notamment une dilatation d'un ou de plusieurs tubes de mesure
- due à un phénomène thermique et/ou provoquée par des forces agissant de l'extérieur sur le capteur et/ou influençant un comportement de commutation des tubes de mesure et/ou provoquant une modification d'au moins une fréquence de résonance d'au moins l'un des tubes de mesure et/ou translationnelle;
- une électronique de transmetteur couplée électriquement avec le capteur, laquelle électronique est destinée à piloter le capteur et à exploiter les signaux de mesure de vibration fournis par le capteur, laquelle électronique de transmetteur comprend
-- un circuit d'attaque pour le circuit d'excitation, et
-- un circuit de mesure,
--- le circuit de mesure étant conçu afin de générer, en utilisant au moins l'un des signaux de mesure de vibration fourni par l'agencement de capteurs de vibration, une valeur mesurée de densité représentant la densité du produit,
--- et le circuit de mesure étant conçu, pour la génération de la valeur mesurée de densité, à corriger un changement d'au moins une grandeur caractéristique, notamment une fréquence de signal, des signaux de mesure de vibrations fournis par le capteur, notamment un changement de sa fréquence de signal et/ou un changement d'une différence de phase entre deux signaux de mesure de vibrations générés au moyen de l'agencement de capteurs de vibration, lequel changement de l'au moins une grandeur caractéristique est occasionné par un changement d'un état de tension dans le capteur et/ou un écart d'un état de tension momentané dans le capteur par rapport à un état de tension de référence prédéfini.

2. Système de mesure selon la revendication précédente,
pour lequel un changement - notamment influençant un comportement de vibration des tubes de mesure et/ou un changement de l'état de tension dans le capteur provoquant une modification d'au moins une fréquence de résonance du capteur et/ou un changement, notamment influençant un comportement de vibration des tubes de mesure et/ou un écart de l'état de tension momentané dans le capteur par rapport à l'état de tension de référence prédéfini à cette fin, lequel écart provoque une modification d'au moins une fréquence de résonance du capteur - résulte d'un déformation du capteur, notamment une dilatation d'un ou de plusieurs tubes de mesure, laquelle déformation est due à un phénomène thermique et/ou provoquée par des forces extérieures.

3. Système de mesure selon l'une des revendications précédentes,
- pour lequel le circuit de mesure détermine le changement de l'état de tension dans le capteur et/ou l'écart de l'état de tension momentané dans le capteur par rapport à l'état de tension de référence prédéfini à cette fin, au moyen d'au moins un signal de mesure de vibration généré par l'agencement de capteurs de vibration, représentant les vibrations, notamment bimodales ou plurimodales, notamment des vibrations de flexion, des tubes de mesure (18₁, 18₂, 18₃, 18₄), notamment présentant deux (ou plus) composantes de signal de fréquence différente ; et/ou
- pour lequel le circuit de mesure corrige la variation de l'au moins une grandeur caractéristique des signaux de mesure de vibration fournis par le transducteur au moyen d'au moins un signal de mesure de vibration généré par l'agencement de capteurs de vibration, représentant les vibrations, notamment bimodales ou plurimodales, notamment des vibrations de flexion, des tubes de mesure (18₁, 18₂, 18₃, 18₄), notamment présentant deux (ou plus) composantes de signal de fréquence différente, laquelle variation résulte du changement de l'état de tension dans le capteur et/ou de l'écart de l'état de tension momentané dans le capteur par rapport à l'état de tension de référence prédéfini à cette fin.

4. Système de mesure selon l'une des revendications précédentes, pour lequel l'agencement de mesure de déformation (30) est relié électriquement avec l'électronique de transmetteur.

5. Système de mesure selon la revendication 4, pour lequel l'agencement de mesure de déformation est formé au moyen d'un élément capteur (30₁), notamment conçu en tant que jauge de contrainte à semi-conducteur ou en tant que jauge de contrainte à grille métallique, lequel élément capteur présente une résistance ohmique dépendant d'une déformation du capteur, notamment d'une dilatation de l'un ou de plusieurs des tubes de mesure.

6. Système de mesure selon la revendication 5,
- pour lequel l'élément capteur (30₁), notamment conçu en tant que jauge de contrainte, est fixé, notamment par une liaison adhésive, à l'un des tubes de mesure (18₁, 18₂, 18₃, 18₄), notamment de telle sorte à ce qu'il réagisse avec une modification de sa résistance ohmique à des changements d'une longueur du même tube de mesure correspondant à une distance minimale respective entre la première ouverture d'écoulement (20_{1A}) du premier diviseur de débit (20₁), laquelle ouverture correspond respectivement à la première extrémité de tube de mesure, et la deuxième ouverture d'écoulement (20_{2A}) du deuxième diviseur de débit (20₂), laquelle ouverture correspond respectivement à la deuxième extrémité de tube de mesure et/ou de telle sorte qu'il soit relié en surface avec le même tube de mesure ; et/ou
- pour lequel l'au moins un élément capteur (30₁), notamment conçu en tant que jauge de contrainte, est fixé, notamment par une liaison adhésive, sur une surface extérieure de la paroi du même tube de mesure ; et/ou
- pour lequel l'au moins un élément capteur (30₁), notamment conçu en tant que jauge de contrainte, est fixé, notamment par une liaison adhésive, sur une surface extérieure de la paroi du même tube de mesure de telle sorte
-- à établir au moins partiellement un contact avec une zone de détection, recouverte par l'élément capteur, sur la même surface de la paroi de tube; et/ou
-- à être relié en surface avec une zone de détection, recouverte par l'élément capteur, sur la même surface de la paroi de tube; et/ou
-- à ce qu'une zone de détection sur la même surface de la paroi de tube, laquelle zone est recouverte par l'élément capteur et est notamment en contact en surface avec celui-ci et/ou reliée en surface à celui, présente une zone dans laquelle les vibrations de flexion excitées de façon diamétralement opposées au moyen du circuit d'excitation, n'occasionnent pas de contrainte de flexion.

7. Système de mesure selon l'une des revendications 4 à 6,
- pour lequel chacun des tubes de mesure présente une longueur de tube de mesure, L₁₈, qui correspond à une distance minimale respective entre la première ouverture d'écoulement (20_{1A}) du premier diviseur de débit (20₁), laquelle ouverture correspond respectivement à la première extrémité de tube de mesure, et la deuxième ouverture d'écoulement (20_{2A}) du deuxième diviseur de débit (20₂), laquelle ouverture correspond respectivement à la deuxième extrémité de tube de mesure, et
- pour lequel des modifications de la longueur de tube de mesure d'un ou de plusieurs tubes de mesure peuvent être mesurées au moyen de l'agencement de mesure de déformation.

8. Système de mesure selon la revendication précédente, pour lequel de l'agencement de mesure de déformation présente, pour la mesure de modifications de la longueur d'un ou de plusieurs tubes de mesure, au moins une jauge de contrainte, notamment fixée à l'extérieur sur l'un des tubes de mesure, notamment par une liaison adhésive et/ou en surface, notamment une jauge de contrainte à semi-conducteur ou une jauge de contrainte à grille métallique.

9. Système de mesure selon l'une des revendications 4 à 8, pour lequel l'agencement de mesure de déformation est constitué au moyen d'un premier élément capteur (30₁) présentant une résistance ohmique dépendant d'une déformation du capteur, lequel élément capteur est notamment conçu en tant que jauge de contrainte à semi-conducteur ou en tant que jauge de contrainte à grille métallique, et au moyen d'au moins un deuxième élément capteur (30₂) présentant une résistance ohmique dépendant d'une déformation du capteur, lequel élément capteur est notamment conçu en tant que jauge de contrainte à semi-conducteur ou en tant que jauge de contrainte à grille métallique, notamment de telle sorte que le premier élément capteur et le deuxième élément capteur sont reliés électriquement au moyen d'au moins un fil acheminé à l'intérieur du boîtier de capteur, et/ou de telle sorte que le premier élément capteur et le deuxième élément capteur sont de conception identique, et/ou de telle sorte que le premier élément capteur et le deuxième élément capteur se trouvent dans un plan de coupe imaginaire du capteur, dans lequel l'axe longitudinal du capteur s'étend parallèlement à un axe d'écoulement principal du capteur.

10. Système de mesure selon la revendication 9,
- pour lequel le premier élément capteur de l'arrangement de mesure de déformation est fixé sur le premier tube de mesure, notamment de telle sorte qu'une dilatation du premier tube de mesure, modifiant la longueur du premier tube de mesure, puisse être mesurée au moyen du premier élément capteur (30₁) ; et
- pour lequel le deuxième élément capteur (30₂) de l'arrangement de mesure de déformation est fixé sur un autre tube que le premier tube de mesure, notamment le tube de mesure étant latéralement le plus éloigné, notamment de telle sorte qu'une dilatation du quatrième tube de mesure, modifiant la longueur du quatrième tube de mesure, puisse être mesurée au moyen de l'élément capteur.

11. Système de mesure selon l'une des revendications 4 à 10,
- pour lequel l'arrangement de mesure de déformation est constitué au moyen d'au moins une jauge de contrainte, notamment une jauge de contrainte à semi-conducteur ou une jauge de contrainte à grille métallique, laquelle jauge est couplée mécaniquement, notamment fixée par une liaison adhésive à l'un des tubes de mesure, avec au moins l'un des tubes de mesure ; et/ou
- pour lequel le circuit de mesure détermine le changement de l'état de tension dans le capteur et/ou l'écart de l'état de tension momentané dans le capteur par rapport à l'état de tension de référence prédéfini à cette fin, sur la base d'une déformation du capteur, notamment une dilatation d'un ou de plusieurs des tubes de mesure, mesurée par l'agencement de mesure de déformation, notamment due à un phénomène thermique et/ou provoquée par des forces agissant de l'extérieur sur le capteur et/ou influençant un comportement de vibration des tubes de mesure et/ou provoquant une modification d'au moins une fréquence de résonance d'au moins l'un des tubes de mesure et/ou translationnelle ; et/ou
- pour lequel le circuit de mesure corrige la variation de l'au moins une grandeur caractéristique des signaux de mesure de vibration fournis par le transducteur, basée sur la déformation du capteur, notamment une dilatation d'un ou de plusieurs tubes de mesure, laquelle déformation est mesurée par l'agencement de mesure de déformation, notamment due à un phénomène thermique et/ou provoquée par des forces agissant de l'extérieur sur le capteur et/ou influençant un comportement de vibration des tubes de mesure et/ou provoquant une modification d'au moins une fréquence de résonance d'au moins l'un des tubes de mesure et/ou translationnelle, laquelle variation résulte du changement de l'état de tension dans le capteur ou de l'écart de l'état de tension momentané dans le capteur par rapport à l'état de tension de référence prédéfini à cette fin.

12. Système de mesure selon l'une des revendications précédentes, comprenant en outre un agencement de mesure de température (40) destiné à mesurer une température du capteur, notamment une température d'un ou de plusieurs tubes de mesure, notamment influençant un comportement de vibration des tubes de mesure et/ou provoquant une modification d'au moins une fréquence de résonance d'au moins l'un des tubes de mesure, lequel agencement est conçu au moyen d'un thermomètre à résistance fixé sur l'un des tubes de mesure et/ou au moyen d'un thermomètre à résistance fixé sur le boîtier de capteur et/ou relié électriquement avec l'électronique du transmetteur.

13. Système de mesure selon la revendication 12,
- pour lequel l'agencement de mesure de température (40) est conçu au moyen d'un thermomètre à résistance, notamment fixé sur l'un des tubes de mesure, lequel thermomètre présente une résistance ohmique dépendant d'une température du capteur, notamment d'une température d'un des tubes de mesure ; et/ou
- pour lequel le circuit de mesure détermine le changement de l'état de tension dans le capteur et/ou l'écart de l'état de tension momentané dans le capteur par rapport à l'état de tension de référence prédéfini à cette fin, sur la base d'une température du capteur, notamment une température d'un ou de plusieurs tubes de mesure, mesurée par l'agencement de mesure de température, notamment influençant un comportement de vibration des tubes de mesure et/ou provoquant une modification d'au moins une fréquence de résonance d'au moins l'un des tubes de mesure ; et/ou
- pour lequel le circuit de mesure corrige la variation de l'au moins une grandeur caractéristique des signaux de mesure de vibration fournis par le transducteur, basée sur une température du capteur, notamment une température d'un ou de plusieurs tubes de mesure, laquelle température est mesurée par l'agencement de mesure de température, notamment influençant un comportement de vibration des tubes de mesure et/ou provoquant une modification d'au moins une fréquence de résonance d'au moins l'un des tubes de mesure, laquelle variation résulte du changement de l'état de tension dans le capteur ou de l'écart de l'état de tension momentané dans le capteur par rapport à l'état de tension de référence prédéfini à cette fin.

14. Système de mesure selon l'une des revendications précédentes,
- pour lequel le premier diviseur de débit (20₁) comporte une bride (6₁) permettant de raccorder le capteur à un segment de tube de la conduite destiné à acheminer le produit au capteur, et le deuxième diviseur de débit (20₂) comporte une bride (6₂) permettant de raccorder le capteur à un segment de tube de la conduite destiné à évacuer le produit du capteur ;
- pour lequel un diamètre nominal, D₁₁, du capteur, correspondant à un calibre de la conduite, dans le tracé de laquelle le capteur doit être inséré, est supérieur à 100 mm, notamment supérieur à 300 mm ;
- pour lequel chacune des brides (6₁, 6₂) présentant respectivement une masse de plus de 50 kg, présente une surface d'étanchéité (6_{1A}, 6_{2A}) destinée à relier de façon étanche au fluide le capteur avec le segment de tube correspondant de la conduite, et pour lequel une distance entre les surfaces d'étanchéité (6_{1A}, 6_{2A}) des deux brides (6₁, 6₂) définit une longueur de montage, L₁₁, du capteur, laquelle est notamment supérieure à 1 200 mm et inférieure à 3 000 mm ;
- pour lequel une longueur de tube de mesure, L₁₈, du premier tube de mesure (18₁), correspondant à une distance minimale entre la première ouverture d'écoulement (20_{1A}) du premier diviseur de débit (20₁) et la première ouverture d'écoulement (20_{2A}) du deuxième diviseur de débit (20₂) est supérieure à 1 000 mm, notamment supérieure à 1 200 mm et/ou inférieure à 2 000 mm ; et
- pour lequel chacun des quatre tubes de mesure (18₁, 18₂, 18₃, 18₄) de même calibre et/ou de même longueur présente un calibre, D₁₈, qui est supérieur à 60 mm, notamment supérieur à 80 mm ; et
- pour lequel le boîtier de capteur (7₁) est conçu pour l'essentiel de manière tubulaire, notamment cylindrique circulaire, et présente un diamètre intérieur de boîtier maximal, D₇, qui est supérieur à 150 mm, notamment supérieur à 250 mm.

15. Système de mesure selon la revendication 14,
- pour lequel un rapport entre le boîtier et le diamètre intérieur de tube de mesure, D₇/D₁₈, du capteur, défini par un rapport entre le diamètre intérieur de boîtier maximal, D₇, et un calibre, D₁₈, du premier tube de mesure est supérieur à 3, notamment supérieur à 4 et/ou inférieur à 5 ; et/ou
- pour lequel un rapport entre le diamètre intérieur de boîtier et le diamètre nominal, D₇/D₁₁, du capteur, défini par un rapport entre le diamètre intérieur de boîtier maximal, D₇, et le diamètre nominal, D₁₁, du capteur est inférieur à 1,5, notamment inférieur à 1,2 et/ou supérieur à 0,9, notamment de telle sorte que le rapport entre le diamètre intérieur de boîtier et le diamètre nominal, D₇/D₁₁, du capteur soit égal à un ; et/ou
- pour lequel un rapport entre la longueur de tube de mesure et la longueur de montage, L₁₈/L₁₁, du capteur, défini par un rapport entre la longueur de tube de mesure, L₁₈, du premier tube de mesure et la longueur de montage, L₁₁, du capteur, est supérieur à 0,7, notamment supérieur à 0,8 et/ou inférieur à 0,95 ; et/ou
- pour lequel un rapport entre le calibre et la longueur de montage, D₁₈/L₁₁, du capteur, défini par un rapport entre le calibre, D₁₈, du premier tube de mesure et la longueur de montage, L₁₁, du capteur, est supérieur à 0,02, notamment supérieur à 0,05 et/ou inférieur à 0,09 ; et/ou
- pour lequel un rapport entre le diamètre nominal et la longueur de montage, D₁₁/L₁₁, du capteur, défini par un rapport entre le diamètre nominal du capteur et la longueur de montage du capteur, est inférieur à 0,3, notamment inférieur à 0,2 et/ou supérieur à 0,1.

16. Système de mesure selon l'une des revendications 14 à 15, comprenant en outre
- un premier élément de couplage (24₁) de premier type, notamment en forme de plaque, qui est fixé côté entrée au moins sur le premier tube de mesure et sur le deuxième tube de mesure pour la constitution de noeuds de vibration côté entrée au moins pour les vibrations, notamment les vibrations de flexion, du deuxième tube de mesure, lequel élément de couplage est espacé à la fois du premier diviseur de débit et du deuxième diviseur de débit, notamment de telle sorte que tous les quatre tubes de mesure (18₁, 18₂, 18₃, 18₄) sont reliés mécaniquement entre eux au moyen du premier élément de couplage (24₁) de premier type, ainsi que ;
- un deuxième élément de couplage (24₂) de premier type, notamment en forme de plaque et/ou de conception identique au premier élément de couplage (24₁) et/ou parallèle au premier élément de couplage (24₁), lequel deuxième élément de couplage est fixé côté sortie au moins sur le premier tube de mesure et sur le deuxième tube de mesure pour la constitution de noeuds de vibration côté sortie au moins pour les vibrations, notamment les vibrations de flexion, du premier tube de mesure et pour les vibrations diamétralement opposées, notamment les vibrations de flexion, du deuxième tube de mesure, lequel deuxième élément de couplage est espacé à la fois du premier diviseur de débit et du deuxième diviseur de débit, ainsi que du premier élément de couplage, notamment de telle sorte que tous les quatre tubes de mesure (18₁, 18₂, 18₃, 18₄) sont reliés mécaniquement entre eux au moyen du deuxième de couplage (24₂) de premier type ;
- pour lequel une longueur de vibration libre, L₁₈ₓ, du premier tube de mesure, notamment de chaque tube de mesure, correspondant à une distance minimale entre le premier élément de couplage de premier type et le deuxième élément de couplage de premier type, est inférieure à 2 500 mm, notamment inférieure à 2 000 mm et/ou supérieure à 800 mm.

17. Système de mesure selon la revendication 16,
- pour lequel un rapport entre la longueur de vibration et la longueur de montage, L₁₈ₓ/L₁₁, du capteur, défini par un rapport entre la longueur de vibration libre, L₁₈ₓ, du premier tube de mesure et la longueur de montage, L₁₁, du capteur, est supérieur à 0,55, notamment supérieur à 0,6 et/ou inférieur à 0,9 ; et/ou
- pour lequel un rapport entre le calibre et la longueur de vibration, D₁₈/L₁₈ₓ, du capteur, défini par un rapport entre le calibre, D₁₈, du premier tube de mesure (18₁) et la longueur de vibration libre, L₁₈ₓ, du premier tube de mesure (18₁) est supérieur à 0,07, notamment supérieur à 0,09 et/ou inférieur à 0,15.

18. Système de mesure selon l'une des revendications 14 à 17, pour lequel l'agencement de capteurs de vibration (19) est constitué au moyen d'un premier capteur de vibration (19₁) côté entrée, notamment électrodynamique et/ou mesurant de façon différentielle les vibrations du premier tube de mesure (18₁) par rapport au deuxième tube de mesure (18₂), ainsi qu'au moyen d'un deuxième capteur de vibration (19₂) côté sortie, notamment électrodynamique et/ou mesurant de façon différentielle les vibrations du premier tube de mesure (18₁) par rapport au deuxième tube de mesure (18₂).

19. Système de mesure selon la revendication 18,
- pour lequel une longueur de mesure, L₁₉, du capteur, correspondant à une distance minimale entre le premier capteur de vibration (19₁) et le deuxième capteur de vibration (19₂) est supérieure à 500 mm, notamment supérieure à 600 mm et/ou inférieure à 1 200 mm ; et/ou
- pour lequel un rapport entre la longueur de mesure et la longueur de montage, L₁₉/L₁₁, du capteur, défini par un rapport entre la longueur de mesure, L₁₉, et la longueur de montage, L₁₁, du capteur, est supérieur à 0,3, notamment supérieur à 0,4 et/ou inférieur à 0,7 ; et/ou
- pour lequel un rapport entre le calibre et la longueur de mesure, D₁₈/L₁₉, du capteur, défini par un rapport entre le calibre, D₁₈, et la longueur de mesure, L₁₉, du capteur, est supérieur à 0,05, notamment supérieur à 0,09 ; et/ou
- pour lequel un rapport entre la longueur de mesure et la longueur de vibration, L₁₉/L₁₈ₓ, du capteur, défini par un rapport entre la longueur de mesure, L₁₉, et la longueur de vibration libre, L₁₈ₓ, du premier tube de mesure, est supérieur à 0,6, notamment supérieur à 0,65 et/ou inférieur à 0,95 ; et/ou
- pour lequel l'agencement de capteurs de vibration (19) est constitué au moyen d'un troisième capteur de vibration (19₃) côté entrée, notamment électrodynamique et/ou mesurant de façon différentielle les vibrations du troisième tube de mesure (18₃) par rapport au quatrième tube de mesure (18₄), ainsi qu'au moyen d'un quatrième capteur de vibration (19₄) côté sortie, notamment électrodynamique et/ou mesurant de façon différentielle les vibrations du troisième tube de mesure (18₃) par rapport au quatrième tube de mesure (18₄).

20. Système de mesure selon l'une des revendications précédentes,
- pour lequel un rapport de masse, M₁₁, M₁₈, d'une masse vide, M₁₁, du capteur complet par rapport à une masse vide, M₁₈, du premier tube de mesure est supérieur à 10, notamment supérieur à 15 et inférieur à 25 ;
et/ou
- pour lequel chacun des deux diviseurs de débit (20₁, 20₂) présente respectivement une masse de plus de 20 kg, notamment de plus de 40 kg ; et/ou
- pour lequel une masse vide, M₁₈, du premier tube de mesure, notamment de chacun des tubes de mesure (18₁, 18₂, 18₃, 18₄) est supérieure à 20 kg, notamment supérieure à 30 kg et/ou inférieure à 50 kg ; et/ou
- pour lequel le premier et le deuxième tube de mesure (18₁, 18₂) sont constitués, au moins concernant un matériau, de celui de leur parois de tube, et/ou concernant leur dimensions de tube géométriques, notamment une longueur de tube, une épaisseur de paroi de tube, un diamètre extérieur de tube et/ou un calibre, sont de conception identique ; et/ou
- pour lequel le troisième et le quatrième tube de mesure (18₃, 18₄) sont constitués, au moins concernant un matériau, de celui de leur parois de tube, et/ou concernant leur dimensions de tube géométriques, notamment une longueur de tube, une épaisseur de paroi de tube, un diamètre extérieur de tube et/ou un calibre, sont de conception identique ; et/ou
- pour lequel un matériau avec lequel sont constituées au moins partiellement les parois de tube des quatre tubes de mesure (18₁, 18₂, 18₃, 18₄), est du titane et/ou du zirconium et/ou un acier duplex et/ou un acier superduplex; et/ou
- pour lequel le boîtier de capteur (7₁), les diviseurs de débit (20₁, 20₂) et les parois des tubes de mesure (18₁, 18₂, 18₃, 18₄) sont respectivement constitués d'acier, notamment inoxydable ; et/ou
- pour lequel les quatre ouvertures d'écoulement (20_{1A}, 20_{1B}, 20_{1C}, 20_{1D}) du premier diviseur de débit (20₁) sont disposées de telle sorte que des centres de gravité de surface imaginaires correspondant à des surfaces de section, notamment circulaires, des ouvertures d'écoulement (20_{1A}, 20_{1B}, 20_{1C}, 20_{1D}) du premier diviseur de débit (20₁), forment les sommets d'un carré imaginaire, ces mêmes surfaces de section se trouvant dans un plan de coupe imaginaire commun du premier diviseur de débit (20₁), lequel plan est perpendiculaire à un axe longitudinal du capteur, notamment à un axe d'écoulement principal du capteur ; et/ou
- pour lequel les quatre ouvertures d'écoulement (20_{1A}, 20_{1B}, 20_{1C}, 20_{1D}) du deuxième diviseur de débit (20₂) sont disposées de telle sorte que des centres de gravité de surface imaginaires correspondant à des surfaces de section, notamment circulaires, des ouvertures d'écoulement (20_{1A}, 20_{1B}, 20_{1C}, 20_{1D}) du deuxième diviseur de débit (20₂), forment les sommets d'un carré imaginaire, ces mêmes surfaces de section se trouvant dans un plan de coupe imaginaire commun du deuxième diviseur de débit (20₂), lequel plan est perpendiculaire à un axe longitudinal du capteur, notamment à un axe d'écoulement principal du capteur ; et/ou
- pour lequel un segment médian (7_{1A}) du boîtier de capteur (7₁) est constitué au moyen d'un tube droit, notamment cylindrique circulaire ; et/ou
- pour lequel une masse vide, M₁₁, du capteur est supérieure à 200 kg, notamment supérieure à 300 kg ; et/ou
- pour lequel les quatre tubes de mesure (18₁, 18₂, 18₃, 18₄) sont, concernant un matériau avec lequel sont constitués leurs parois, et/ou concernant leurs dimensions géométriques, notamment une longueur de tube, une épaisseur de paroi de tube, un diamètre extérieur de tube et/ou un calibre, de conception identique.

21. Utilisation d'un système de mesure selon l'une des revendications précédentes, destiné à mesurer une densité, notamment également un débit massique et/ou un débit massique total, totalisé sur un intervalle de temps, d'un produit s'écoulant au moins partiellement dans une conduite avec un débit massique supérieur à 2 200 t/h, notamment supérieur à 2 500 t/h, notamment un gaz, un liquide, une poudre ou une autre substance apte à s'écouler.
